(19) **Europäisches Patentamt / European Patent Office / Office européen des brevets**

(11) **EP 3 610 569 B1**

(12) # EUROPÄISCHE PATENTSCHRIFT

(45) Veröffentlichungstag und Bekanntmachung des Hinweises auf die Patenterteilung:
**25.12.2024 Patentblatt 2024/52**

(21) Anmeldenummer: **18718422.1**

(22) Anmeldetag: **13.04.2018**

(51) Internationale Patentklassifikation (IPC):
**H02M 7/487** $^{(2007.01)}$  **H02M 7/483** $^{(2007.01)}$

(52) Gemeinsame Patentklassifikation (CPC):
**H02M 7/483; H02M 7/4835; H02M 7/487; H02M 1/0095; Y02T 10/70**

(86) Internationale Anmeldenummer:
**PCT/EP2018/059572**

(87) Internationale Veröffentlichungsnummer:
**WO 2018/189389 (18.10.2018 Gazette 2018/42)**

(54) **STROMRICHTER FÜR ENERGIEÜBERTRAGUNG**

CONVERTER FOR ENERGY TRANSMISSION

CONVERTISSEUR DE COURANT POUR LA TRANSMISSION D'ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.04.2017 DE 102017108099**

(43) Veröffentlichungstag der Anmeldung:
**19.02.2020 Patentblatt 2020/08**

(73) Patentinhaber: **Universität der Bundeswehr München**
**85579 Neubiberg (DE)**

(72) Erfinder:
• **WEYH, Thomas**
**85577 Neubiberg (DE)**
• **ECKERLE, Richard**
**85577 Neubiberg (DE)**
• **HELLING, Florian**
**81539 München (DE)**
• **KNAUER, Reinhard**
**80802 München (DE)**

(74) Vertreter: **Grünecker Patent- und Rechtsanwälte PartG mbB**
**Leopoldstraße 4**
**80802 München (DE)**

(56) Entgegenhaltungen:
**WO-A1-02/063758       WO-A1-2007/028350**
**WO-A1-2013/075928     US-A- 6 005 788**
**US-A1- 2008 144 342   US-A1- 2011 273 916**
**US-A1- 2015 318 790**

• **RODRIGUEZ J ET AL: "Multilevel Voltage-Source-Converter Topologies for Industrial Medium-Voltage Drives", IEEE TRANSACTIONS ON INDUSTRIAL ELECTRONICS, IEEE SERVICE CENTER, PISCATAWAY, NJ, USA, vol. 54, no. 6, 1 December 2007 (2007-12-01), pages 2930 - 2945, XP011194602, ISSN: 0278-0046, DOI: 10.1109/ TIE.2007.907044**
• **DU ZHONG ET AL: "Hybrid cascaded H-bridges multilevel motor drive control for electric vehicles", PROCEEDINGS OF THE ANNUAL POWER ELECTRONICS SPECIALISTS CONFERENCE. (PESC). BLACKSBURG, JUNE 22 - 26, 1987., 1 June 2006 (2006-06-01), US, pages 1 - 6, XP055917734, ISSN: 0275-9306, ISBN: 978-9-9963-2327-0, DOI: 10.1109/ pesc.2006.1712097**

- **KAMRAN SHARIFABADI ET AL: "Modulation and Submodule Energy Balancing", DESIGN, CONTROL, AND APPLICATION OF MODULAR MULTILEVEL CONVERTERS FOR HVDC TRANSMISSION SYSTEMS, 17 October 2016 (2016-10-17), XP055614433, ISBN: 978-1-118-85154-8, Retrieved from the Internet <URL:https://ebookcentral.proquest. com/lib/epo-ebooks/reader.action? docID=4653366&ppg=260> [retrieved on 20190821], DOI: 10.1002/9781118851555.ch5**

**Beschreibung**

Die Erfindung betrifft einen verbesserten Stromrichter, sowie ein entsprechendes Verfahren und betrifft insbesondere Stromrichter für bidirektionale Energieübertragung und mit der Möglichkeit die Ausgangsspannung stufenweise zu verändern.

Stromrichter dienen zur Umwandlung einer eingespeisten elektrischen Stromart (Gleichstrom, Wechselstrom) in die jeweils andere, oder zur Änderung charakteristischer Parameter wie der Spannung oder der Frequenz. Oft werden beide Prinzipien in Kombination angewendet.

Stromrichter kommen in den unterschiedlichsten Bereichen zur Anwendung. Insbesondere werden sie zur Ansteuerung elektrischer Maschinen, insbesondere auch für die Ansteuerung von Elektromotoren in Fahrzeugen verwendet. Ein weiterer Anwendungsbereich stellt die Energieversorgung/Stromversorgung in Stromnetzen, Bordnetzen oder allgemein in Energieversorgungsnetzen dar. Entsprechend gibt es unterschiedliche Arten von Stromrichtern. Zum einen die DC-to-DC Converter (DC-DC-Wandler), welche als Gleichspannungswandler eine erste Gleichspannung in eine zweite Gleichspannung umwandeln, die höher, niedriger oder invertiert sein kann. Zum anderen gibt es sogenannte AC-DC Converter, die Wechselstrom in Gleichstrom (Gleichrichter) oder Gleich- in Wechselstrom umwandeln (Wechselrichter). Durch die Zusammenschaltung zweier AC-DC Converter über die Gleichstromseite können hierdurch auch AC-AC Converter aufgebaut werden.

Moderne Stromrichter verwenden elektronische Bauelemente auf Basis von Halbleitern, wie Transistoren, Dioden und Thyristoren. Eine wichtige Grundschaltung stellen Zweiquadranten-Steller und Vierquadranten-Steller dar. Letztere gestatten, dass an einem Klemmenpaar sowohl negative als auch positive Spannungen unabhängig von der Stromrichtung verarbeitet werden können. Anwendungsfälle hierfür umfassen die gesteuerte Versorgung eines Elektromotors mit elektrischer Energie und die Rückwandlung mechanischer Energie in elektrische Energie während der Bremsphase (Rekuperation).

Die fortwährende Entwicklung der vor etwa 35 Jahren eingeführten Halbleitertechnik in die Leistungselektronik ermöglicht und unterstützt die Realisierung solcher Stromrichter für immer höhere Leistungs- und Spannungsbereiche. Heute werden z.B. im Mittelspannungsbereich zum Schalten von elektrischen Strömen und Spannungen überwiegend IGBTs und IGCTs verwendet. Durch die ständige Weiterentwicklung der Halbleiter und deren Fertigungsprozesse hat die Zuverlässigkeit und Leistungsdichte dieser Bauelemente signifikant zugenommen.

Der Entwicklungsfortschritt von Halbleitern begünstigt auch die Entwicklung neuartiger Stromrichtertopologien. HGÜ-Anlagen (Hochspannungs-Gleichstrom-Übertragung) im Hochspannungsbereich (bis mehrere GVA), werden großteils immer noch mit Thyristorschaltungen realisiert. Diese arbeiten nach dem Prinzip der Phasenanschnittsteuerung und können je nach Zündwinkel unterschiedliche Spannungspegel erzeugen bzw. verarbeiten. Dabei sind allerdings aufwändige Filterkreise nötig, um den hohen Oberwellenanteil auszufiltern. Neuerdings sind Mehrpunktstromrichter mit wesentlich verbesserten Eigenschaften zur Energieübertragung, Spannungs- bzw. Frequenzwandlung und Blindleistungs-Kompensation in den Mittelpunkt des Interesses gerückt.

Insbesondere in Anwendungsgebieten im Energieversorgungsbereich bei großen Leistungen sind die mit dem Stromrichter zu schaltenden Spannungen erheblich höher als die Sperrspannungen verfügbarer Leistungshalbleiter. Daher werden in solchen Einsatzgebieten Schaltungstopologien eingesetzt, welche eine gleichmäßige Aufteilung der hohen Eingangsspannung auf mehrere Schaltglieder/Leistungshalbleiter ermöglichen, beispielsweise durch Serienschaltung.

Viele Nachteile konventioneller Stromrichter für große Leistungen können durch sogenannte modulare Multilevelconverter gelöst werden, siehe beispielsweise DE 102 17 889 A1. Dieses System ist in der Lage nahezu beliebige Spannungsverläufe zwischen den Klemmenpaaren der einen Seite in ebenso beliebige Verläufe zwischen den Klemmenpaaren der anderen Seite umzusetzen, wobei auf Grund einer Bidirektionalität nicht zwischen Ein- und Ausgang unterschieden werden muss. Die für jede Phase zuständige Elektronik des Stromrichters ist aus einer Vielzahl von in Serie geschalteten identischen Einzelmodulen aufgebaut.

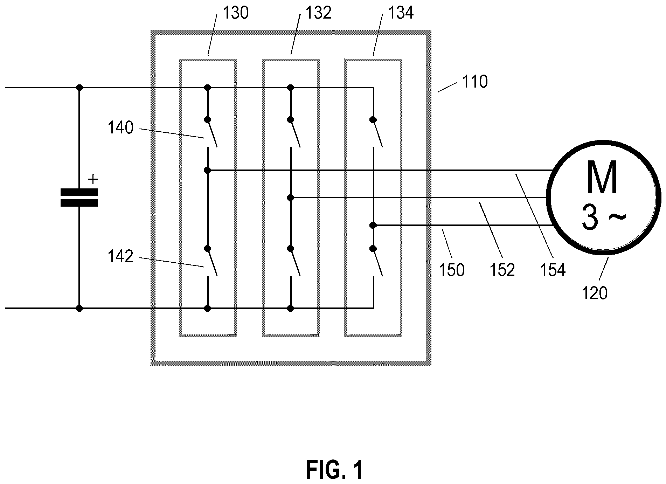

Figur 1 zeigt eine schematische Ansicht eines dreiphasigen Zweipunktstromrichters 110 für einen Elektromotor 120, wie er beispielsweise in Elektrofahrzeugen zum Einsatz kommt. Der Zweipunktstromrichter wird gebildet durch drei parallel geschaltete Phasenmodule oder Halbbrücken 130, 132, 134 gebildet. Jedes Phasenmodul besteht aus zwei in Serie geschalteten Schaltern 140, 142. An den Verbindungspunkten dieser Schalter befindet sich jeweils ein Anschluss für jede Phase 150, 152, 154. Das Eingangsklemmenpaar des Zweipunktstromrichters wird gespeist durch eine schematisch angedeutete Gleichstrom-Energiequelle 160.

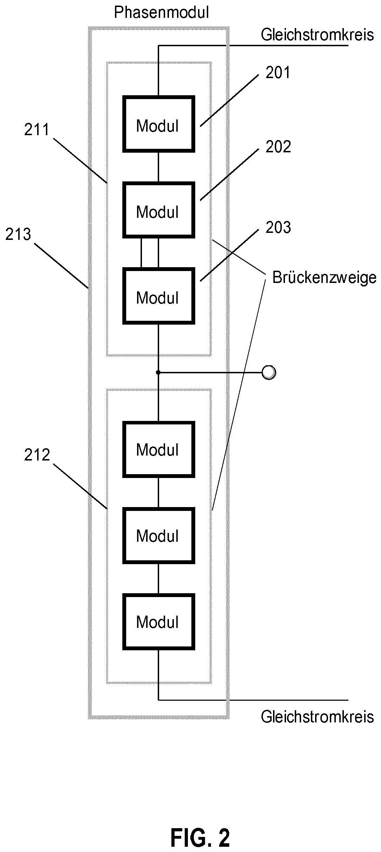

Figur 2 zeigt entsprechende Serienschaltungen von identischen Modulen, wobei die drei oberen Module 201, 102, 203, zusammen einen so genannten Brückenzweig 211 bilden. Eine Kombination zweier Brückenzweige 211, 212 (bestehend aus einer beliebigen Anzahl von Modulen) wird dabei als Phasenmodul 213 bezeichnet. Dieses Phasenmodul ist typischerweise mit den Anschlüssen eines Gleichstromsystems bzw. eines Gleichstromzwischenkreises verbunden. Die Anzahl der Module in jedem Brückenzweig definiert Spannungs- und Oberwelleneigenschaften des Stromrichters. Die Verbindungspunkte der beiden Brückenzweige jedes Phasenmoduls bilden jeweils einen Wechselstromanschluss eines Stromrichters.

Jedes Einzelmodul kann elektrisch als ein Zweipol betrachtet werden und enthält ein Energiespeicherelement sowie mehrere Schaltelemente, die für eine oder für beide Spannungsrichtungen wahlweise Strom aufnehmen oder abgeben können. Die Module können entweder nur eine Polarität der Spannung bei zwei möglichen Stromrichtungen schalten und werden dann als Zweiquadranten-Module bezeichnet; oder sie können alle vier Quadranten des Strom-Spannungs-Graphen erreichen und werden dann als Vierquadranten-Module bezeichnet.

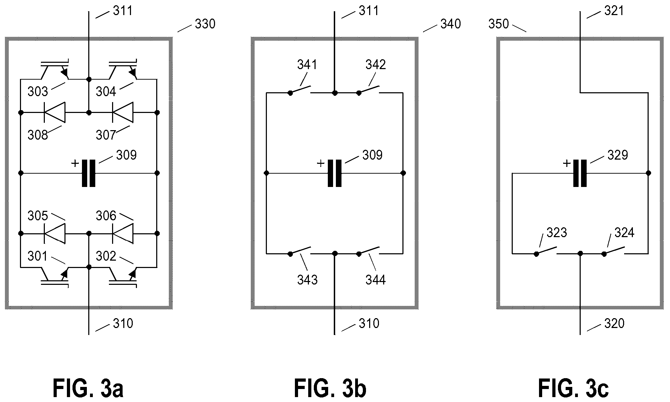

Figuren 3a - 3c zeigen eine Grundformen eines Zweipolmoduls. Die dargestellten drei Vierquadranten-Module können in ähnlicher Weise auch für die vorliegende Erfindung eingesetzt werden. Ein Vierquadranten-Modul 330 gemäß Figur 3a benötigt mindestens 4 Schalttransistoren 301 - 304. Eine solche Schaltung wird auch als Voll- oder H-Brücke bezeichnet. Je zwei der in Serie geschalteten Transistoren 301 und 302 bzw. 303 und 304 bilden eine sogenannte Halbbrücke. Parallel zu diesen Transistoren ist jeweils eine Diode 305 - 308 geschaltet, die auch jeweils die integrierte Body-Diode des jeweiligen Transistors sein kann. Im Prinzip kann für die schaltenden Elemente jede Art von steuerbarem Schalter verwendet werden. Entsprechend kann die Vollbrücke 340 allgemein durch vier Schalteinrichtungen 341 - 344 dargestellt werden, wie in Figur 3b gezeigt. Die Transistoren bzw. Schalter können die Ausgangsklemmen 310 und 311 mit dem Kondensator 309 elektrisch verbinden.

Erläutert anhand der in Figur 3a können grundsätzlich vier Zustände geschaltet werden:

- Vorgabe einer positiven Klemmenspannung in Bezug auf die beiden Klemmen 310 und 311 bei beliebiger Stromrichtung; erreichbar über das gleichzeitige Schalten der Transistorschalter 301 und 304;

- Vorgabe einer negativen Klemmenspannung in Bezug auf die beiden Klemmen 310 und 311 bei beliebiger Stromrichtung; erreichbar über das gleichzeitige Schalten der Transistorschalter 302 und 303;

- Bypasszustand (d. h. keine Energieaufnahme oder-abgabe durch das Einzelmodul), freier Stromfluss in beliebiger Richtung; erreichbar über das gleichzeitige Schalten der Transistorschalter 301 und 303 oder der Transistorschalter 302 und 304;

- Erzwingen einer Energieaufnahme durch das Einzelmodul unter Aufzwingen des Spannungsniveaus; wenn beispielsweise alle Transistorschalter gesperrt sind und der Betrag der von außen angelegten Klemmenspannung die Spannung des Kondensators 309 überschreitet.

Alternativ können die Module als Zweiquadranten-Module 350 ausgeführt sein, wie in Figur 3c gezeigt. In diesem Fall wird nur eine Halbbrücke bestehend aus zwei in Serie liegenden Schaltern 323 und 324 verwendet. Hierdurch können die beiden Ausgangsklemmen 320 und 321 so geschaltet werden, dass entweder eine positive Spannung an den Ausgangsklemmen anliegt oder diese in den Bypasszustand geschaltet werden. Eine Kette von Modulen kann dann entsprechend der einzelnen gewählten Schaltzustände der Module und Veränderung dieser über die Zeit entsprechend einer Treppenfunktion nahezu beliebige Spannungsverläufe abbilden, beispielsweise eine Sinuskurve.

Die Module des Modularen Multilevelconverters können je nach Anwendung für n Quellen und m Ausgänge (beispielsweise m=3 für ein Dreiphasenniederspannungssystem) verschaltet werden.

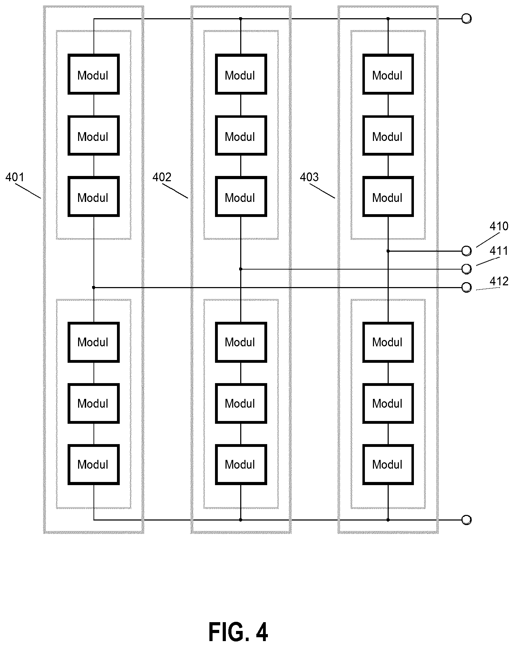

Die Phasenmodule bilden die Grundbausteine eines ein oder mehrphasigen Stromrichters. So kann beispielsweise durch drei zusammengeschaltete Phasenmodule 401, 402 und 403 gemäß Figur 4 ein System zur Umwandlung einer Gleichspannung in eine 3-phasige Wechselspannung verwendet werden, wobei die Verbindungspunkte von jeweils zwei Brückenzweigen einen Anschluss 410, 411 und 412 für die drei Phasen des Drehstromsystems bilden.

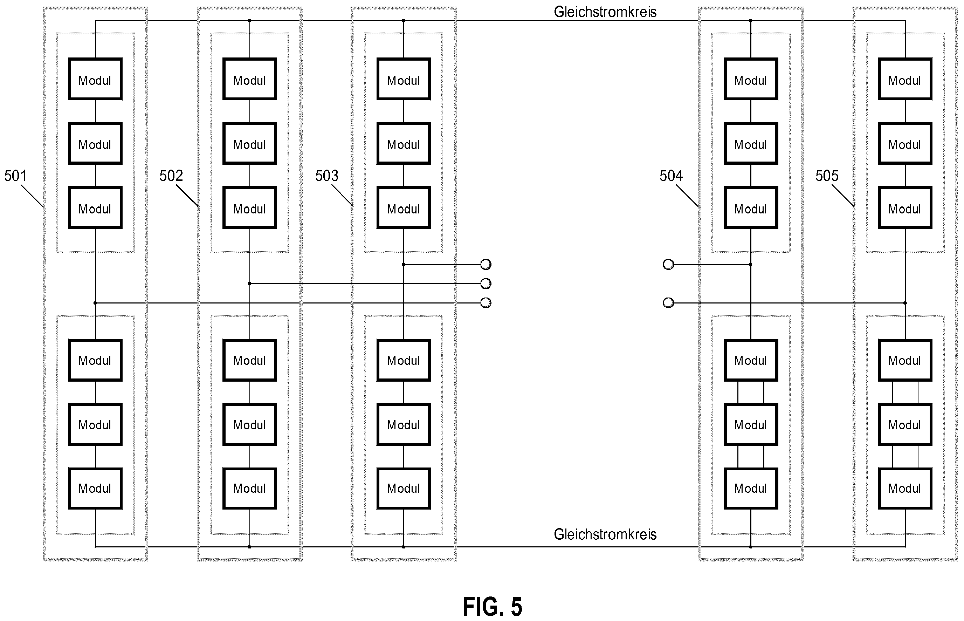

In Figur 5 zeigt beispielhaft die Zusammenschaltung von 5 Phasenmodulen 501 bis 505, um eine Kopplung eines 3-phasigen Drehstromnetzes mit einem zweiphasigen Netz zu realisieren. Ein derartiges System kann beispielsweise dazu verwendet werden, ein Energienetz mit 50 Hz Wechselspannung in ein Energienetz mit 60 Hz Wechselspannung überzuführen. Hierzu würde man die drei Phasen des 50 Hz Systems über die drei Anschlüsse mit dem linken Teil der in Figur 5 gezeigten Schaltung verbinden, die hieraus eine Gleichspannung bildet, die dann über die gemeinsamen Anschlüsse dem rechten Teil der Schaltung zugeführt wird, welche hieraus eine zweiphasige Wechselspannung mit 50 Hz erzeugt. Bei dem Phasenmodul nach Figur 2, bestehend aus 2 Brückenzweigen zu je 3 Modulen kann die Betriebsspannung für jedes einzelne Modul beispielsweise 1kV betragen. Im Falle von Zweiquadrantenmodulen kann damit jedes Modul an seinen Klemmen eine Spannung von 0V oder 1kV schalten. Im Gleichstromkreis sollte daher eine Spannung von 3 kV anliegen. Damit sind sämtliche Modulkonfigurationen aller 6 beteiligten Module zugelassen, deren gesamte Serienschaltung insgesamt eine Spannung von 3 kV ergibt. Gegenüber einer fiktiven Mittelanzapfung des Gleichstromkreises würde der Ausgang des Phasenmoduls von Figur 2 damit die Zustände -1,5kV, -0,5kV, +0,5kV, 1,5kV annehmen können. Bei Einsatz von Vierquadranten-Modulen würde gemäß obigem Beispiel jedes Modul an seinen Klemmen eine Spannung von -1kV, 0kV oder 1kV schalten können. Damit kann ein solches Phasenmodul auch Spannungen ausgeben die größer sind, als die positive Spannung des Gleichstromkreises bzw. deren negative Spannung unter die negative Spannung des Gleichstromkreises hinausreichen kann. Entsprechend kann mit einer niedrigeren Spannung im Gleichstromkreis gearbeitet werden. Allgemein ausgedrückt können bei einer Anzahl z an Modulen pro Brückenzweig, über jedes Phasenmodul 2z+1 verschiedene stabile Spannungszustände erzeugt werden.

Die beschriebenen Modularen Multilevelconverter werden in der Regel für hohe Leistungen eingesetzt, beispielsweise in Energienetzen ähnlich dem in Bezug auf Figur 5 beschriebenen Beispiel.

Im Gegensatz dazu werden kleinere elektrische Leistungen (bis einige 100kVA) mit pulsweitenmodulierten Stromrichtern (PWM-Stromrichtern) umgewandelt, bei denen die mittleren Spannungen und Ströme durch ein geeignetes Tastverhältnis (statt der Treppenfunktion des Multilevelconverters) der geschalteten Größen erzielt werden. Die Spannung wird dabei entweder zwischen "+" und "-" oder jeweils zwischen "+" und "0" bzw. "-" und "0" des Gleichspannungskreises geschaltet. Man spricht entsprechend von Zweipunkt-oder Dreipunkt-Stromrichtern, da diese zwischen zwei oder drei Spannungspegeln hin- und herschalten. Eine Sinuskurve wird beispielsweise dadurch gebildet, in dem das Tastverhältnis ausgehend von 0 stetig ansteigt, um im Bereich des Maximums der Sinuskurve das maximale Tastverhältnis zu zeigen. Von dort nimmt das Tastverhältnis wieder ab und erreicht beim Nulldurchgang den Wert 0 und beim maximalen negativen Wert des Sinus das maximale Tastverhältnis mit negativer Spannung (Dreipunkt-Stromrichter), bzw. erreicht den Wert 0 beim maximal negativen Wert des Sinus (Zweipunkt-Stromrichter). Diese Art von Stromrichtern erzeugt allerdings - ähnlich wie Thyristor-basierte Stromrichter - durch die hochfrequenten Schaltvorgänge und stets gleichbleibend hohe Amplitude der Pulse ein sehr hohes Maß an Oberschwingungen, was eine aufwändige Filterung der Ein- und Ausgänge erforderlich macht. Beispielsweise wird typischerweise eine Schaltfrequenz von 50 kHz benötigt, um einen Sinusverlauf von 50 Hz nachzubilden. Bei sehr hohen Spannungen (und damit auch hohen Leistungen) stehen hinsichtlich der Bauteile einerseits nicht die notwendigen Spannungsfestigkeiten zur Verfügung; andererseits steigen auch die Schaltverluste und der Filteraufwand stark an.

Herkömmliche Modulare Multilevelconverter (MMC) bieten in dieser Beziehung große Vorteile, weisen jedoch für kleinere und mittlere Leistungen (z.B. 100 VA bis 1 MVA) folgende Nachteile auf:

- Um einen hinreichend fein gestuften Spannungsverlauf zu erzeugen ist bei MMCs eine große Anzahl von Modulen notwendig (für z.B. insgesamt 50 Spannungsstufen sind 100 Module pro Phase notwendig).

- Diese große Anzahl von Modulen ist unabhängig von der geschalteten Leistung und somit fallen hohe Kosten auch dort an, wo nur geringe Leistungen geschaltet werden. Für viele Anwendungen sind damit die Kosten zu hoch.

- Da jedes Modul beim MMC einzeln anzusteuern und zu versorgen ist, ist der hierfür erforderliche Elektronikaufwand insbesondere bei kleinen Leistungen überproportional, wodurch solche Anlagen sehr teuer werden.

- bei kleinen Frequenzen des zugehörigen Wechselstromsystems sind hohe Kapazitäten für die Modulkondensatoren erforderlich, um die Spannungsstufen entsprechend lange halten zu können. Während dies bei Netz-Stromrichtern keinen besonderen Nachteil darstellt, macht sich diese Eigenschaft im Bereich Motor-Stromrichter, beispielsweise solchen, die in Elektrofahrzeugen eingesetzt werden, besonders nachteilig bemerkbar. Die Dimensionierung müsste die niedrige Frequenz vom regelmäßig wiederkehrenden Motoranlauf berücksichtigen.

Aus der WO2007/028350 A1 ist ein Stromrichter bekannt, der Phasenelemente aufweist, welche jeweils über wenigstens eine Reihenschaltung von Schaltelementen verfügen, die jeweils mindestens zwei abschaltbare Leistungshalbleiter und mindestens zwei jeweils dazu parallel geschaltete Freilaufdioden und Energiespeichermittel umfassen.

Aus der US6005788 A ist ein mehrstufiger Stromrichter bekannt, der mehrere Gleichspannungsquellen enthält, die unterschiedliche Gleichspannungsquellen-Spannungspegel bereitstellen. Der mehrstufige elektrische Stromrichter umfasst zudem Wechselrichter-Schaltvorrichtungen, die mit den Gleichspannungsquellen verbunden sind, sowie Steuermittel zum Steuern der Wechselrichter-Schaltvorrichtungen.

Aus WO02/063758 A1 sind Multilevel-Konverterschaltungen bekannt, bei denen jedes Modul eine Spannungsquelle aufweist und diese Spannungsquellen zueinander gemäß Zweierpotenzen abgestuft sind.

In Rodriguez J et al: "Multilevel Voltage-Source-Converter Topologies for Industrial Medium-Voltage Drives" wird ein Überblick über verfügbare Multilevel-Konverterarten gegeben, wobei insbesondere redundante Modulkonfigurationen und eine Spannungsabstufung nach Zweierpotenzen vorgeschlagen wird.

Du Z et al: "A Cascade Multilevel Inverter Using a Single DC Power Source" schlägt einen Multilevel-Converter vor, bei dem ein Hautmodul mit konstanter Spannung gespeist wird und weitere Module über Energiespeichereinrichtungen versorgt werden. Die Spannungsabstufung der einzelnen Module zueinander erfolgt gemäß Zweierpotenzen und die Module können ihren Spannungsbeitrag direkt und invertiert in den Spannungspfad einbringen oder überbrückt werden. Dadurch können bestimmte Ausgangsspannungsstufen mit unterschiedlichen Modulkonfigurationen erreicht werden.

## ÜBERSICHT ÜBER DIE ERFINDUNG

Es ist Aufgabe der vorliegenden Erfindung, einen verbesserten modularen Stromrichter zur Ausgabe unterschiedlicher Spannungslevels sowie ein Verfahren zum Betreiben eines derartigen Stromrichters bereitzustellen.

Die Aufgabe wird durch die Gegenstände der unabhängigen Patentansprüche gelöst.

Bevorzugte Ausführungsformen der vorliegenden Erfindung sind Gegenstand der Unteransprüche.

Gemäß einem ersten Aspekt betrifft die Erfindung einen modularen Stromrichter, welcher aus mindestens einem aktiv zu versorgenden Hauptmodul und einer beliebigen Anzahl von N-1 weiteren Modulen aufgebaut ist. Alle Module sind miteinander seriell verschaltet (z.B. über Modulklemmen, wobei der Begriff Modulklemme auch jede andere Art elektrischer Verbindung und insbesondere Steckverbindungen umfassen soll). Jedes Modul weist Schalteinrichtungen sowie mindestens eine Energiespeichereinrichtung auf, wodurch das einzelne Modul in der Lage ist, mit einer einstellbaren Spannung aufgeladen zu werden. Die Schalteinrichtungen, die vorzugsweise durch Transistoren realisiert werden, gestatten eine Verschaltung des Moduls gemäß eines aktiven Betriebs in Bezug auf die Serienschaltung oder gemäss eines Bypass-Betriebs, bei dem das betreffende Modul quasi überbrückt wird und somit nicht zum Spannungspfad der Serienschaltung beitragen kann. Die Ausgangsspannung des Stromrichters wird an den Endpunkten der Serienschaltung abgegriffen. Das Abgreifen erfolgt somit vorzugsweise an den entsprechen Ausgangsklemmen, wobei der Begriff Ausgangsklemmen jede Art von elektrischer Anschlussmöglichkeit umfasst. Das Hauptmodul wird von einer Gleichspannungsquelle gespeist, sodass das Hauptmodul durch diese Gleichspannungsquelle auf einem im Wesentlichen konstanten Spannungsniveau gehalten wird, welches Spannungsniveau von dem Hauptmodul im aktiven Betrieb an den Spannungspfad abgegeben werden kann. Das Hauptmodul verfügt vorzugsweise über eine Speichereinrichtung, wie beispielsweise einen Kondensator, jedoch ist diese aufgrund der Speisung mit einer Gleichspannungsquelle nicht zwingend erforderlich. Im Ergebnis kann jedes Modul mit der an seiner Speichereinrichtung vorherrschenden Spannung zur Gesamtspannung des Spannungspfads beitragen (aktiver Betrieb) oder nicht (Bypass-Betrieb). Der entsprechende Betrieb ist über die jeweiligen Schalteinrichtungen einstellbar.

Diese von den einzelnen Modulen abzugebenden Spannungsbeiträge sind zueinander unterschiedlich. Vorzugsweise sind die Spannungsbeiträge untereinander gemäß Zweierpotenzen abgestuft, jedoch sind auch andere Abstufungen, wie Dreierpotenzen oder nicht exponentielle Verhältnisse möglich. Da nur das Hauptmodul (oder die Hauptmodule), welches nicht zwingend das erste Modul der Serie sein muss, mit Gleichspannung versorgt wird, erfolgt die Aufladung der anderen Module über die serielle Verschaltung mit dem Hauptmodul. Da somit eine Vielzahl unterschiedlicher Spannungsstufen, wie beispielsweise $U_0/0$, $U_0/2$, $U_0/4$, $U_0/8$, $U_0/16$ etc., vorhanden sind, kann mit diesen Teilspannungen (im Rahmen der insgesamt erreichbaren Spannungsstufen) in jedem Zeitpunkt jede beliebige zu erzielende Ausgangsspannung entsprechend einem gewünschten Ausgangsspannungsverlauf dargestellt werden. Die Module die mit ihren Teilspannungen oder Spannungsbeiträgen für den Aufbau der gewünschten Ausgangsspannung benötigt werden, werden dafür in den aktiven Betrieb geschaltet, die nicht benötigten Module in den Bypass-Betrieb, sodass insgesamt die gewünschte Ausgangsspannung erzielt wird. Es kann somit, beispielsweise ausgehend von einer Staffelung nach Zweierpotenzen, mit einer relativ geringen Anzahl von Modulen eine große Anzahl resultierender Spannungsstufen dargestellt werden, im Beispiel entsprechend dem Binärprinzip.

Gemäß einem bevorzugten Aspekt der vorliegenden Erfindung sind die Schalteinrichtungen der Module so beschaffen, dass das Modul nicht nur seriell in den Spannungspfad sondern auch anti-seriell verschaltet werden kann, sodass zusätzlich ein invertierter Betriebszustand ermöglicht wird. Damit kann ein bestimmtes Modul mit seiner Klemmspannung invertiert auf den Spannungspfad, beispielsweise mit -Uo/4 wirken. Dieser invertierte Betrieb ermöglicht eine Vergrößerung der Kombinationsmöglichkeiten der einzelnen Spannungsbeiträge und ermöglicht es insbesondere, eine bestimmte gewünschte Ausgangsspannung durch jeweils mindestens zwei oder mehr unterschiedliche Modulkonfigurationen bzw. Modulbetriebsartverschaltungen darzustellen. Die invertierte Betriebsart eines Moduls hat den Vorteil, dass die betreffende Speichereinrichtung, vorzugsweise Kondensator, auf diese Weise während des Betriebs nachgeladen werden kann. Wenn ein Modul mit seinem Spannungsanteil zum Spannungspfad beiträgt, wird die entsprechende Speichereinrichtung aufgrund des Laststroms entladen. Im invertierten Betrieb führt der Laststrom jedoch zu einer Ladung des betreffenden Moduls, sodass sich der resultierende Spannungsbereich dieses Moduls auf diese Weise in vorbestimmten Grenzen halten lässt. Wenn der Ladezustand an einer Speichereinrichtung eines Moduls unter einen Grenzwert $W_1$ zu fallen droht, wird dieses Modul in einer nachfolgenden Phase in den invertierten Betrieb geschaltet, wodurch sich die Speichereinrichtung wieder auflädt (dabei darf es vor dieser nachfolgenden Phase vorher noch durchaus im Bypass-Betrieb geschaltet sein). Diese Aufladung erfolgt dann bis zum Grenzwert $W_2$, wobei zu diesem Zeitpunkt das Modul dann entweder wieder in einen Entladungsbetrieb, d.h. aktiven Betrieb geschaltet werden muss oder in den Bypass-Betrieb, um ein Überladen zu verhindern. Auf diese Weise kann jede Speichereinrichtung jedes Moduls in einem vorgegebenen Spannungsbereich gehalten werden. Dieser kann elektrisch gesehen unabhängig von der tatsächlichen Speicherkapazität des Moduls sein. Die Verwendung kleinerer Kapazitäten wird somit häufigere Schaltvorgänge erfordern, als bei der Verwendung größerer Kapazitäten, da eine Nachladung zu einem früheren Zeitpunkt erfolgen muss. Die Kapazitäten der einzelnen Module können gleich ausgelegt sein, obwohl die Module unterschiedliche Spannungsbeiträge liefern sollen. Sie können jedoch auch auf die ihnen zugewiesene Spannungsstufe abgestimmt sein. Dies alles ist jedoch bei der Steuerung der Betriebsartumschaltungen zu berücksichtigen. Der Spannungsbereich auf dem ein bestimmtes Modul gehalten wird, beispielsweise die Spannung Uo/4 +/- Δ wird im Wesentlichen durch das gezielte Schalten des Moduls über die Schalteinrichtungen in entweder aktiven oder Bypass-Betrieb bzw., falls vorhanden, invertierten Betrieb erreicht. Wenn jeweils mehr als eine Modulkonfiguration vorhanden ist, um eine bestimmte Ausgangsspannung darstellen zu können, so ermöglicht diese Redundanz, dass Module die nachzuladen sind, in einem der nächsten Zyklen bedarfsweise in den invertierten Betrieb gesetzt werden und insgesamt dennoch eine im wesentlichen gleichbleibende Ausgangsspannung darstellbar ist.

Gemäß einem weiteren Aspekt der Erfindung übernimmt die Steuerung der Schalteinrichtungen der Module eine Controller-Einrichtung, welche vorzugsweise alle Module gleichzeitig schaltet und welche verantwortlich ist für die Erfassung der aktuellen Ladezustände der Module und die Auswahl der geeigneten Betriebseinstellung für jedes Modul. Aufgrund des Zusammenspiels der Controller-Einrichtung mit dem Stromrichter ist es somit möglich, einen gewünschten Ausgangsspannungsverlauf über die Zeit abzubilden. Aufgrund der Möglichkeit bei diesem Aspekt der Erfindung ein bestimmtes Ausgangsspannungsniveau trotz Umschaltung von einer Modulkonfiguration auf eine andere Modulkonfigurationen auf einem gleichbleibenden Niveau zu halten (wodurch ermöglicht wird, dass Module die an eine Ladeuntergrenze kommen im nachfolgenden invertierten Betrieb wieder aufgeladen werden, ohne dass sich dadurch die Gesamtausgangsspannung ändern muss), ermöglicht nicht nur die Abbildung von sich verändernden Ausgangsspannungsverläufen, beispielsweise periodischen Verläufen, sondern auch die Darstellung von Gleichspannung im Ausgangskreis. Dieses Verhalten ist insbesondere für Anwendungen interessant, bei denen sehr langsame Stufenwechsel von einem Ausgangsniveau zum nächsten Ausgangsniveau über die Zeit stattfinden sollen und somit die Ausgangsspannung über einen gewissen Zeitraum in einer Spannungsstufe (z.B. Binärstufe) verharren soll.

Vorzugsweise werden für die Module sogenannte Vierquadrantenmodule verwendet, wobei auch andere Schaltungsarten, beispielsweise Zweiquadrantenmodule, möglich sind, insbesondere für das Hauptmodul.

Gemäß einem weiteren Aspekt ermöglicht der erfindungsgemäße Stromrichter auch eine Energieumkehrung bei dem von der Ausgangsseite Energie in die Gleichspannungsquelle, die das Hauptmodul speist, eingebracht wird. In dieser Betriebsart fließt der Laststrom zeitweise in entgegengesetzter Richtung, was dazu führt, dass sich das Vorzeichen im Bezug auf das Ladungsverhalten der Speichereinrichtungen der Module umkehrt. Beispielsweise wird dann ein Modul, das sich im invertierten Betrieb befindet, nicht mehr geladen, sondern entladen. Diese Zusammenhänge sind durch die Controller-Einrichtung, welche die Betriebszustände der Module schaltet, zu berücksichtigen.

Die Controller-Einrichtung kann zentral ausgelegt sein oder dezentral. Insbesondere ist es möglich, dass es eine zentrale Controller-Einrichtung gibt, jedes Modul aber jeweils zusätzlich über eine lokale Controller-Einrichtung verfügt, welche das Schalten der Schalteinrichtung im Modul bewirkt und den aktuellen Ladezustand der Speichereinrichtung erfasst und an die zentrale Controller-Einrichtung meldet.

Gemäß einem weiteren Aspekt wird der erfindungsgemäße Stromrichter ohne Controller-Einrichtung bereitgestellt und verfügt somit im Wesentlichen über die erwähnte Modulkette oder Modulketten. Für den späteren Betrieb kann er mit einer externen Controller-Einrichtung gekoppelt werden.

Gemäß einem weiteren Aspekt ist der erfindungsgemäße Stromrichter für mehrphasige Systeme ausgelegt und verfügt dann über mehrfache Modulketten. Beispielsweise kann der Stromrichter über drei Modulketten verfügen, wenn er zur Ansteuerung eines dreiphasigen Elektromotors vorgesehen ist. Für derartige mehrphasige Systeme kann es vorteilhaft sein, daraufhin angepasste Schalteinrichtungen in den Modulen vorzusehen, insbesondere Mehrphasenmodule.

Gemäß einer bevorzugten Ausführungsform wird das Hauptmodul mit einer Gleichspannung Uo gespeist und im Falle von einphasigen Systemen führt dies zu Ausgangsspannungen im Bereich zwischen +Uo und -Uo. Für den Fachmann ist jedoch klar, dass zumindest kurzzeitig auch Ausgangsspannungen dargestellt werden können, die im Bereich von fast +2Uo und -2Uo liegen, wobei die Erzeugung dieser Spannungen oberhalb von Uo bzw. unterhalb von -Uo nicht unter den Schutz der unabhängigen Patentansprüche fällt. Insbesondere werden diese Maximalspannungen dadurch erreicht, indem alle Module in den aktiven Betrieb geschaltet werden (Uo + ½ Uo + ¼ Uo + 1/8 $U_0$ etc.) oder alle in den invertierten Betrieb (-$U_0$ - ½ $U_0$ - ¼ $U_0$ - 1/8 $U_0$ etc.).

Gemäß einem weiteren Aspekt betrifft die vorliegende Erfindung ein Verfahren zum Betreiben eines Stromrichters gemäß dem N Module in Serie verschaltet werden, eine Gleichspannung Uo an die Eingangsklemmen des Hauptmoduls angelegt wird, ein gewünschter zeitlicher Verlauf der Ausgangsspannung im Bezug auf die Amplitude über die Zeit vorgegeben wird, eine Ausgangsspannung an den beiden Endpunkten der Serienschaltung der Module abgegriffen wird und vorbestimmte Ladungszustände für die einzelnen Module aufrecht erhalten werden, indem jedes Modul in seinem aktiven Betriebszustand im Wesentlichen einen vorgegebenen Spannungsbeitrag zur Serienschaltung leistet, wobei die Spannungsbeiträge der Module unterschiedlich zueinander sind und vorzugsweise entsprechend Zweierpotenzen gegeneinander abgestuft sind, und indem die Schaltungseinrichtungen der Module angesteuert werden, um jedes Modul jeweils in einen Betriebszustand zu schalten, derart, dass die Summe der einzelnen Modulspannungen wie sie durch die Energiespeichereinrichtung jedes Moduls entsprechend seines aktiven , invertierten oder Bypass-Betriebs bereitgestellt wird, in jedem Zeitpunkt dem vorgegebenen Bereich der zu liefernden Ausgangsspannung entspricht.

Gemäß einem weiteren Aspekt der Erfindung werden die erfindungsgemäßen Stromrichter für AC/AC-Betrieb durch Koppeln zweier derartiger Stromrichter über den Gleichstromkreis verwendet. Auf diese Weise kann beispielsweise ein Stromrichter aufgebaut werden, der zwei AC-Systeme mit unterschiedlichen Spannungen und/oder unterschiedlichen Frequenzen und/oder unterschiedlichen Phasenzahlen miteinander verbindet und so einen bidirektionalen Energieaustausch zwischen diesen Systemen ermöglicht. Gemäß einem weiteren bevorzugten Aspekt wird ein erfindungsgemäßer Stromrichter zur Speisung eines Elektromotors eines Elektrofahrzeuges verwendet. Gemäß einem weiteren bevorzugten Aspekt wird der erfindungsgemäße Stromrichter zur Verbindung von typischen Netzdrehspannungen mit einem Gleichstromnetz verwendet, um so beispielsweise Hausanschlüsse an ein lokales Gleichstromnetz anzubinden.

## KURZBESCHREIBUNG DER ZEICHNUNGEN

Die voranstehenden und weitere Ziele, Merkmale und Vorteile der vorliegenden Erfindung werden aus der folgenden, detaillierten Beschreibung in Zusammenhang mit den beigefügten Zeichnungen deutlicher, wobei:

Fig. 1   das Prinzip eines dreiphasigen Zweipunktstromrichters beschreibt;

Fig. 2   ein Phasenmodul eines herkömmlichen modularen Mulilevelconverters zeigt, welches aus zwei Brückenzweigen mit je drei gleichen Zweipolen aufgebaut ist;

Fig. 3a - c   den prinzipiellen Aufbau eines Vierquadranten-Moduls bzw. eines Zweiquadranten-Moduls wie er auch für die vorliegende Erfindung eingesetzt werden kann;

Fig. 4   ein System zur Umwandlung einer 3-phasigen Wechselspannung in eine 1-phasige Wechselspannung bzw. eine Gleichspannung zeigt, welches aus drei zusammengeschalteten Phasenmodulen besteht;

Fig. 5   ein System zur Kopplung eines 3-phasigen Drehstromnetzes mit einem zweiphasigen Netz zeigt, welches aus drei und zwei zusammengeschalteten Phasenmodulen besteht;

Fig 6a   ein Prinzipschaltbild zur Erläuterung des Grundprinzips der vorliegenden Erfindung anhand einer bevorzugten Ausführungsform zeigt;

Fig. 6b - d   den prinzipiellen Aufbau einer einphasigen Stromrichterschaltung gemäss einem Aspekt der Erfindung zeigt, bestehend aus beispielhaft 4 Modulen zeigt;

Fig. 7   eine Illustration möglicher Spannungskombinationen durch aktivierte Module für eine einphasige Stromrichterschaltung, bestehend aus beispielhaft 4 Modulen ähnlich zu Figur 6 zeigt;

Fig. 8a - b   Illustrationen möglicher gestufter Verläufe einer Wechselspannung zeigt, wie sie gemäß Aspekten der Erfindung erzeugt werden können;

Fig. 9   das Prinzip einer Versorgung eines dreiphasigen Verbrauchers mit getrennten, isolierten Anschlüssen über drei einphasige Vorrichtungen gemäss einem weiteren Aspekt der vorliegenden Erfindung zeigt;

Fig. 10   eine erste Ausführungsform eines aktiv versorgten Moduls für drei Phasen eines mehrphasigen Stromrichters gemäß einem weiteren Aspekt der Erfindung zeigt;

Fig. 11   eine zweite Ausführungsform eines aktiv versorgten Moduls für eine Phase eines mehrphasigen Stromrichters gemäss einem weiteren Aspekt der Erfindung zeigt;

Fig. 12   mögliche Schaltzustände und die erzeugten Ausgangsspannungen der zweiten Ausführungsform für eine Phase innerhalb eines mehrphasigen Stromrichters zeigt;

Fig. 13   eine dritte Ausführungsform eines aktiv versorgten Moduls für eine Phase innerhalb eines dreiphasigen Stromrichters gemäss einem weiteren Aspekt der Erfindung zeigt;

Fig. 14   eine Illustration zum Funktionsprinzip anhand einer Schaltung mit zwei Modulen zur Erzeugung und dem Zeitverlauf einer eingestellten Gleichspannung zeigt;

Fig. 15     eine Illustration zum Funktionsprinzip anhand einer Schaltung mit drei Modulen zur Erzeugung und Zeitverlauf einer eingestellten Gleichspannung zeigt;

Fig. 16     eine Illustration einer Stufenfunktion mit einem vergrößerten Ausschnitt zur Erzeugung einzelner Spannungsstufen zeigt;

Fig. 17     Abfolgen von Schaltstufen zeigt, wie sie zur Erzeugung eines Stufenspannungsverlaufes benötigt werden.

In den Zeichnungen bezeichnen gleiche Bezugszeichen gleiche Teile, Bauteile und Anordnungen.

<u>DETAILLIERTE BESCHREIBUNG BEVORZUGTER AUSFÜHRUNGSFORMEN</u>

<u>Grundlegende Aspekte:</u>

Die Erfindung basiert gemäß einem Aspekt auf der Erkenntnis Stromrichter für jede Phase durch eine Serienschaltung modularer Zweipole zu realisieren, wobei die Zweipole hinsichtlich ihrer Klemmenspannung vorzugsweise gemäß Zweierpotenzen gestaffelt abgestimmt sind, derart dass sich bei n Modulen $2^{(n-1)}$ Spannungsstufen an den Enden der Serienschaltung darstellen lassen. Vorzugsweise wird dabei das Modul mit der höchsten Spannungsstufe mit dem Gleichspannungskreis verbunden.

Vorzugsweise sind die einzelnen Module als Vierquadranten-Module aufgebaut, wobei die Verwendung von Zweiquadranten-Modulen ebenfalls möglich ist. Vorzugsweise wird die Klemmenspannung jedes Moduls durch direktes oder indirektes Messen dieser und entsprechendes Laden oder Entladen eingestellt, welches wiederum über entsprechendes Schalten der jeweiligen Transistoren (oder anderer geeigneter Schalteinrichtungen) bewirkt wird.

Obwohl eine bevorzugte Ausführungsform von einer strengen Staffelung der Module in Serie entsprechend ihrer maximalen Klemmenspannung ausgeht, um dadurch den Bauteileaufwand, insbesondere für den Modulkondensator effizient zu gestalten (das Modul mit der höchsten Klemmenspannung verwendet den Kondensator mit der höchsten Spannungsfestigkeit), kann die Reihenfolge gemäß einem Aspekt der Erfindung beliebig gewählt werden (solange die Spannungsfestigkeiten der einzelnen Kondensatoren nicht überschritten wird) und diese Reihenfolge kann während des Betriebes von einer Controller-oder Steuereinrichtung, die hierfür ausgelegt ist, verändert werden. Beispielsweise kann beim Ausfall eines Moduls dessen Wertigkeit von der Steuerung auf den kleinsten möglichen Binärwert gesetzt werden, wodurch sich der Ausfall dieses Moduls nur in einer geringen Verschlechterung der Stufigkeit bemerkbar machen würde.

Vorzugsweise definiert somit der Aufbau eines einzelnen Moduls nicht zwingend die an ihm maximal einstellbare Klemmenspannung; diese wird stattdessen durch eine übergeordnete Steuerung oder Controller-Einrichtung, die das aktuelle Potential erfassen kann durch entsprechendes Auf- und Entladen eingestellt. Das Erfassen der aktuellen Klemmenspannung an einem Modul kann direkt an diesem erfolgen (direktes Messen), oder quasi übergeordnet (indirektes Messen) durch Messung nur der gesamten Klemmenspannung der Serienschaltung unter Berücksichtigung zumindest der aktuellen Schaltzustände und vorzugsweise vorangegangener Schaltzustände. Vorzugsweise können dabei die Spannungsveränderungen der Modul-Kondensatoren über den Strom, der durch die Serienschaltung fließt und deren Kapazität mit berücksichtigt werden.

Die Erfindung basiert gemäß einem weiteren Aspekt auf der Erkenntnis, dass ein Stromrichter, der aus einer Serienschaltung von mehreren als Zweipole fungierenden Einzelmodulen aufgebaut werden soll, so auszuführen ist, dass die Spannungen dieser Einzelmodule unterschiedliche Werte, vorzugsweise gestaffelt nach Zweierpotenzen aufweisen sollen. Die Einzelmodule sollen dabei Energiespeicherelemente enthalten und weiterhin so beschaffen sein, dass sie an ihren jeweiligen beiden Klemmen jeweils die Spannung des Energiespeicherelementes ausgeben, deren invertierte Spannung ausgeben oder in einen Bypass-Modus (Spannungsabfall 0) geschaltet werden, bei dem eine leitende Verbindung zwischen den Klemmen hergestellt wird, ohne das Energiespeicherelement zu laden oder zu entladen. Auf diese Weise bewirkt die Hintereinanderschaltung der Einzelmodule über das entsprechende Aktivieren, Deaktivieren/Bypass-Modus und Umpolen/Invertieren der Energiespeicherelemente eine sehr fein gestufte Anpassung der Ausgangsspannung und somit des gewünschten Spannungsverlaufs und ermöglicht es gleichzeitig, die Energiespeicherelemente der Module wahlweise zu laden oder zu entladen.

Gemäß einem weiteren Aspekt der Erfindung ermöglicht die Abstufung der gewählten Spannungen der Module, dass es für jede an den Klemmen der Serienschaltung auszugebende Spannungsstufe vorzugsweise immer mindestens zwei Modulkonfigurationen gibt, so dass die Energiespeicherelemente der jeweiligen Module wahlweise ge- oder entladen werden können. Mit anderen Worten und ausgedrückt für den Betriebszustand einer Leistungsabgabe durch die Serienschaltung an eine Last soll dadurch das Wiederaufladen eines Moduls in der invertierten Verschaltung ermöglicht werden, obwohl das gleiche Modul in einem vorausgehenden Schaltzustand aktiv verschaltet war und dabei entladen wurde. Dies ist wichtig, da im Bypass-Modus bzw. deaktivierten Modus eine Nachladung nicht erfolgen kann.

Gemäß einem weiteren Aspekt der Erfindung wird eine Gleichstromversorgung so an ein spezielles Modul gekoppelt, dass dieses spezielle Modul wahlweise an seinen Klemmen die Spannung der Gleichstromversorgung, einen Bypass-Zustand oder optional die invertierte Spannung der Gleichstromversorgung liefert. Die in Serie zu diesem speziellen Schaltmodul liegenden weiteren Einzelmodule bilden zusammen mit diesem speziellen Modul eine Phase eines ein oder mehrphasigen Stromrichters, wobei die Enden dieser Serienschaltung die äußeren Anschlüsse für jeweils eine Phase darstellen. Dieser Aspekt ermöglicht den Aufbau von Stromrichtern, die sich grundlegend von herkömmlichen Stromrichtern mit zwei Brückenzweigen entsprechend Figur 2 unterscheiden. Mit anderen Worten bildet das spezielle Modul selbst bereits eine Phase eines Zwei- oder Dreipunktstromrichters, während die zusätzlichen Module der Serie passiv zugeschaltet sind und - soweit nicht in den Standby-Modus geschaltet - vom Strom durch die Serienschaltung versorgt werden und weiterhin die Anzahl darstellbarer Spannungsstufen erhöhen.

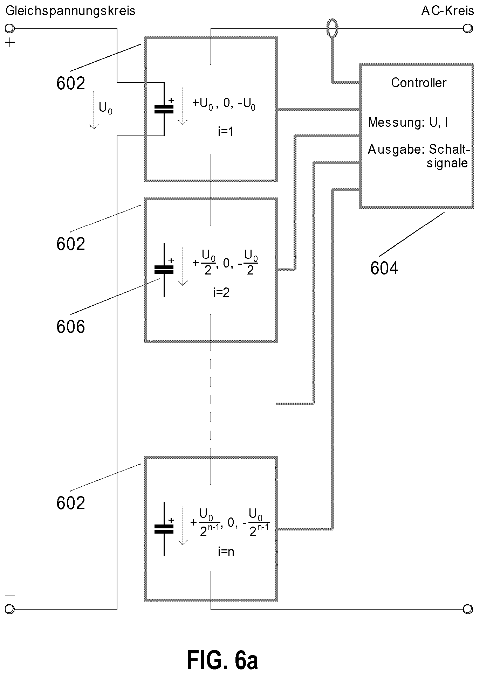

Figur 6a zeigt den prinzipiellen Aufbau eines Stromrichters gemäß diesem Aspekt der Erfindung. Der Stromrichter wird gebildet durch eine Kette aus n seriell miteinander verschalteten Modulen 602. Die Module stellen aus elektrischer Sicht Zweipole dar. Vorzugsweise sind zumindest bis auf das oberste Hauptmodul alle n-1 Module gleich aufgebaut. Das Hauptmodul weist Klemmen zum Anlegen einer Gleichspannung Uo.auf. Die Module weisen im Inneren Schalteinrichtungen, vorzugsweise gebildet durch Transistoren 620, auf. Diese Schalteinrichtungen werden durch eine Controller-Einrichtung 604 gesteuert. Diese Steuerung kann wie gezeigt zentral erfolgen. Alternativ oder zusätzlich kann jedes Modul über eine eigene Steuereinrichtung verfügen. Jedes Modul verfügt darüber hinaus über eine Speichereinrichtung, wie beispielsweise einen Kondensator 606. Durch das Zusammenspiel mit der Controller-Einrichtung wird der Ladungszustand zumindest jedes der n-1 weiteren Modulkondensatoren erfasst bzw gemessen und dadurch überwacht. Durch davon abhängiges Schalten der Schalteinrichtungen der Module zu bestimmten Zeitpunkten kann für jedes Modul die von ihm im aktiven Zustand in den Spannungspfad abgebare Modulspannung in einem gewünschten Bereich gehalten werden. Erfindungsgemäss sind die Modulspannungen der einzelnen Module unterschiedlich. Vorzugsweise hat ausgehend vom Hauptmodul mit der Spannung $U_0$ jedes weitere n-1 Modul eine dagegen stufenweise verkleinerte Spannung. Vorzugsweise sind die Modulspannungen wie angegeben entsprechend Zweierpotenzen zueinander gestaffelt. Den Ausgang bildet die Spannung an den Endpunkten der Serienschaltung.

Jedes Modul kann in den aktiven Betrieb geschaltet seine Modulspannung in den Spannungspfad einbringen. Im Betrieb Bypass wird das Modul durchgeschaltet und seine Modulspannung wird nicht in den seriellen Spannungspfad eingebracht, Geschaltet in einen vorzugsweise vorgesehenen invertierten Betrieb kann jedes Modul seine Spannung invertiert in den Spannungspfad einbringen. Für den Fachmann ist klar, dass es dadurch eine grosse Anzahl von darstellbaren Spannungsstufen am Ausgang gibt, erzielbar durch eine geringe Anzahl von Modulen. Das Schalten des invertierten Betriebs ermöglicht es die Speichereinrichtung des entsprechenden Moduls nachzuladen.

Weitere Details sind anhand der weiteren Figuren beschrieben, wobei zur Vereinfachung die Controller-Einrichtung teilweise nicht eingezeichnet ist.

Das von der Gleichstromversorgung gespeiste spezielle Modul oder Hauptmodul stellt vorzugsweise das Modul mit der höchsten Spannungsfestigkeit dar und kann als aktiv versorgtes Modul (bzw. Hauptmodul) betrachtet werden. Die weiteren in Serie geschalteten Einzelmodule können dabei wie Vierquadranten-Module 330, 340 eines Modularen Multilevelconverters ausgeführt sein, wie sie in den Figuren 3a und 3b dargestellt sind. Als Transistoren sind hier beispielsweise MOSFETs oder IGBTs einsetzbar. Anstelle der dargestellten Transistoren 301 bis 304 können auch andere elektrisch schaltende Bauelemente als Transistoren zum Einsatz kommen, wie beispielsweise GTOs oder IGCTs. Weiterhin können parallel zu den schaltenden Bauelementen noch Dioden so parallel geschaltet sein, dass diese in entsprechender Durchlassrichtung des schaltenden Bauelementes sperren.

Die spezielle Verschaltung gemäß Figur 3a und 3b gestattet es, dass jedes einzelne Energiespeicherelement der Serienschaltung entweder positiv oder negativ in Serie zu der Spannungsquelle geschaltet wird oder in Form einer Bypass-Schaltung nicht beteiligt ist. Damit sind ausgewählte Energiespeicherelemente (wie beispielsweise Kondensatoren) der Serienschaltung mit unterschiedlichen Spannungen seriell bzw. antiseriell zur Spannungsquelle geschaltet. Die beiden Anschlüsse an den Enden einer so gebildeten Kette werden als Ausgang des Systems betrachtet. Wegen des bidirektionalen Leistungsflusses können sie aber ebenso als Eingänge der Schaltung fungieren.

Die Energiespeicherelemente sind vorzugsweise Ladungsspeicher, wie Kondensatoren oder Batterien, die keine zusätzliche Versorgung nach außen benötigen. Weiterhin können aber auch andere Energiespeicherelemente, wie beispielsweise Doppelschicht-Kondensatoren oder Lithium-Ionen-Kondensatoren verwendet werden. Durch die Serienschaltung dieser Energiespeicherelemente mit der aktiv versorgten Modulen und einer Last kann das System Ladung von den aktiv versorgten Modulen - je nach aktuell gewählter Polarität im Modul - in die Energiespeicherelemente transportieren, oder aus ihnen herausleiten. Insbesondere können so - bei entsprechender Wahl der Spannungen der Speicherelemente und ihrer Verschaltung - an den Ausgangsklemmen der Serienschaltung Spannungen - Uo $\leq$ U $\leq$ Uo erzeugt werden, wobei Uo die Spannung des aktiv versorgten Moduls darstellt (dieser Bereich gilt zumindest dann, wenn eine Nachladung einzelner Module möglich sein soll; ohne diese Forderung wäre kurzzeitig auch nahezu der doppelte Spannungshub möglich). Die Spannung an den Ausgangsklemmen ist also die Summe der Teilspannungen der aktiv geschalteten Module, also der Module, welche sich nicht im Bypassbetrieb befinden. Da insbesondere die nicht versorgten Module als Vierquadranten-Module ausgeführt sind, können deren Spannungs-Beiträge auch negativ sein. Aus den Eigenschaften des aktiv versorgten Moduls ergeben sich zwei grundsätzliche Möglichkeiten für die Serienschaltung der Module:

- das aktiv versorgte Modul ist als Zweiquadranten-Modul ausgeführt; in diesem Fall kann es nur eine positive Spannung Uo oder 0V ausgeben. Entsprechend ergibt sich an den Ausgangsklemmen der Serienschaltung auch nur eine gestufte Spannung zwischen 0V und $U_0$, da Summe der Spannungsbeiträge der weiteren Module negativ ist, solange die Spannung am aktiv versorgten Modul Uo ist. Bei dieser Variante können die anderen Module als Vierquadranten- oder Zweiquadranten-Module ausgeführt sein.

- das aktiv versorgte Modul ist als Vierquadranten-Modul ausgeführt; in diesem Fall kann es eine positive Spannung Uo, eine negative Spannung -Uo oder 0V ausgeben. Entsprechend kann an den Ausgangsklemmen eine gestufte Spannung zwischen $-U_0$ und Uo - und damit auch ein echter Wechselspannungsverlauf ausgegeben werden. Bei dieser Variante sollten die anderen Module ebenfalls als Vierquadranten -Module ausgeführt sein.

Der Strom an den Ausgangsklemmen des Systems (der ein Laststrom oder der Strom einer Quelle sein kann) erzeugt einen Ladungstransport durch sämtliche Module, welcher wiederum die Spannungen der einzelnen aktiven Energiespeicherelemente mit der Zeit verändert. Die Spannung eines Kondensators (der als Energiespeicherelement eines Moduls dient) fällt mit der Zeit ab, wenn dieser Kondensator - entsprechend der aktuell gewählten Polarität - seriell mit der Spannungsquelle verbunden ist, bzw. seine Spannung steigt an, wenn er antiseriell mit der Quelle verbunden ist.

Durch entsprechendes ständiges Umschalten der Energiespeicherelemente aller beteiligten Module (bis auf das Modul mit der höchsten Spannungsfestigkeit) im Betrieb kann für jedes Energiespeicherelement seine mittlere Ladung und damit auch seine Spannung erhalten werden. Insbesondere können für solche Umschaltvorgänge die zu aktivierenden Module so gewählt werden, dass ein Umpolen der Energiespeicherelemente einerseits die Ladung jedes Energiespeicherements in der gewünschten Weise ausgleicht (so dass sein Spannungswert etwa erhalten bleibt) und andererseits auch die gewünschte Gesamtspannung der Serienschaltung der Module aufrechterhalten bleibt. Auf diese Weise können daher durch ständiges periodisches Umschalten, auch am Ausgang des Systems nahezu konstante Gleichspannungen dargestellt, bzw. in kleinen Stufen verändert werden.

Das Ändern der Ausgangsspannung durch Änderung der Konfiguration aktiv geschalteter Module geschieht sehr verlustarm, da nur die Durchlassverluste der Transistoren der Module, die ohmschen Verluste der Energiespeicherelemente und evtl. noch Schaltverluste der Transistoren anfallen.

Für die Abstufung der Spannungen der einzelnen Energiespeicherelemente zeigt sich, dass eine Abstufung in Zweierpotenzen besonders vorteilhaft ist. Damit ist das Energiespeicherelement mit der größten Spannung auf eine Spannung von Uo ausgelegt; für die weiteren Speicherelemente halbiert sich jeweils die Spannung. Diese Auslegung hat den Vorteil, dass mit relativ wenigen Energiespeichern nach der oben beschriebenen Methode eine große Zahl äquidistanter Spannungsstufen erzeugt werden kann. Wenn man die Zuführungen der Spannungsquelle als Gleichstromzwischenkreis betrachtet, das aktiv versorgte Modul beispielhaft als Vierquadranten-Modul auslegt und die Ausgangsklemmen als AC-Kreis betrachtet (auch wenn das System wahlweise auch Gleichspannungen erzeugen kann), bildet das so entstehende System einen einphasigen Stromrichter.

*Einphasiges System:*

Obige Grundlagen gelten sinngemäß für die weiteren Erläuterungen die sich zunächst auf ein einphasiges System richten.

Einphasige Systeme als eine bevorzugte Ausführungsform werden beispielsweise benötigt, um aus einer Gleichspannungsquelle einen einphasigen Wechselstrom, beispielsweise 230V/50Hz zu erzeugen. Eine mögliche Anwendung besteht im Bereich Photovoltaik. Ein Energiespeicher wird über die Zeit mittels Photovoltaik-Panels aufgeladen und soll zur Versorgung eines Systems, beispielsweise eines Hauses dienen. Das System Haus benötigt typischerweise 230V/50Hz. Der Stromrichter ist dabei in der Lage diese Wandelung zwischen Energiespeicher und Hausnetz zu bewerkstelligen.

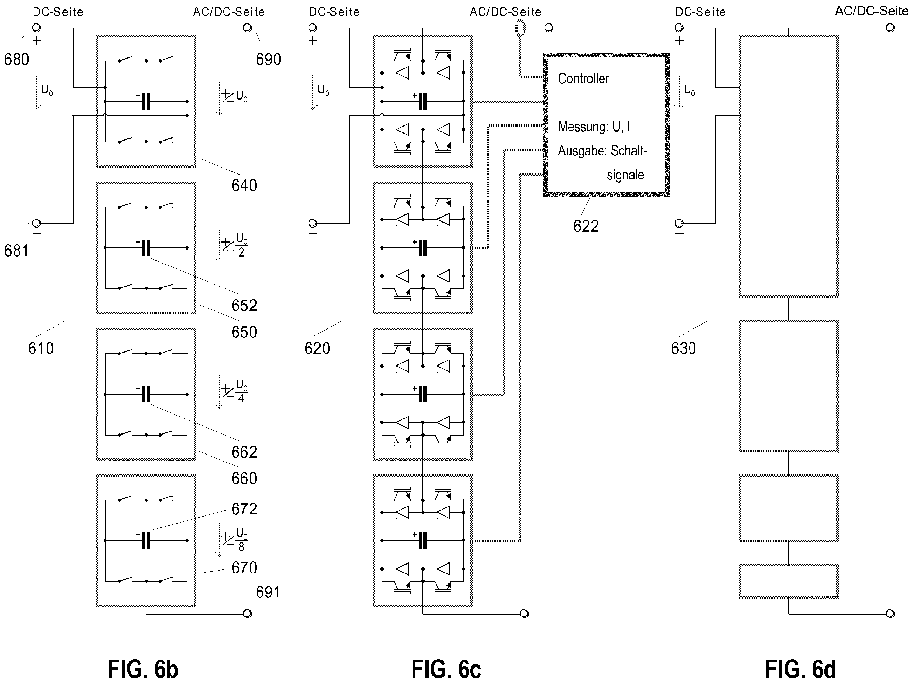

Figur 6b zeigt beispielhaft und schematisch ein solches System bestehend aus vier Modulen, welche jeweils als Vierquadranten-Module ausgelegt sind. Für den Fachmann und insbesondere auch aus den obigen Ausführungen ist klar, dass eine beliebige Anzahl von Modulen vorhanden sein kann und diese über beliebige Arten von Schalteinrichtungen geschaltet sein können. Sie können vorzugsweies als Zweiquadranten- oder Vierquadranten-Module ausgelegt sein. Ein einphasiger Stromrichter 610, besteht aus vier Modulen 640, 650, 660, 670, wobei jedes Modul symbolisch mit vier Schaltern dargestellt ist. Modul 640 stellt das aktiv versorgte Modul dar. Die nach unten folgenden seriell verschalteten Module 650, 660, 670 sind sämtlich als passive Vierquadranten-Module mit je einem Speicherkondensator 652, 662, 672 ausgeführt, wobei sich die Spannungen der Module 650, 660, 670 jeweils erneut halbiert, wie in Figur 6a angegeben. Bei den dargestellten vier Modulen (einem aktiv versorgen Modul und 3 passiven Kondensatormodulen) werden die einzelnen Spannungen nach den Werten $U_0$, $U_0/2$, $U_0/4$, $U_0/8$ aufgeteilt. Die Ausgangsspannung kann daher abgestuft in Achtel-Schritten relativ zur maximalen Spannung Uo dargestellt werden. Die Reihenfolge der Module mit ihren jeweiligen Spannungen ist dabei nicht auf die dargestellte Reihenfolge festgelegt. Beispielsweise könnte das Modul mit Uo/2 das letzte in der Serie sein. Festgelegt ist nur das aktiv versorgte Modul, das die Spannung Uo bereitstellt. Vorzugsweise bildet dieses das erste Modul in der Serie, wobei dies jedoch nicht zwingend der Fall sein muss. Das Klemmenpaar 680, 681 stellt die Anschlüsse für das Gleichspannungssystem (z.B. Batterie) dar. Die Ausgangsklemmen 690, 691 bilden den AC-Kreis. Mit diesem System kann an den Ausgangsklemmen eine variable positive oder negative Spannung im Bereich von $-U_0$ und $U_0$ erzeugt werden. Typischerweise handelt es sich bei der Ausgangsspannung um eine Wechselspannung mit gewünschter Frequenz und Amplitude (z.B. 230V/50Hz). Jedoch ist aufgrund der Möglichkeit, die Modul-Kondensatoren nachladen zu können auch eine Gleichspannung auf der Ausgangsseite erzeugbar. Das System kann verwendet werden, um Energie aus der Gleichstromquelle abzugeben und als Wechselspannung über die Ausgangsklemmen in ein AC-Netz einzuspeisen. Jedoch ist auch der umgekehrte Betrieb möglich, in dem das AC-Netz die Gleichspannungsquelle lädt.

Figur 6c zeigt eine weitere Ausführungsform mit zusätzlichen Details. Sämtliche Module sind hier als Vierquadrantenmodule ausgeführt. Die Modulkette 620 stellt den Stromrichter mit Transistoren und den zugehörigen Body-Dioden dar. Weiterhin ist bei der Modulkette 620 noch die zugehörige Controllerschaltung 622 gezeigt. Diese Controllerschaltung dient dazu, die benötigten Schaltzustände der Module zu bestimmen und an die Module weiterzugeben. Beispielsweise werden die Spannungen der Energiespeicherelemente aller Module erfasst und der Strom, welcher durch die Modulkette fließt (dieser entspricht dem Ausgangsstrom des Stromrichters, der wegen der Bidirektionalität des Stromrichters positiv oder negativ sein kann). Entsprechend der einzelnen Spannungen der Energiespeicherelemente und einem Vergleich mit einer jeweiligen Sollspannung entscheidet die Controller-Schaltung für jedes einzelne Modul, ob es geladen oder entladen werden soll, sofern es nicht in den Bypass-Zustand geschaltet werden soll. Aus der Vorgabe einer gewünschten momentanen Sollspannung, welche wiederum aus einem gewünschten Spannungsverlauf abgeleitet wird und der Polarität des Ausgangsstromes kann die Controller-Schaltung dann die für den gewünschten Spannungsverlauf im momentanen Zeitpunkt benötigten Schaltzustände jedes Moduls berechnen. Entsprechend kann sie dann die erforderlichen Transistor-Steuersignale (oder allgemein Schalteinrichtungs-Steuersignale) an alle Module ausgeben.

Der modulare Aufbau des Stromrichters in Kombination mit der Controllerschaltung erlaubt ein sehr hohes Maß an Flexibilität des Stromrichters, da ein großer Teil der Betriebsstrategie des Stromrichters in Form von austauschbarer Software in der Controllerschaltung hinterlegt bzw. abgespeichert werden kann. Auf diese Weise kann die Controllerschaltung einfach über eine entsprechende Umprogrammierung, bzw. Parameteranpassung an unterschiedliche Betriebsstrategien des Stromrichters angepasst werden. Beispielsweise kann hierbei die Spannungstoleranz bestimmt werden, entsprechend der die Controllerschaltung entscheidet, ob ein Energiespeicherelement eines Moduls nachgeladen oder entladen werden soll. Auch kann über ein solches Steuerprogramm variabel definiert werden, ob zusätzlich zu den Stufenfunktionen eine Pulsweitenmodulation in Höhe einer Spannungsstufe angewendet werden soll. Hierdurch kann ein glatterer Verlauf der mittleren ausgegebenen Spannung erreicht werden; andererseits steigen auf diese Weise die Schaltverluste. Der Stromrichter kann durch entsprechendes Umkonfigurieren auch an eine veränderte Spannung im Gleichstromkreis angepasst werden, in dem sämtliche Sollspannungswerte der Module entsprechend angepasst werden. Weiterhin kann die Controllerschaltung über ihre Software so angepasst werden, dass der Stromrichter weniger Spannungsstufen erzeugt als technisch möglich wäre. Durch eine solche Betriebsstrategie können beispielsweise die Schaltverluste der Halbleiter und die Kondensatorverluste bei großen Stromrichter-Leistungen reduziert werden, falls der Betrieb des Stromrichters es erlaubt mit einer geringeren Stufenzahl zu arbeiten. Eine entsprechende Programmierung und Rekonfiguration der Controllerschaltung kann auch optisch oder über Funk erfolgen, so dass hierfür keinerlei galvanische Verbindung zu dem Stromrichter oder seiner Steuerung erfolgen muss.

Ein Teil der Funktionalitäten, die für die Steuerung des Stromrichters erforderlich sind, kann auch auf einzelne eigene Steuereinheiten übertragen werden, die jeweils direkt mit den einzelnen Modulen verbunden sind. Diese Steuereinheiten können beispielsweise die Ladezustände der Energiespeicherelemente überprüfen, so dass nicht die Ladespannung sondern nur der Ladezustand an die Controllerschaltung gemeldet wird. Weiterhin können die Steuereinheiten Sicherheitsfunktionen übernehmen und nur bestimmte Schaltkombinationen der Schaltelemente zulassen, oder im Fehlerfall ein betreffendes Modul in den Bypass-Zustand versetzen. Eine Kommunikation zwischen diesen Steuereinheiten und der Controllerschaltung kann beispielsweise über einen potentialfreien bidirektionalen Datenkanal erfolgen. Auch hier kann die Übertragung von Daten per Funk oder optisch erfolgen.

Die Modulkette 630 in Figur 6d zeigt symbolisch die gleichen Module mit einer Länge, die ihrer jeweiligen Spannung im Sinne von Zweierpotenzen (falls so gewählt) entspricht.

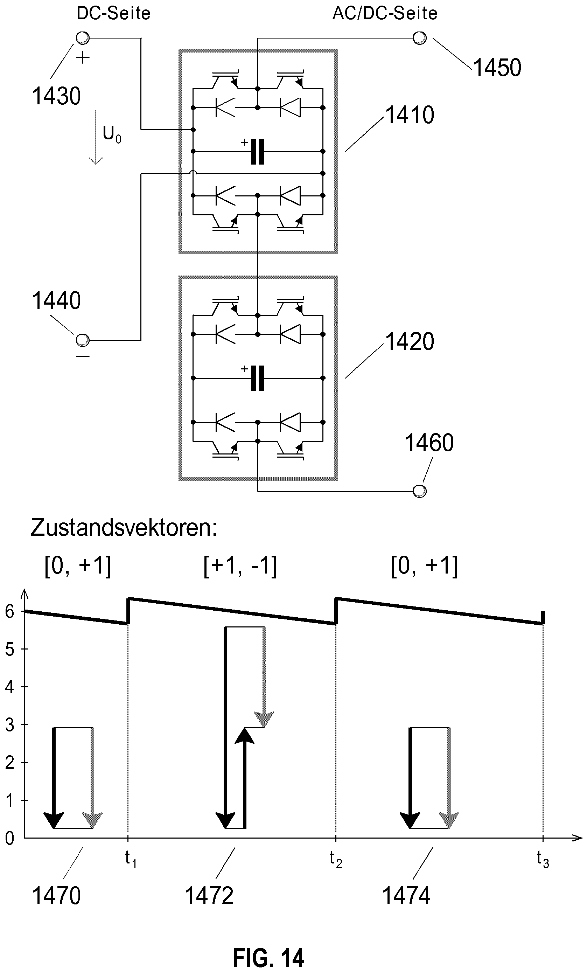

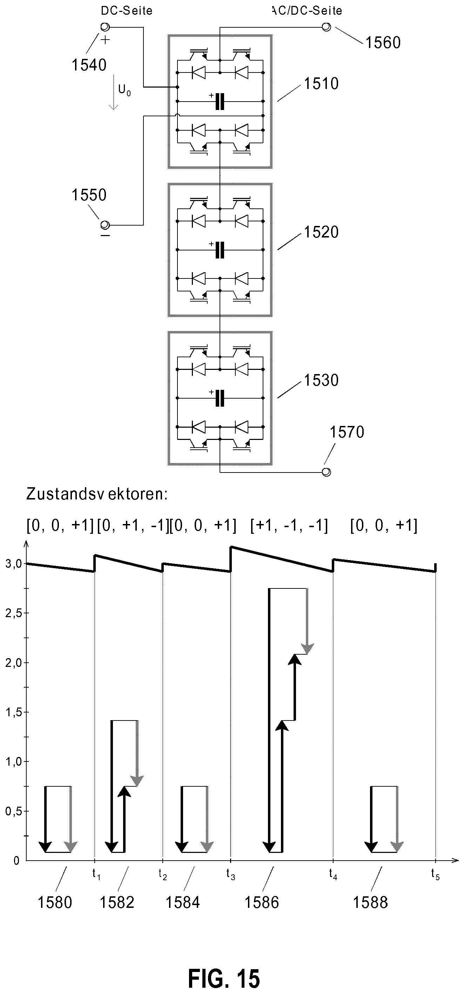

Durch einen entsprechenden Laststrom (bzw. Strom aus einer Quelle) werden die Kondensatoren der Module je nach geschalteter Polarität entladen oder geladen, was zu einem entsprechenden Ansteigen oder Absinken der Kondensatorspannung führt. Daher wird ein Modul, dessen Kondensator beispielsweise zu weit entladen ist (dessen Spannung also um eine kleine Toleranzgrenze unter einem jeweiligen Sollwert liegt), in einem nächsten Schritt so umgeschaltet, dass sein Kondensator umgekehrt im Strompfad liegt. Auf diese Weise wird der entsprechende Kondensator durch den Laststrom wieder aufgeladen. Da sich durch diese Maßnahme aber die Gesamtspannung verändert, muss entsprechend der gewünschten Sollspannung dann eine andere Kombination von Modulen geschaltet werden, welche jedoch die gleiche Ausgangsspannung liefert. Details zu diesem Prinzip der Nachladung bei gleichbleibender Ausgangsspannung werden in Zusammenhang mit den Figuren 14 und 15 erläutert.

Das Funktionsprinzip lässt sich auch umkehren; dies bedeutet, dass eine elektrische Leistung an den Ausgangsklemmen zugeführt wird und über den Gleichspannungskreis abgegeben wird. Die über die Ausgangsklemmen zugeführte Spannung muss dabei mindestens der Spannung des Energiespeicherelementes mit der geringsten Spannung (geringste Zweierpotenz) entsprechen (d.h. typischerweise dem untersten Modul bei streng gestaffelter Anordnung).

Anstelle eines einzigen aktiv versorgten Moduls bzw. einer Spannungsquelle können auch mehrere solche aktiv versorgte Module in Serie geschaltet sein.

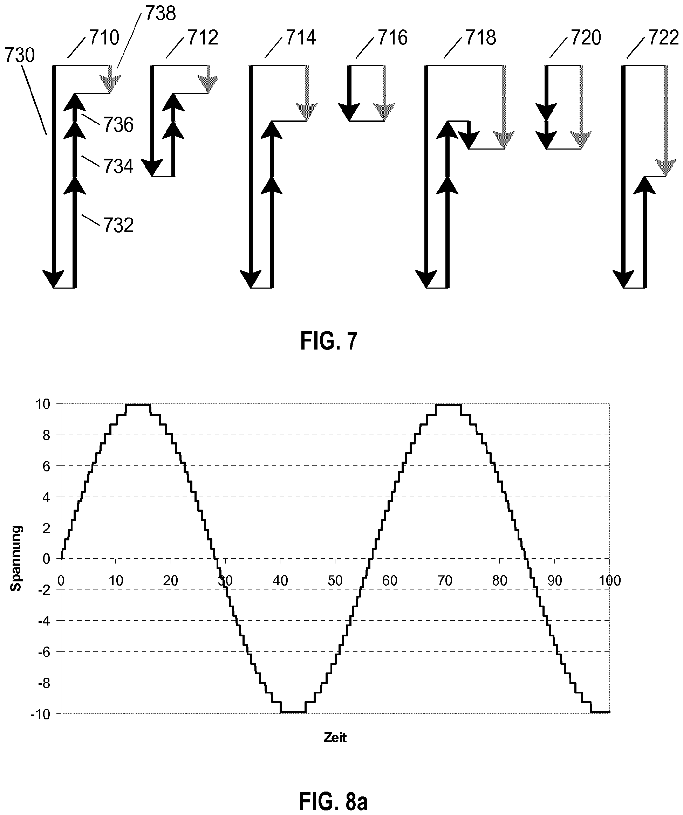

Figur 7 stellt beispielhaft mögliche unterschiedliche Schaltkombinationen der vier Module gemäß Figur 6b mit Hilfe von Spannungspfeilen dar. Die Pfeillänge ist bei dieser Darstellung proportional zur jeweiligen Spannung gewählt. Die schwarzen Pfeile symbolisieren die Spannungen der momentan aktiv geschalteten Module; der graue Pfeil entspricht der resultierenden Ausgangsspannung des Systems, d.h. der Ausgangsspannung der Serienschaltung von Modulen. Pfeil 730 der Schaltkombination 710 stellt die Spannung Uo des aktiv versorgten Moduls dar. In der Figur 7 sind die Module 650, 660, 670 aus Figur 6b alle aktiv geschaltet, haben aber inverse Polarität. Entsprechend sind die Pfeile 732, 734 und 736 mit umgekehrter Richtung dargestellt.

Die Pfeilrichtungen lassen gleichzeitig einen Rückschluss auf die Stromflussrichtung zu. Wenn an den Ausgangsklemmen eine Last angeschlossen ist, entspricht eine Pfeilrichtung nach unten einer Stromabgabe und eine Pfeilrichtung nach oben einer Stromaufnahme. Im vorliegenden Fall wird das aktiv versorgte Modul 640 entladen, während die Module 650, 660, 670 geladen werden. Die resultierende Spannung, die am Klemmenpaar 690, 691 abgegriffen werden kann, wird durch den Pfeil 738 dargestellt. Entsprechend ist die Spannung an den Ausgangsklemmen positiv und hat den Wert $U_0/8$.

Bei der Schaltkombination 712 gemäß Figur 7 wird die gleiche Ausgangsspannung von Uo/8 wie in der ersten Konfiguration erzeugt. Jedoch wird hier das aktiv versorgte Modul jetzt im Bypass betrieben, so dass es keine Spannung abgibt. Modul 650 wird jetzt entladen, während die Module 660 und 670 weiterhin geladen werden. Entsprechend existieren auch hier nicht gezeigte Schaltkombinationen, bei denen die Module 660 und 670 entladen werden können.

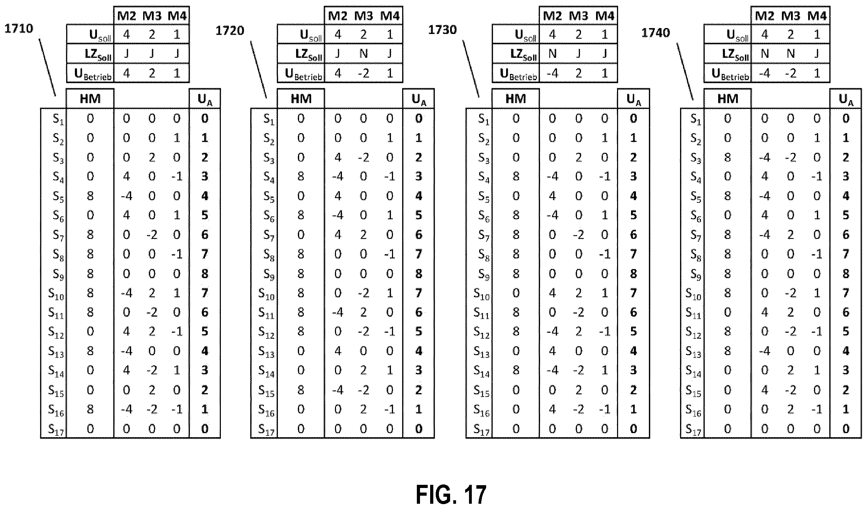

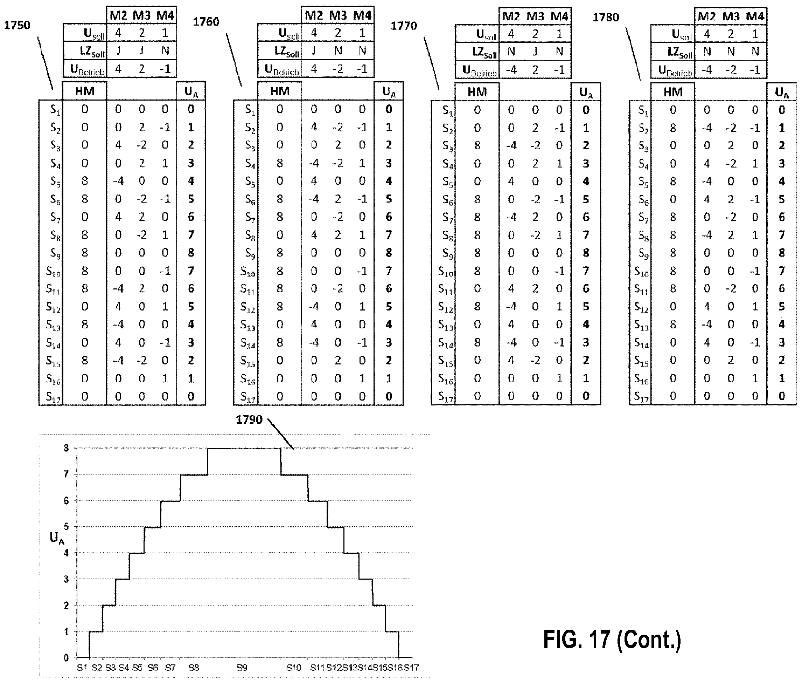

Dieser Aspekt wird im Zusammenhang mit Figur 17 im Detail erläutert. Die Schaltkombinationen 714, und 716, erzeugen jeweils Spannungen von $U_0/4$, die Schaltkombinationen 718, und 720, Spannungen von 3/8 Uo. Durch die Schaltkombination 722, kann an den Ausgangsklemmen eine Spannung von Uo/2 erzeugt werden. Bei Umkehrung aller Pfeilrichtungen können entsprechende negative Spannungen erzeugt werden.

Für eine Modulkette, bestehend aus einem aktiv versorgten Modul mit Spannung Uo und weiteren n-1 Vierquadranten-Modulen (d.h. insgesamt gibt es n Module), mit nach Zweierpotenzen abgestuften Modulspannungen, lässt sich folgender Zusammenhang zeigen: An den Ausgangsklemmen einer solchen Modulkette kann jede beliebige Spannung von -Uo bis Uo in Stufen von $U_0/(2^{(n-1)})$ dargestellt werden und zwar unabhängig vom aktuellen Ladezustand der einzelnen Energiespeicherelemente (beispielsweise Kondensatoren) der Module. Ladezustand bedeutet hierbei, dass für jedes Modul der jeweilige Energiespeicher entweder in einem Zustand ist, dass er geladen werden sollte (aktuelle Spannung liegt unter der Sollspannung für dieses Modul) oder in einem Zustand, dass er entladen werden sollte (aktuelle Spannung liegt über oder ist gleich der Sollspannung für dieses Module). Da sich beispielsweise bei Verwendung von Kondensatoren als Energiespeicherelemente, die Spannung während des Ladens bzw. Entladens kontinuierlich verändert, muss für ein längeres Halten einer bestimmten Ausgangsspannung unter Last - entsprechend den Ladezuständen der Modul-Kondensatoren - ständig zwischen bestimmten Modulkonfigurationen hin und hergeschaltet werden. Diese bestimmten Modulkonfigurationen liefern dabei zusammen eine gleichbleibende Ausgangsspannung, lassen aber ein erforderliches Nachladen bzw. Entladen bestimmter Modul-Kondensatoren zu, ohne dass dies am Ausgang zu einer spürbaren Veränderung der Ausgangsspannung führt. Daher existieren für jede darstellbare Ausgangsspannung - außer für 0V (alle Module im Bypass-Zustand), der maximalen Spannung Uo (nur das aktiv versorgte Modul liefert Spannung) und der minimalen Spannung -Uo (hier liefert das aktiv versorgte Modul seine invertierte Spannung) - immer mindestens zwei Modulkonfigurationen zur Darstellung dieser Ausgangsspannung. Weitere Details zu diesem Prinzip werden im Zusammenhang mit den Figuren 14 und 15 erläutert.

Obwohl eine Abstufung der Modulspannungen nach Zweierpotenzen bevorzugt ist und maximale Flexibilität und leichte Ansteuerbarkeit ermöglicht, sind auch andere Abstufungen denkbar, beispielsweise entsprechend Dreierpotenzen. Dies kann jedoch dazu führen, dass anders als im Fall von Zweierpotenzen, bestimmte Modulspannungen zwei- oder mehrfach vorhanden sein müssen.

Weiterhin, können für den Fall dass mehrere Gleichspannungskreise zur Verfügung stehen, auch Konfigurationen verwendet werden, bei denen mehrere aktiv versorgte Module verwendet werden, die jeweils mit einem Gleichspannungskreis verbunden sind.

Die Frequenz, mit der Modulkonfigurationen umgeschaltet werden müssen, wird einerseits durch die erlaubte Toleranz der Modulkondensator-Spannungen und deren Einfluss auf die Ausgangsspannung, den Laststrom und die Kapazität der Kondensatoren bestimmt. Insbesondere können durch Verwendung großer Kapazitäten für die Modulkondensatoren sehr geringe Schaltfrequenzen erreicht werden, da die Spannungsänderungen langsamer von statten gehen. Bei Ausgabe von Wechselspannung bestimmt jedoch die Frequenz dieser Wechselspannung die minimal zulässige Schaltfrequenz (d.h. der Schaltzeitpunkt muss auf Grund der darzustellenden Frequenz und somit des Anstiegs der Stufenfunktion deutlich früher liegen, als dies elektrisch eigentlich durch den Modulkondensator erforderlich wäre). Umgekehrt kann die Kapazität der Kondensatoren und damit das benötigte Kondensatorvolumen - welches neben den Filterkosten einen wichtigen Kostenfaktor bei Stromrichtern darstellt - stark verkleinert werden, in dem der obige Vorgang gezielt mit relativ hoher Schaltfrequenz durchgeführt wird.

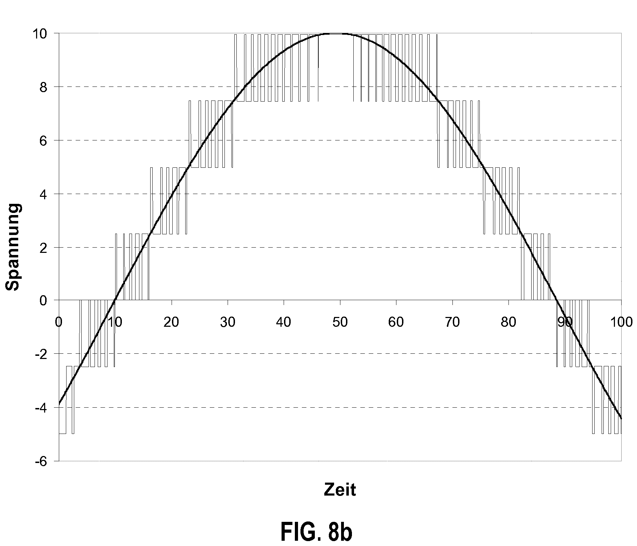

Weiterhin und insbesondere im Zusammenhang mit dem oben gesagten kann mittels der Module zusätzlich eine Pulsweitenmodulation über die erzeugte Stufenfunktion gelegt werden. Dies bietet sich insbesondere dort an, wo auf Grund einer geringen Modulanzahl eine relative grobe Stufung erfolgt. Mittels der darübergelegten Pulsweitenmodulation kann im Mittelwert eine weitere Optimierung erfolgen. In Zusammenhang mit Figur 8b werden weitere Details zu dieser Variante erläutert.

Hohe Schaltfrequenzen haben weiterhin den Vorteil, dass eine zwischen die Modulkette und die Last verschaltete Filterschaltung zur Glättung von Ausgangsstrom und -spannung nur wenig Energie (entsprechend der abzufangenden Spannung und der Periodendauer zwischen den Schaltzuständen) speichern muss und damit kleiner dimensioniert werden kann. Eine Erhöhung der Schaltfrequenz erhöht allerdings die Schaltverluste der Transistoren.

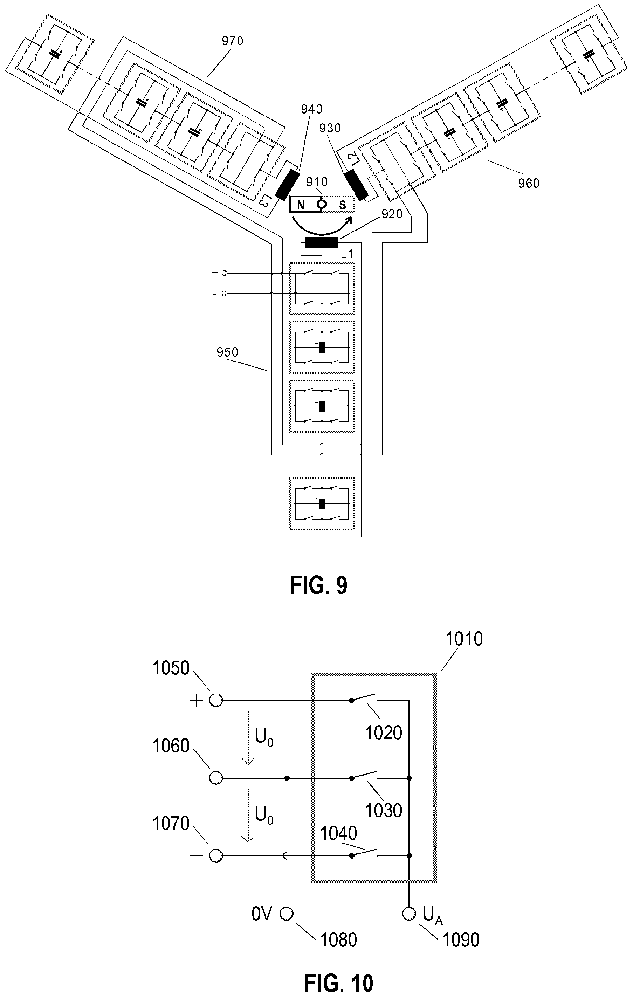

Obige Betrachtungen zur Erzeugung variabler, in Stufen einstellbarer Ausgangsspannungen lassen sich sinngemäß auch umkehren, so dass die Schaltung einen Leistungsfluss von den rechten zu den linken Klemmen gestattet. Dabei muss die an den rechten Klemmen anliegende Spannung lediglich etwas größer also die Spannung des Moduls mit der kleinsten Spannung $U_0/2^{n-1}$ sein. In diesem Fall kann dann äquivalent zunächst jedes passive Modul nachgeladen werden und seine Energie in das aktiv versorgte Modul (welches mit der festen Gleichspannung verbunden ist) übertragen und somit über die linken Klemmen in das Gleichspannungssystem einspeisen. In diesem Fall gilt, dass ein Modul, dessen Kondensatorspannung durch die Energieeinspeisung eine Toleranzschwelle überschreitet - bei entsprechender Änderung der gesamten Modulkonfiguration, gemäß der anliegenden Spannung - dann umgekehrt in den Strompfad geschaltet und somit wieder entladen wird. Bei dem in Figur 6 dargestellten einphasigen System haben die Ausgangsklemmen systembedingt ein fluktuierendes Potential relativ zu den Eingangsklemmen. Daher darf hier beispielsweise nicht der Minuspol der linken Seite mit einer der beiden Ausgangsklemmen der rechten Seite verbunden werden. Lösungen zu dieser Problematik werden im Folgenden im Zusammenhang mit mehrphasigen Systemen und den Figuren 9 bis 13 erläutert.

Gemäß einer bevorzugten Ausführungsform wird das Hauptmodul mit einer Gleichspannung Uo gespeist und im Falle von einphasigen Systemen führt dies zu Ausgangsspannungen im Bereich zwischen +Uo und -Uo. Für den Fachmann ist jedoch klar, dass unter bestimmten Voraussetzungen zumindest kurzzeitig auch Ausgangsspannungen dargestellt werden können, die im Bereich von fast +2Uo und -2Uo liegen, wobei die Erzeugung dieser Spannungen oberhalb von Uo bzw. unterhalb von -Uo nicht unter den Schutz der unabhängigen Patentansprüche fällt. Insbesondere werden diese

Maximalspannungen dadurch erreicht, indem alle Module in den aktiven Betrieb geschaltet werden ($U_0 + \frac{1}{2} U_0 + \frac{1}{4} U_0 + 1/8 U_0$ etc.) oder alle in den invertierten Betrieb ($-U_0 - \frac{1}{2} U_0 - \frac{1}{4} U_0 - 1/8 U_0$ etc.).

*Regeln für das Einstellen von Spannungsstufen:*

Folgende Ausführungen erläutern weitere bevorzugte Details und können sinngemäß bei den obigen Grundlagen und einphasigen Systemen zur Anwendung kommen, als auch bei denen im Folgenden beschriebenen weiteren Systemen.

An den Ausgangsklemmen eines ein- oder mehrphasigen Stromrichters kann entsprechend einem Aspekt der vorliegenden Erfindung eine gestufte Spannung erzeugt werden, indem jeweilige Schaltzustände für die entsprechenden Module des Stromrichters gemäß den folgenden Regeln eingestellt werden.

Das System besteht aus

- einem aktiv versorgten Modul mit einer beliebig zuschaltbaren Spannung und
- zusätzlichen Vierquadranten-Modulen, die je nach Ladezustand entweder mit positiver oder mit negativer Spannung betrieben werden können oder alternativ in den Bypass-Modus geschaltet werden.

Mit der Kombination dieser Module sollen Gesamtspannungswerte bis zur größten Modulspannung (d.h. zur größten Spannung die das aktiv versorgte Modul liefern kann) abgebildet werden, die dem Vielfachen der kleinsten Modulspannung (d.h. der Spannung des Energiespeichers eines Vierquadranten-Moduls mit der kleinsten Klemmenspannung) entsprechen.

Jede positive Ausgangsspannung, die aus einer Kombination von ausschließlich positiven Modulspannungen erzeugt wird (sogenannte Grundzustände), ist weiterhin darstellbar, wenn für beliebige Vierquadranten-Module lediglich die Möglichkeit vorliegt, neben dem Bypass-Modus mit negativem Spannungswert betrieben zu werden (diese Aussage gilt nicht für die Maximalspannung Uo, die nur durch das aktiv versorgte Modul geliefert werden kann und für die Spannung 0, bei der alle Module im Bypass-Zustand betrieben werden). Die damit gewonnene mehrfache Darstellbarkeit einer Ausgangsspannung ermöglicht eine Abfolge von Schaltzuständen, bei der entladene Module in einem der nachfolgenden Schaltzustände geladen und geladene Module entladen werden können. Dieses Prinzip kann auch dafür genutzt werden, innerhalb einer Spannungsstufe den Schaltzustand zu wechseln. Entsprechendes gilt auch für negative Ausgangsspannungen.

Die obigen Betrachtungen beziehen sich auf den Fall einer Energieabgabe an eine Last. Im Falle einer Energieaufnahme von einer Quelle (z.B. Bremsvorgang in einem Elektrofahrzeug) werden negativ gesetzte Module entladen und positiv gesetzte Module geladen. Dies muss bei der Schaltung der Module entsprechend berücksichtigt werden, um den tatsächlich gewünschten Ladezustand herbeizuführen.

Die erwähnte Flexibilität beruht auf der grundsätzlichen Möglichkeit, einen gewünschten positiven Spannungswert eines bestimmten Moduls (außer dem aktiv versorgten Modul), welcher derzeit auf Grund des Ladezustands des betreffenden Moduls aber nicht zur Verfügung steht, durch Kombination der positiven Spannung des Moduls mit der nächsthöheren Spannung in Kombination mit der negativen Spannung (auf Grund des Ladezustands) des betreffenden Moduls zu bilden. Beispiel: wenn in einer Kette von Modulen mit den Spannungen 1V, 2V, 4V, 8V ... eine Spannung von 4V gewünscht wird, aber dieses Modul derzeit geladen werden soll und somit -4V liefert, kann eine Spannung von 4V erreicht werden, wenn ein Modul mit 8V zusammen mit den -4V des betreffenden Moduls kombiniert wird. Dieses Prinzip gilt rekursiv, d.h. wenn dieses nächsthöhere Modul (z.B. 8V) ebenfalls nur negativ zur Verfügung steht (d.h. -8V), kann wieder mit dem nächst höheren Modul (hier 16V) ausgeglichen werden: 16V - 8V - 4V = 4V. Da das höchste Modul aktiv versorgt wird, steht spätestens dieses Modul stets zum Ausgleich zur Verfügung. Diese Betrachtungen gelten sinngemäß auch für alle negativen Spannungen. Beispiel: -4V = -16V + 8V +4V.

Für einen spezifischen Zustand, in dem die Vier-Quadranten-Module beliebig mit positiver oder negativer Spannung zur Verfügung stehen, kann folgende Methode zur Festlegung des Schaltzustandes der einzelnen Module und damit für den Ausgleichsvorgang festgelegt werden beliebige Ausgedrückt als Regel können somit folgende Fälle für diese Ausgleichsvorgänge unterschieden werden (Abstufung der Spannungen der Energiespeicher in Zweierpotenzen beispielhaft angenommen):

- Die Vierquadranten-Module werden, mit dem niedrigsten Spannungswert beginnend, entsprechend dem Grundzustand im Bypass-Modus oder mit positivem Spannungswert verschaltet.

- Sollte ein Vierquadranten-Modul im Grundzustand mit positivem Spannungswert benötigt werden, aber aufgrund des Ladezustands lediglich mit negativem Spannungswert verschaltbar sein, so wird es mit negativem Spannungswert verschaltet. Die nächstfolgenden Vierquadranten-Module werden dann gemäß folgender Regel zugeschaltet:

  ▪ Falls das Vierquadranten-Modul mit der nächsthöheren Spannung für einen Grundzustand nicht benötigt wird, wird es grundsätzlich zugeschaltet.

  - Bei positivem Spannungszustand ist der Spannungsausgleich damit beendet.

  - Bei negativem Spannungszustand (invertiert zur Ladung) wird die Höhe der auszugleichenden Spannung damit verdoppelt und muss dann mit dem Modul mit der nächsthöheren Spannung ausgeglichen werden.

  ▪ Falls die Spannung des Vierquadranten-Moduls mit der nächst höheren Spannung für den Grundzustand benötigt wurde, wird es in diesem Fall grundsätzlich im Bypass-Modus betrieben. Die Anforderung an die auszugleichende Spannung wird damit erneut verdoppelt.

Da die Anforderung an die auszugleichende Spannung mittels des nächstfolgenden Vierquadranten-Moduls entweder ausgeglichen oder verdoppelt wird, ist in jedem Fall spätestens ein abschließender Ausgleich durch das aktiv versorgte Modul möglich.

Die gleiche Logik gilt mit umgekehrtem Vorzeichen für die Erzeugung von negativen Gesamtspannungen.

Beispiel: Wenn in der vorher erwähnten Kette von Modulen mit den Spannungen 1V, 2V, 4V, 8V ... eine Ausgangsspannung von 6V gewünscht ist, so wäre der Grundzustand 2V + 4V = 6V; d.h. nur die beiden Module für 2V und für 4V müssten positiv geschaltet werden, alle anderen Module sind im Bypass zu schalten. Falls - abweichend vom Grundzustand - das 2V-Modul positiv nicht zur Verfügung steht, wird es trotzdem benötigt (gemäß obigen Regeln);

daher wird es invertiert zugeschaltet. Weiterhin wird das nächst höhere, das 4V-Modul in den Bypass-Zustand geschaltet (da es nach den obigen Regeln für den Grundzustand gebraucht wurde). Das bzgl. der Spannung darauf folgende Modul, das 8V-Modul wird wieder zugeschaltet (da es gemäß den obigen Regeln für den Grundzustand nicht benötigt wird). In diesem Fall würde sich also: -2V +8V = 6V ergeben. Falls allerdings das 8V-Modul ebenfalls nicht positiv zur Verfügung steht, wird es trotzdem verwendet - allerdings invertiert - und das nächst höhere Module aktiviert: -2V -8V +16V = 6V. Dies kann bei Bedarf fortgesetzt werden bis zum aktiv versorgten Modul, welches immer zur Verfügung steht.

*Anzahl der einstellbaren Spannungsstufen:*

Im Folgenden wird - ausgehend von einer Abstufung der Spannungen der einzelnen Energiespeicherelemente in Zweierpotenzen - die Anzahl der möglichen einstellbaren Spannungsstufen betrachtet. Als höchste Spannungsstufe wird nicht die Summen-Spannung aller n Module gerechnet, sondern nur die Stufe des aktiv versorgten Moduls. In binärer Schreibweise ausgedrückt, bei der eine 1 ein positiv zugeschaltetes Modul und eine 0 ein Modul im Bypass-Betrieb beschreibt, wäre das bei angenommenen 5 Modulen der Vektor 10000. Die höchste theoretisch mögliche Spannung wäre in diesem Fall 11111, also alle n Module in gleicher Spannungsrichtung im Einsatz - dieser Fall ist allerdings meist nicht sinnvoll, da die Module in einem Betrieb als Stromrichter nicht mehr beliebig nachladbar sind. Mit dieser vektoriellen Darstellung (z.B. Zustand 1; 0; -1) lässt sich das für eine bestimmte Ausgangsspannung erforderliche Schaltverhalten aller Module gut beschreiben. Die Schaltung der Module entspricht somit der Veränderung des Vektors auf den im Takt nachfolgenden Vektor. Die Taktung und damit Umschaltung zur nächsten Modulkonfiguration erfolgt vorzugsweise regelmässig und mit einer Frequenz die deutlich über der Frequenz des darzustellenden Ausgangssignals liegt. Abhängig von der darzustellenden Ausgangsfunktion und der Speicherkapazität der Transistoren kann sie auch darunter liegen.
Damit ergibt sich die Anzahl $S_+$ der positiven Stufen zu:

$$S_+ = 2^{n-1} + 1$$

Dies ist die Anzahl der Möglichkeiten ohne die höchste Stufe und "+1" durch die höchste Stufe. Entsprechend der Darstellung nach dem Binärsystem ist die Null dann bereits enthalten. Wenn man die Anzahl der möglichen negativen Stufen $S_-$ mit berücksichtigen will, muss man hier entsprechend die Stufe 0 weglassen, so dass sich eine Gesamtanzahl S von darstellbaren Spannungsstufen ergibt zu:

$$S = S_+ + S_- = \left(2^{n-1} + 1\right) + 2^{n-1} = 2 \cdot 2^{n-1} + 1 = 2^n + 1$$

Figur 8 zeigt den gestuften Verlauf einer Sinusspannung, wie er bei Ausgabe über einen Stromrichter gemäß Ausführungsform bestehend aus 5 Modulen ausgegeben werden kann. Insgesamt kann die Ausgangsspannung in 33 Spannungsstufen ausgegeben werden. Die Ausgangsspannung kann anschließend optional durch Filterschaltungen oder weiterhin optional durch zusätzliche pulsweitenmodulierte Ansteuerung der Module noch weiter geglättet werden, vergleiche die Ausführungen oben.

*Mehrphasige Systeme:*

Für die im folgenden beschriebenen mehrphasigen Systeme gelten sämtliche obigen Ausführungen, insbesondere zu Grundlagen und einphasigen Systemen, entsprechend.
Bei einem mehrphasigen System kommt der Umstand zum tragen, dass das mit Strom aktiv versorgte Modul des einphasigen Systems ständig umgepolt wird und die Ausgangsklemmen gegenüber den Gleichspannungsanschlüssen des Eingangs somit keinen definierten Massepunkt aufweisen.
Bei Verwendung von mehrphasigen Verbrauchern oder Quellen, bei denen die einzelnen Phasen isoliert gegeneinander betrieben werden können, die also auch nicht als Stern verschaltet sind (z.B. Transformatoren oder Motoren/Generatoren mit isolierten, nichtverbundenen Wicklungen) können mehrphasige Stromrichtersysteme aufgebaut werden, in dem mehrere solche einphasigen Stromrichter nach Figur 6 über den Gleichspannungskreis verbunden werden. Ein solches System ist in Figur 9 zur Ansteuerung eines dreiphasigen Motors 910 dargestellt. Die einzelnen drei Wicklungen 920, 930 und 940 des Motors werden von den drei einphasigen Stromrichtern 950, 960 und 970 so gespeist, dass in den drei Wicklungen ein Drehfeld entsteht. Vorteilhaft ist hierbei, dass für jede Phase zur Erzeugung der Ausgangsspannung das Potential der Gleichspannung einfach umgepolt werden kann. Entsprechend ergibt sich bei einer Spannung von $U_0$ im Gleichspannungskreis für jede Phase eine mögliche Ausgangsspannung zwischen +Uo und -Uo (im Gegensatz dazu würde die Spannung an den Klemmen eines herkömmlichen Stromrichters gemäß Figur 1 nur einen Bereich von $+U_0/2$ und -Uo/2 abdecken). Die zur Steuerung der Schalteinrichtungen und zur Erfassung der Ladezustände, des Laststroms, des Drehfeldes etc. erforderliche Controller-Einrichtung ist in dieser Darstellung zur Vereinfachung nicht eingezeichnet.

Wenn sich die Ausgangsklemmen auf ein gemeinsames Potential beziehen sollen bzw. ein gemeinsamer Bezugspunkt zwischen Ein- und Ausgang erforderlich ist, werden gemäß weiterer Aspekte der Erfindung geänderte Schaltungstopologien vorgeschlagen. Hinsichtlich der passiven Vierquadranten-Module mit ihren Kondensatoren als Energiespeicherelemente ist das mehrphasige System gleichartig zu dem einphasigen System aufgebaut, vgl. oben. Da sich die Ausgangsklemmen aller Phasen auf ein gemeinsames Potential beziehen müssen, muss hier ein darauf angepasstes aktiv versorgtes Modul eingesetzt werden, welches im Folgenden beschrieben wird.

Bei den Figuren der im Folgenden beschriebenen Systeme wird die Spannung im Gleichstromkreis jeweils formal als $2 \cdot U_0$ dargestellt, da sie für die entsprechenden Mehrphasensysteme Ausgangsspannungen erzeugen, die jeweils im Bereich von $+U_0$ und $-U_0$ liegen.

In einer ersten diesbezüglichen Ausführungsform ist die Gleichspannungsversorgung so ausgeführt, dass eine Mittelanzapfung zur Verfügung gestellt wird. Diese Mittelanzapfung stellt sowohl eingangsseitig als auch ausgangsseitig "0V" dar und kann damit gleichzeitig als Sternpunkt des Ausgangssystems dienen.

Das aktiv versorgte Modul, im Folgenden als aktiv versorgtes Mehrphasenmodul bezeichnet, muss so konfiguriert sein, dass das Potential je nach abzugebender Spannung zwischen +Uo und -Uo hin- und herspringt.

Figur 10 zeigt eine erste Ausführungsform für die Schaltung eines derartigen Moduls 1010. Dabei wird das dargestellte aktiv versorgte Mehrphasenmodul (die weiteren Module können wie oben beschrieben ausgeführt sein) für jede Phase des aufzubauenden Mehrphasensystems benötigt. Das Prinzip lässt sich für beliebige Phasenzahlen realisieren. Das aktiv versorgte Mehrphasenmodul nach Figur 10 wird von einer Gleichspannungsversorgung mit den Spannungen +/-Uo über die Anschlüsse 1050 und 1070 und die Mittelanzapfung 1060 versorgt. Wenn dieses aktiv versorgte Mehrphasenmodul eine positive oder negative Spannung über seine erste Ausgangsklemme 1090 an das nachfolgende Vierquadranten-Modul weiterreichen soll, ist jeweils der zweite Anschluss 1080 mit "0V" verbunden. Dieses Spannungspotential entspricht einerseits dem optionalen Sternpunkt des Ausgangs und andererseits der Mittelanzapfung der Gleichspannungsversorgung. Je nach gewünschtem Zustand ist jeweils einer der drei Schalter 1020, 1030 und 1040 zu schließen. Allerdings stellt dieses schematische Schaltbild zwei spezielle Anforderungen an die Schalter. Der oberste Schalter 1020 und der unterste Schalter 1040 müssen für eine Spannungsfestigkeit von $2 \cdot U_0$ ausgelegt werden. Weiterhin muss der mittlere Schalter 1030 in beiden Spannungsrichtungen sperren können. Jeweils ein solches aktiv versorgtes Mehrphasenmodul wird für jede Phase des Stromrichters benötigt.

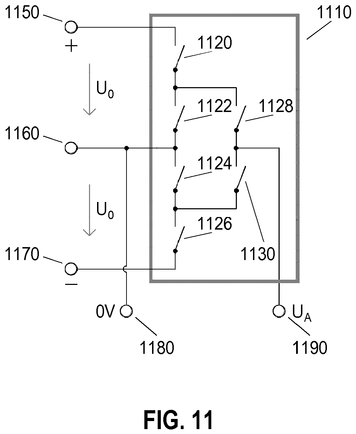

Eine zweite Ausführungsform mit ähnlichen Eigenschaften bildet die Schaltung 1110 nach Figur 11, wobei hier ein aktiv versorgtes Mehrphasenmodul gemäß der in Figur 11 dargestellten Schaltung pro Phase benötigt wird. Auch hier können Spannungen über die Gleichspannungsanschlüsse 1150, 1160, 1170 über entsprechende Schalter 1120, 1122, 1124, 1126, 1128, 1130 an die Ausgangsklemmen 1180, 1190 weitergereicht werden. Sie benötigt zwar insgesamt 6 Schalter pro Phase, allerdings müssen diese Schalter nur für jeweils die halbe Spannung des Gleichspannungskreises, also nur für Uo ausgelegt werden. Weiterhin müssen die verwendeten Schalter nur in einer Spannungsrichtung sperren können. Daher können hier beispielsweise IGBTs oder MOSFETs eingesetzt werden.

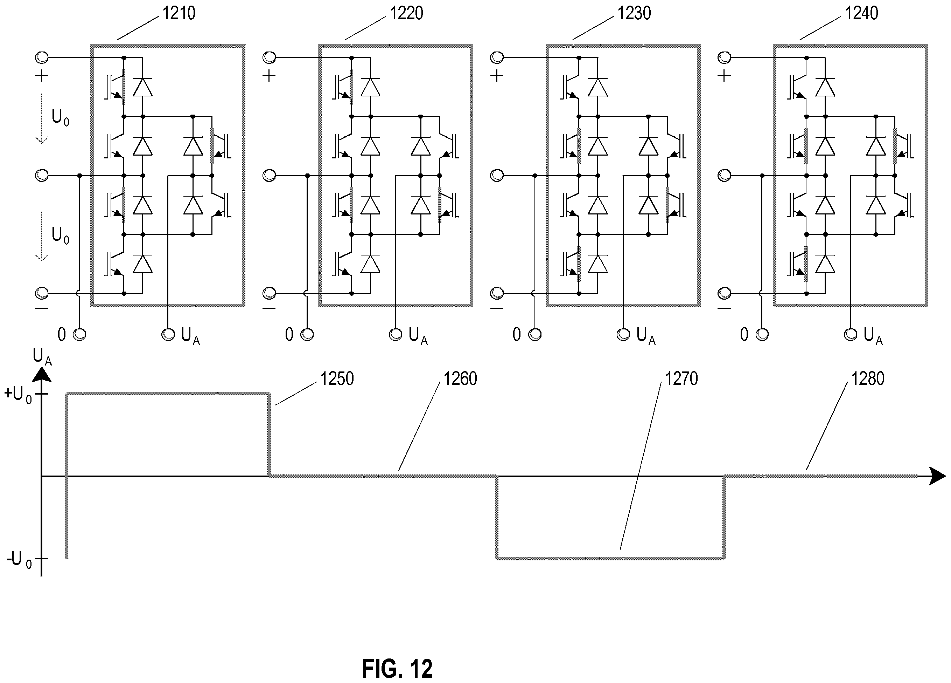

Figur 12 zeigt unterschiedliche Schaltzustände der Transistoren dieser zweiten Ausführungsform. Die über die Transistoren gelegten Balken sollen jeweils die momentan leitend geschalteten Transistoren darstellen. Entsprechend erzeugt die erste Schaltkonfiguration 1210 an den Ausgangsklemmen eine positive Spannung, die Konfigurationen 1220 und 1240 erzeugen 0V und die Konfiguration 1230 eine negative Spannung. Die Schaltung nach Figur 12 kann daher auch als eine Phase eines Dreipunktstromrichters betrachtet werden, der die drei Spannungspegel $+U_0$, 0 und $-U_0$ liefern kann.

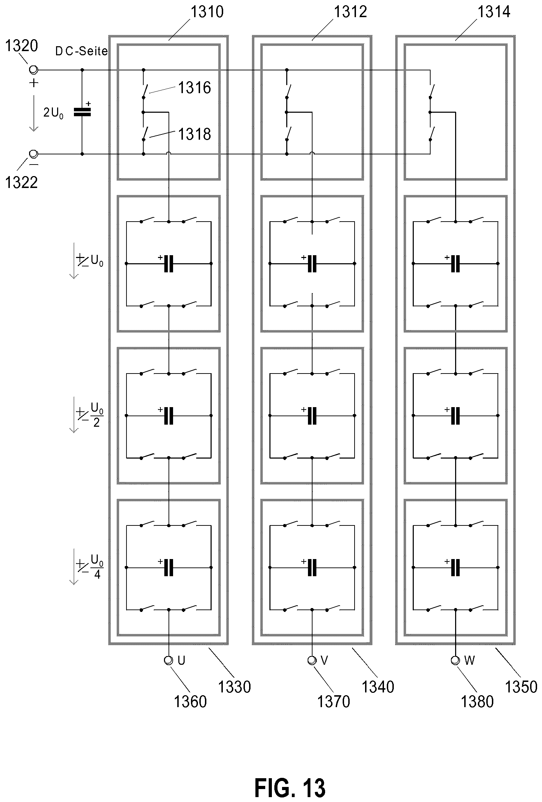

Falls im mehrphasigen Ausgangskreis des Stromrichters kein Sternpunkt benötigt wird, kann eine dritte Ausführungsform der aktiv versorgten Mehrphasenmodule zum Einsatz kommen, wie sie in Figur 13 gezeigt ist. Diese Ausführungsform nutzt als aktiv versorgtes Mehrphasenmodul 1310, 1312, 1314 für jede Phase eine einfache Halbbrücke, bestehend aus zwei Schaltern 1316, 1318, welche nur zwischen positiver Spannung $2 \cdot U_0$ und 0V umschalten kann. Figur 13 zeigt beispielhaft einen solchen Stromrichter mit drei Phasen und drei zusätzlichen Vierquadranten-Modulen pro Phase, allerdings kann das dargestellte Prinzip sowohl auf eine beliebige Anzahl von Phasen als auch eine beliebige Anzahl von eingesetzten Vierquadranten-Modulen pro Phase angewendet werden. Der positive Anschluss der Gleichspannungsversorgung wird mit dem oberen Eingangsanschluss 1320 verbunden, der negative Anschuss mit dem unteren Eingangsanschluss 1322. Ein so ausgestatteter einphasiger Stromrichter kann an jeder Ausgangsklemme des Stromrichters nur positive Spannungen zwischen 0V und $2 \cdot U_0$ ausgeben. Entsprechend können die drei Ketten 1330, 1340 und 1350 des in Figur 13 gezeigten dreiphasigen Stromrichters auch nur jeweils positive Spannungen gegen den negativen Anschluss 1322 der Gleichspannungsversorgung erzeugen. Untereinander können die drei Ausgänge 1360, 1370 und 1380 jedoch so gesteuert werden, dass ein symmetrisches dreiphasiges Drehspannungssystem entsteht.

Vorteilhaft bei dieser dritten Ausführungsform ist, dass pro Phase für das aktiv versorgte Mehrphasenmodul lediglich zwei Transistorschalter (oder allgemein Schalteinrichtung) benötigt werden, welche zudem nur in einer Stromrichtung sperren können müssen. Entsprechend bilden die oberen drei Module 1310, 1320, 1330 der Schaltung nach Figur 13 einen Zweipunktstromrichter. Wenn die Gleichstromquelle, die mit den Eingangsanschlüssen 1320, 1322 verbunden ist zusätzlich eine Mittelanzapfung aufweist, kann diese auch als Sternpunkt für das mehrphasige Ausgangssystem dienen. Damit liegt der wesentliche Unterschied zur Ausführungsform gemäß Figur 12 und Figur 13 darin, dass die Schaltung nach Figur 12 einen Dreipunktstromrichter bildet, während die Schaltung nach Figur 13 einen Zweipunktstromrichter bildet. Entsprechend ist für die Ausführungsform nach Figur 13 ein weiteres Vierquadranten-Modul nötig, um die gleiche Stufenzahl zu erreichen, wie bei der Ausführungsform nach Figur 12.

Allgemein ausgedrückt, kann gemäß einem weiteren Aspekt der Erfindung jeweils eine Kette von Vierquadranten-Modulen mit jeder AC-Klemme eines ein- oder mehrphasigen Zwei- oder Mehrpunktstromrichters so verbunden werden, dass diese jeweilige Kette zwischen der AC-Klemme und der ein- oder mehrphasigen Last (bzw. Quelle) liegt. Damit fungiert diese Kette (bzw. diese Ketten) als eine Art Filterschaltung, welche die Anzahl ausgebbarer Spannungsstufen des Stromrichters entsprechend vergrößert. Somit kann das Stromrichtersystem aufgetrennt werden in einen Zwei- oder Mehrpunktstromrichter und die zugehörigen Ketten aus Vierquardranten-Modulen. Eine solche Aufteilung kann beispielsweise vorteilhaft für Elektrofahrzeuge sein, da hier der zugehörige Stromrichter sowohl für die Ansteuerung des Motors (bzw. Generators für den Rekuperationsbetrieb) als auch für das Laden der Batterie (mit großer Leistung) verwendet werden kann. In einem solchen Fall kann der Stromrichter, welcher mit der Antriebsbatterie verbunden ist, über einen Umschalter einmal mit dem Motor und einmal mit dem ein- oder dreiphasigen AC-Netz verbunden werden. Für die Ansteuerung des Motors ist oft eine einfache Spannungsform des Ausgangs (z.B. Block-Kommutierung oder PWM-Ansteuerung) mit einem Zwei- oder Dreipunktstromrichter ausreichend, während das Laden der Batterie über ein ein- oder dreiphasiges AC-Netz höheren Anforderungen an die Wellenform des Spannungsverlaufs (wegen möglicher Netzrückwirkungen) genügen muss. In einem solchen Fall brauchen die Ketten von Vierquadranten-Modulen nur im Strompfad des ein- oder dreiphasigen AC-Netzes liegen und auch nur für die entsprechende Ladeleistung ausgelegt sein. Für den Betrieb des Motors kann dagegen auf die einfachere Wellenform des Zwei- oder Mehrpunktstromrichters zurückgegriffen werden, wodurch entsprechende Verluste der Transistoren der Modul-Ketten zusätzlich eingespart werden können.

Entsprechend können mit weiteren Stromrichterketten auch Netze mit mehr als drei Phasen generiert werden. Durch Kopplung von zwei derartiger ein oder mehrphasiger Stromrichtersysteme kann - nach Art eines Back-to-Back-Converters - auch ein Stromrichter aufgebaut werden, der an beiden Seiten variable Gleich- und Wechsel-Spannungen, mit bidirektionalem Leistungsfluss verarbeiten kann. Die Verbindung zweier solcher Stromrichtersysteme erfolgt - analog wie bei herkömmlichen Stromrichtersystemen - über den Gleichspannungskreis, der damit zum sog. Gleichspannungszwischenkreis wird. Auf diese Weise können beliebige Gleich- oder Wechselspannungen (mit beliebiger Phasenzahl und Frequenz) in beliebige andere Gleich- oder Wechselspannungen umgewandelt werden.

Grundsätzlich eignen sich alle vorgestellten mehrphasigen Stromrichtersysteme entsprechend erster, zweiter und dritter Ausführungsform für eine derartige Kopplung. Wenn das Potential des Gleichstromzwischenkreises keinen fest definierten Bezug zu den Wechselstromsystemen haben muss, stellt die dritte Ausführungsform nach Figur 13 die günstigste Möglichkeit dar.

### Schaltverluste der Transistorschalter.

Schaltverluste entstehen in den verwendeten Halbleiterschaltern durch die endliche Schaltzeit, in der ein entsprechender Schalter weder isoliert noch gut leitet und dadurch hohe ohmsche Verlustleistungen erzeugt. Damit sind diese Verluste in etwa proportional zur geschalteten Spannung, zum geschalteten Strom, zur Zeitdauer der Umschaltung und zur Schaltfrequenz. Die höchste zu schaltende Spannung liegt an dem von der Gleichspannung aktiv versorgten Modul an. Die Transistoren dieses Moduls müssen im Vergleich zu einem Zweipunktstromrichter allerdings nur die halbe Spannung schalten, nämlich die Spannung der Versorgungsschaltung. Weiterhin kann - im Gegensatz zu PWM-Stromrichtern - eine Reduktion der Schaltfrequenz durch Vergrößerung der Modul-Kondensatoren erreicht werden. Hierbei kann - bei Abgabe von Wechselstrom - die benötigte Schaltfrequenz der einzelnen Module etwa auf die Frequenz der ausgegebenen Wechselspannung reduziert werden. Wenn - wie weiter unten erläutert - eine Schaltschwelle der Spannung für den Übergang Laden/Entladen definiert wird, ist die so entstehende Schaltfrequenz umgekehrt proportional zum Laststrom. Damit sinken sowohl die Schalt- als auch die Durchlassverluste überproportional mit abnehmendem Laststrom. Dies wiederum führt zu einem extrem hohen Teillast-Wirkungsgrad.

Alle Schaltelemente können beispielsweise als Transistoren (beispielsweise MOSFET oder auch IGBT) oder andere Halbleiterschalter ausgeführt und durch Parallelisierung in der Stromtragfähigkeit verbessert werden.

### Einfache Beispiele zur detaillierten Erläuterung des Prinzips der Lade- und Entladevorgänge:

Nachfolgende Ausführungen sind nur beispielhaft und dienen dem besseren Verständnis. Für den Fachmann ist klar, dass sich diese Ausführungen auch auf eine beliebige Anzahl n von Modulen, eine beliebige Art von Speicherelementen, Schalteinrichtungen, beliebige und insbesondere deutlich höhere Eingangsspannungen und beliebige dazustellenden Ausgangsspannungen beziehen.

Die folgenden beispielhaften Ausführungen an Hand der Figuren 14 und 15 sowie 8b stellen einerseits spezielle Details dar, erläutern andererseits Grundprinzipien der Erfindung, die ebenso für alle anderen Figuren und Ausführungsformen gelten.

Beispiel 1, Erzeugung einer Gleichspannung mit 2 Modulen:

Der in Figur 14 dargestellte Stromrichter soll zunächst nur aus zwei Modulen bestehen, einem aktiv versorgten Modul 1410 (hier als Vierquadranten-Modul ausgeführt) mit 12V (welches über die Klemmen 1430, 1440 aus dem DC-Kreis versorgt wird) und einem Kondensator-basierten Modul 1420, welches für eine Spannung von 6V ausgelegt ist. Weiterhin soll der Stromrichter zunächst an seinen Ausgangsklemmen 1450, 1460 eine DC-Spannung von 6 V (d.h. die Spannung der "kleinsten Stufe") abgeben, wobei auch ein gewisser Laststrom fließen soll. Die Startkonfiguration des Stromrichters sei dabei so gewählt, dass das 6V-Modul mit 6V vorgeladen ist. Das 12V-Modul kann auf Grund seiner Spannungsversorgung stets 12V liefern.

*Zeitspanne 0 bis $t_1$, 1470:*

Zunächst wird daher das 12V-Modul auf 0 (Bypass) geschaltet (in dem nur die beiden rechten oder die beiden linken Transistoren dieses Moduls gemäß der Abbildung eingeschaltet werden).

Das 6V-Modul gibt die geforderten 6V ab, wobei sich allerdings der Modulkondensator mit der Zeit entlädt, bis eine untere Toleranzschwelle erreicht ist. Beispielsweise bei Unterschreiten einer Spannung von 5,9 V muss das System dann umschalten.

*Zeitspanne $t_1$ bis $t_2$, 1472:*

Nun wird das 12V-Modul aktiv auf +12V geschaltet, während das 6V-Modul mit seiner reduzierten Spannung von 5,9V negativ in Serie geschaltet wird, beispielsweise indem der rechte obere Schalter und der linke untere Schalter dieses Moduls durchgeschaltet werden. Damit ergibt sich nun eine neue Gesamtspannung von 12V - 5,9V = 6,1V, die sich - diesmal durch das Aufladen des Kondensators (welcher durch den Ladungsabtransport vom negativen Pol des Kondensators bewirkt wird) - wieder langsam bis zur Toleranzschwelle absenkt. Da die gesamte im Kreis wirksame Kondensator-Kapazität gegenüber der ersten Zeitspanne nicht verändert ist (da elektrisch weiterhin nur ein Kondensator wirkt; er zugeschaltete weitere Kondensator der ersten Stufe ist elektrisch neutral, da auf Grund der Gleichspannungsversorgung stets auf voller Spannung gehalten wird), bleibt auch die Geschwindigkeit des Spannungsfalls gleich (die Zeitspanne verdoppelt sich allerdings gegenüber dem Start, da sich die Ausgangsspannung um 0,2 V von 6,1V auf 5,9V verändert). Dabei wird - durch den invertierten Betrieb - das 6V-Modul auf eine Spannung von 6,1V geladen.

*Zeitspanne $t_2$ bis $t_3$, 1474:*

Hier ist nun wieder nur das 6V-Modul positiv aktiv (das 12V-Modul ist wieder im Bypass-Zustand), nur startet es mit 6,1V, so dass die dritte Zeitspanne so groß ist, wie die zweite.

Mit anderen Worten wird die Speichereinrichtung eines aktiven Moduls aufgrund des Laststroms entladen. Im invertierten Betrieb, führt der Laststrom jedoch zu einer Ladung des betreffenden Moduls, sodass sich der resultierende Spannungsbereich dieses Moduls auf diese Weise in vorbestimmten Grenzen halten lässt. Wenn der Ladezustand an einer Speichereinrichtung eines Moduls unter einen Grenzwert $W_1$ zu fallen droht, wird dieses Modul in einer anschließenden Phase in den invertierten Betrieb geschaltet, wodurch sich die Speichereinrichtung wieder auflädt. Diese Aufladung erfolgt dann bis zum Grenzwert $W_2$, wobei zu diesem Zeitpunkt das Modul dann entweder wieder in einen Entladungsbetrieb, d.h. aktiven Betrieb geschaltet werden muss oder in den Bypass-Betrieb, um ein Überladen zu verhindern. Auf diese Weise kann jede Speichereinrichtung jedes Moduls in einem vorgegebenen Spannungsbereich gehalten werden. Dieser kann elektrisch gesehen unabhängig von der tatsächlichen Speicherkapazität des Moduls sein. Die Verwendung kleinerer Kapazitäten wird somit häufigere Schaltvorgänge erfordern, als bei der Verwendung größerer Kapazitäten, da eine Nachladung zu einem früheren Zeitpunkt erfolgen muss. Die Kapazitäten der einzelnen Module können gleich ausgelegt sein, obwohl die Module unterschiedliche Spannungsbeiträge liefern sollen. Sie können jedoch auch auf die ihnen zugewiesene Spannungsstufe abgestimmt sein. Dies alles ist jedoch bei der Steuerung der Betriebsartumschaltungen zu berücksichtigen.

Beispiel 2, Erzeugung einer Gleichspannung mit 3 Modulen:

Der in Figur 15 dargestellte Stromrichter soll zunächst aus drei Modulen bestehen, einem aktiv versorgten Modul 1510 mit 12V (welches über die Klemmen 1540, 1550 aus dem DC-Kreis versorgt wird) und zwei Kondensator-basierten Modulen 1520, 1530, einem Modul für 6V und einem Modul für 3V. Der Stromrichter soll jetzt an seinen Ausgangsklemmen 1560, 1570 eine DC-Spannung von 3 V abgeben, wobei wieder ein Laststrom fließt. Die Startkonfiguration des Stromrichters sei dabei entsprechend wieder so gewählt, dass das 6V-Modul mit 6V und das 3V Modul mit 3V vorgeladen ist.

*Zeitspanne 0 bis $t_1$, 1580:*

Zunächst werden das 12V-Modul und das 6V-Modul auf 0 bzw. Bypass geschaltet. Das 3V-Modul gibt die geforderten 3V ab, wobei sich der Modulkondensator mit der Zeit entlädt, bis eine untere Toleranzschwelle von beispielsweise 2,9V erreicht ist.

*Zeitspanne $t_1$ bis $t_2$, 1582:*

Das 6V-Modul wird nun aktiviert und das 3V-Modul hierzu umgekehrt in Serie geschaltet. Die Startspannung ist hier jetzt 6V - 2,9V = 3,1V. Dieser Vorgang läuft, bis die Gesamtspannung wieder auf 2,9V abgefallen ist. Zu diesem Zeitpunkt ist (bei angenommen gleicher Kapazität der Modulkondensatoren) die Spannung des 3V-Moduls wieder auf 3,0V angestiegen; die Spannung des 6V-Moduls liegt jetzt bei 5,9V. Die durchlaufene Spannungsdifferenz ist doppelt so hoch, wie bei der ersten Zeitspanne; allerdings liegen nun 2 Modul-Kondensatoren (beispielsweise gleicher Kapazität) in Serie, so dass die Zeitspanne gleich lang ist, wie die erste.

Mit anderen Worten wirkt in dieser Phase die Kapazität von zwei Modul-Kondensatoren gegenüber der vorangegangenen Phase in der nur ein Modul-Kondensator gewirkt hat. Dies führt zu einem verdoppelten Spannungsgradienten. Die gesamte Ladephase ist jedoch gleich lang, wie bei der ersten Phase, da der doppelte Spannungshub auszugleichen ist. Diese Betrachtungen setzen die Verwendung gleicher Kondensator-Kapazitäten voraus, was auf Grund der vereinfachten Schaltvorgänge eine bevorzugte Ausführungsform ist. Selbstverständlich könnten die Kapazitäten auf die beispielsweise nach Zweierpotenzen abgestuften Modulspannungen abgestimmt sein.

*Zeitspanne $t_2$ bis $t_3$, 1584:*

Da nun der 3V-Kondensator wieder auf 3V geladen ist, kann wieder ein Zyklus wie in der ersten Spanne verwendet werden. Am Ende dieser Spanne ist der 3V-Modul-Kondensator entsprechend auf 2,9V entladen.

*Zeitspanne $t_3$ bis $t_4$, 1586:*

Jetzt ist sowohl der Kondensator des 3V-Moduls als auch der des 6V-Moduls entladen. Daher werden in dieser Zeitspanne diese beiden Modulkondensatoren antiseriell, d.h. invertiert mit dem 12V-Modul geschaltet. Auf diese Weise ergibt sich eine Startspannung von 12V - 5,9V - 2,9V = 3,2V. Die Spannung sinkt wegen der beiden seriell liegenden Kondensatoren wieder so schnell wie in der zweiten Phase (der ebenfalls in Serie liegende Kondensator des aktiv versorgten Moduls ist auf Grund der Gleichspannungsversorgung elektrisch neutral, siehe Ausführungen zu obigem ersten Beispiel); allerdings ist der Spannungshub etwas größer, da die Spannung nun von 3,2V auf 2,9V sinkt. Dies führt zu einer verlängerten Schaltphase. Dies muss die hier nicht gezeigte Controller-Einrichtung, welche die Ladungszustände der Kondensatoren überwacht, beim Schalten der Schalteinrichtungen der Module berücksichtigen. Am Ende beträgt die Kondensatorspannung des 6V-Moduls gemäß dem Beispiel 6,05V und die des 3V-Moduls 3,05V.

*Zeitspanne $t_4$ bis $t_5$, 1588:*

Nun kann wieder das 3V-Modul alleine aktiviert werden; die Spannung sinkt von 3,05V auf 2,9V.

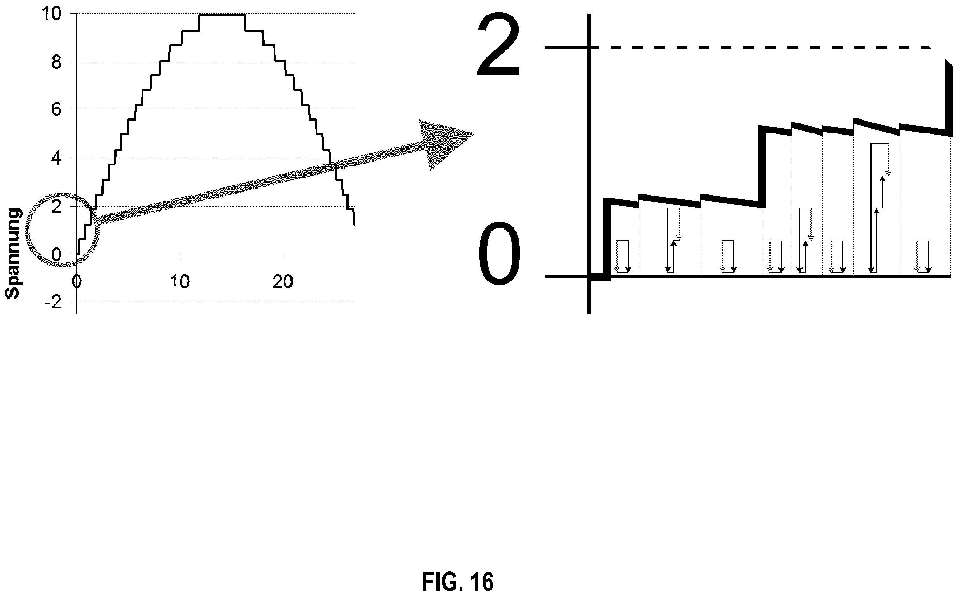

Entsprechend diesen Beispielen können die in Figur 8a dargestellten Stufen als eine kurzzeitig auszugebende Gleichspannung betrachtet werden. Damit kann eine solche Spannungsstufe sozusagen eine Substruktur aufweisen, wenn während der Zeitdauer, in der eine Spannungsstufe gehalten werden soll, mehrere Lade- und Entladezyklen von Modulen erforderlich sind. Dies ist in Figur 16 genauer erläutert.

Weiterhin kann aber auch alternativ zusätzlich zur Vergleichmäßigung des Spannungsverlaufs noch eine Pulsweitenmodulation mit dem Spannungshub einer Spannungsstufe über den Stromrichter angesteuert werden, wie in Figur 8b dargestellt.

Für jede Schaltperiode ist in den Figuren 14 und 15 jeweils oben der Zustandsvektor angegeben, der angibt, welches Modul in dieser Modulkonfiguration jeweils gerade im aktiven Betrieb ("1") , invertiertem Betrieb ("-1") und Standby ("0") sein muss. Letztlich kann das Schaltverhalten über die Aufeinanderfolge dieser Zustandsvektoren ausgedrückt werden und die Controller-Einrichtung muss dieses Schaltverhalten leisten können. Beispielsweise kann ein Sinus am Ausgang durch die Abfolge geeigneter Zustands-bzw. Schaltvektoren beschrieben werden. Wenn zusätzlich, wie in Figur 8b gezeigt, eine Pulsweitenmodulation angewendet wird, so muss die Controllereinrichtung auch diese durch entsprechend getaktetes Ein- und Ausschalten leisten können.

Figur 16 verdeutlicht, dass insbesondere für eine langsam ansteigende Ausgangspannung es erforderlich sein kann, die gleiche Ausgangspannung über mindestens zwei aufeinanderfolgende Schaltperioden zu halten. Die rechte Seite zeigt vergrößert den eingekreisten Kurvenabschnitt der linken Seite. Während dieses Abschnittes wird über die Zeit 8-mal geschaltet und somit die Modulkonfiguration verändert. Für drei Perioden verändert sich die Ausgangspannungs-stufe nicht, anschließend verändert sie sich auf höherem Niveau für 5 Schaltperioden nicht. Während die Ausgangspannung auf diese Weise kurzzeitig im Wesentlichen konstant gehalten wird, verändern sich jedoch trotzdem die Modulkonfigurationen, um dadurch ein Nachladen zu stark entladener Schalteinrichtungen zu ermöglichen, wie dies oben bereits ausführlich erläutert wurde.

Die im Zusammenhang mit der Figur 15 erläuterten Zustandsvektoren, die das Schaltverhalten der Module bestimmten und zu unterschiedlichen Modulkonfigurationen führen, die die gleiche Ausgangspannung liefern können und somit das Nachladen einzelner Module ermöglicht, wird im folgenden im Zusammenhang mit Figur 17 nochmals in systematischerer Weise erläutert.

*Beispiel zur Erzeugung einer Stufenfunktion bei beliebigen Anfangszuständen:*

Figur 17 zeigt beispielhaft für den Fall einer Last die notwendigen Schaltzustände eines versorgten Hauptmoduls (HM) in Kombination mit drei Vierquadranten-Modulen (M2, M3, M4), um schrittweise mit der Stufenhöhe des kleinsten Vierquadranten-Moduls eine positive Ausgangspannung $U_A$ von 0 V bis zur Hauptgrundmodulspannung von 8V und zurück auf 0V abzubilden. Beispielsweise könnte so eine positive Sinushalbwelle erzeugt werden, wie dies symbolisch mit 1790 dargestellt ist. Die Hauptmodulspannung beträgt dabei 8V und die Sollspannungen $U_{Soll}$ der Energiespeicher-lemente der weiteren Vierquadranten-Module (M1-M4) betragen entsprechend 4V, 2V und 1V. Figur 17 stellt Abfolgen 1710 - 1780 der Schaltzustände S, bis $S_{17}$ für alle möglichen Kombinationen der anfänglichen Ladezustände $LZ_{Soll}$ und damit für alle möglichen Kombinationen der möglichen Anfangsbetriebsspannungen $U_{Betrieb}$ der Vierquadranten-Module dar.

Unter dem Begriff Ladezustand ist hierbei wieder gemeint, dass das betreffende Energiespeicherelement des jeweiligen Moduls entweder so geladen ist, dass es bei der nächsten Verwendung entladen werden darf, oder dass die Spannung dieses Energiespeicherelementes leicht unter dem Sollwert liegt und es daher in einem der folgenden Zyklen aufgeladen werden soll. Entsprechend existieren für jedes Modul zwei mögliche Ladezustände: $LZ_{Soll}$=J ("Ja") bedeutet, das Energiespeicherelement darf entladen werden; für $LZ_{Soll}$= N ("Nein") muss das Energiespeicherelement in einem derfolgenden Zyklen aufgeladen werden.

Für den hier dargestellten Fall einer positiven Spannung und einer Last am Ausgang des Stromrichters bedeutet dies, dass ein Vierquadranten-Modul dabei mit positiver Spannung zugeschaltet werden kann, sofern der Ladezustand $LZ_{Soll}$=J ("Ja") dies erlaubt, für $LZ_{Soll}$= N ("Nein") kann das Modul lediglich mit negativer Spannung - also im invertierten Zustand - zugeschaltet werden. Es lässt sich erkennen, dass für jede mögliche Kombination von $U_{Betrieb}$ eine jeweils unterschiedliche Schaltabfolge erfolgt.

Im gezeigten Beispiel ändert sich nach jedem Einsatz eines Moduls der Ladezustand des entsprechenden Energiespeicherelementes, so dass jedes Modul nach einer Aufladung in einem der folgenden Schaltzustände wieder entladen wird und umgekehrt. Dies ist natürlich nicht zwingend der Fall, sondern wird durch die Kapazität des Kondensators und den Laststrom bedingt. Entsprechend kann -je nach Kapazität des Kondensators - auch entweder während einer einzelnen Stufe eine (ein- oder mehrmalige) Änderung der Schaltabfolge erforderlich sein oder es kann auch der Fall auftreten, dass sich der Ladezustand von einer Stufe zur nächsten noch nicht verändert.

Beispielsweise startet die Abfolge 1710 mit Energiespeicherelementen, die alle den Ladezustand "J" aufweisen, während die Abfolge 1780 mit Energiespeicherelementen startet, die alle den Ladezustand "N" aufweisen.

Das aktiv versorgte Modul kann in jedem Fall in Kombination mit einem oder mehreren Vierquadranten-Modulen negative Spannungen von zugeschalteten Vierquadranten-Modulen ausgleichen.

Entsprechend dem gezeigten Beispiel kann daher jede Stufenspannung mit jeder Kombination an Ladezuständen der Energiespeicherelemente dargestellt werden. Dies gilt natürlich auch für beliebige Anzahlen von Modulen.

Figur 17 verdeutlicht somit anhand eines einfachen Beispiels die große erzielbare Flexibilität und dass eine bestimmte Ausgangspannung mit völlig unterschiedlichen Modulkonfigurationen erreicht werden kann. Insbesondere verdeutlicht dieses Beispiel die Aufgabe des Controllers ausgehend von Anfangszuständen zur Erzielung eines ge-wünschten Verlaufs der Ausgangspannung unterschiedliche Modulkonfigurationen im zeitlichen Verlauf aufeinander abfolgen zu lassen.

*Ansteuerung der Einzelmodule*

Jedes Einzelmodul kann beispielsweise von einer eigenen Steuereinheit angesteuert werden, die über einen potentialfreien bidirektionalen Datenkanal mit einer gemeinsamen Controller-Einrichtung verbunden ist, um einerseits die Schaltelemente zu steuern und andererseits die Spannungswerte des Energiespeicherelementes an die Controller-Einrichtung weiterzuleiten. Alternativ können auch weitere Daten, wie Ströme oder Temperaturen der Bauelemente zur Controller-Einrichtung übertragen werden. Insbesondere ist es zweckmäßig, wenn die Steuereinheiten in den Einzelmodulen direkt über die Spannung an den Klemmen der Einzelmodule oder über DC-DC-Wandler von der Controller-Einrichtung elektrisch versorgt werden. Die Datenübertragung zur gemeinsamen Kontrolleinheit kann z.B. optisch oder auch per Funk erfolgen, um eine galvanische Trennung zu gewährleisten. Alternativ kann auch nur mit einer gemeinsamen Controller-Einrichtung, oder nur mit Modul-bezogenen mehreren einzelnen Steuereinheiten gearbeitet werden.

*Ein beispielhafter Steueralgorithmus für den Ablauf zur Erzeugung eines Stufenspannungsverlaufes für eine Phase des Stromrichters lautet wie folgt:*

> Von $k = 1$ bis z:
>
> > Bilde für einen gegebenen Zeitverlauf der Sollspannung $U(t)$ für diskrete Zeitabschnitte $t_k$ (mit $t_{k+1} - t_k = \Delta t$, Länge des Zeitabschnitts) jeweils mögliche gestufte Sollwerte der Ausgangsspannung $U(t_k)$
> >
> > Von $j = 1$ bis m:
> >
> > > Für jeden Sub-Zeitabschnitt $t_j$ innerhalb eines Zeitintervalls $\Delta t$
> > >
> > > Von $i = 1$ bis n
> > >
> > > > Bestimme für jedes der z Module die Zustände ob
> > > >
> > > > $U_{Modul\text{-}i} < U_{soll\text{-}i}$ oder $U_{Modul\text{-}i} > U_{soll\text{-}i}$
> > > >
> > > > (aus Messung oder Berechnung)
> > >
> > > next i
> > >
> > > Bestimme aus gewünschtem Sollwert der Ausgangsspannung $U(t_k)$ und den Lade-Zuständen der Module die momentan erforderliche Schaltkonfiguration $SK_{j,k}$ (aus den entsprechenden Regeln) für alle Module
> >
> > next j
>
> next k

Hierbei sind drei Schleifen ineinander verschachtelt; die äußerste Schleife läuft von $k = 1$ bis z und beschreibt die zeitliche Abfolge der zu erzeugenden Spannungsstufen, die erforderlich sind um einen gewünschten Spannungsverlauf in eine vom Stromrichter darstellbare Stufenfunktion umzuwandeln. Die Längen $\Delta t$ der Zeitabschnitte dürfen entsprechend dem verwendeten Steueralgorithmus von Schritt zu Schritt variieren. Die zweite Schleife läuft von $j = 1$ bis m und bezieht sich auf die Umschaltung von Modulkonfigurationen innerhalb einer Spannungsstufe. Eine solche zeitliche Unterteilung der Stufenfunktion ist insbesondere dann erforderlich, wenn die Modulkondensatoren bereits in dem kurzen Zeitabschnitt einer einzelnen Stufe nachgeladen werden müssen, wie dies beispielsweise in der Figur 16 gezeigt ist. Bei ausreichender Größe der Kondensator-Kapazitäten ist diese zeitliche Unterteilung nicht notwendig, so dass die Tätigkeiten der äußeren Schleife und der mittleren Schleife zusammenfallen können. Die dritte, innerste Schleife läuft von $i = 1$ bis n (wobei n die Anzahl der Module beschreibt) und bestimmt für jeden Modul-Kondensator den momentanen Ladezustand, um zu entscheiden, ob das entsprechende Modul für einen folgenden Zustand so zu schalten ist, dass der Kondensator geladen wird oder entladen wird (wobei sich vor diesem folgenden Zustand noch mehrere Bypass-Zustände dieses Moduls befinden dürfen).

*Details zur Energieflussrichtung:*

Obige Beschreibung geht regelmäßig von der Betrachtung aus, dass Energie über die Klemmen der Serienschaltung von Modulen an eine Last abgegeben wird, beispielsweise beim Betreiben eines Elektromotors. An verschiedenen Stellen wurde jedoch bereits festgestellt, dass sich die vorliegende Erfindung auch dafür eignet, eine Gleichstromquelle mit Energie zu versorgen, so dass der Energiefluss in umgekehrter Richtung stattfindet, nämlich von den Klemmen der Serienschaltung von Modulen in den Gleichstromkreis. Dies ist beispielsweise beim Bremsvorgang eines Elektrofahrzeugs im so genannten Rekuperationsbetrieb der Fall. In diesem Fall dreht sich die Stromrichtung gegenüber dem Lastfall um. Wenn also im Falle einer Last aus Sicht des Stromrichters - bei Abgabe einer positiven Spannung - vorher die Stromrichtung aus dem Stromrichter erfolgte (positive Stromrichtung), wird sie für den Fall der Umkehr der Energieflussrichtung umgekehrt. D.h. bei gleich bleibend positiver Spannung wird die Stromrichtung negativ. Entsprechendes gilt für den Fall, dass die Spannung an den Ausgangsklemmen negativ ist. In diesem Fall ist bei Anliegen einer Last die Stromrichtung negativ, während sie bei Umkehr der Energieflussrichtung positiv wird. Da sich die Kondensatoren der einzelnen Module - sofern sie nicht in den Bypass-Betrieb geschaltet sind - direkt in diesem Strompfad der Ausgangsklemmen befinden, wird auch das entsprechende Lade- und Entladeverhalten der geschalteten Kondensatoren (Energiespeicherelementen) umgekehrt, falls sich die Energieflussrichtung umkehrt. D.h. ein Modul-Kondensator der invertiert geschaltet wurde, wird bei Stromabgabe an eine Last aufgeladen, während er bei Umkehr der Lastflussrichtung entladen wird. Dies ist von der Controller-Einrichtung, die die Schalteinrichtungen schaltet (und entsprechend dafür sorgt, dass die Spannung jedes Modulkondensators im vorgegebenen Spannungsbereich bleibt) zu berücksichtigen. Diese Betrachtungen gelten sinngemäß auch für kapazitive oder induktive Lasten (bzw. Quellen), bei denen Strom und Spannung nicht exakt in Phase liegen. Entsprechend eines solchen Phasenversatzes dreht sich hier entsprechend der Frequenz des Wechselstromes die Energieflussrichtung ständig um. Daher ist für die Controller-Einrichtung des Stromrichters die Kenntnis der Momentanwerte von Strom und Spannung hilfreich, um daraus die entsprechenden Steuersignale für die einzelnen Module zu bestimmen.

Ob ein an den Stromrichter (entweder über die Klemmen des Gleichstromkreises oder über die Ausgangsklemmen) angeschlossenes System als Last oder als Quelle wirkt, kann auch über die entsprechenden Momentanwerte der Spannungen zwischen diesem System und den Momentanwerten der Spannungen des Stromrichters bestimmt werden (wobei hierfür zunächst angenommen wird, dass das System noch nicht mit dem Stromrichter verbunden ist). Wenn also beispielsweise der Momentanwert der Spannung des Systems um einen kleinen Wert über der Spannung des Stromrichters liegt, ist ein Stromfluss vom System in den Stromrichter zu erwarten. Diese - typischerweise sehr kleine - Spannungsdifferenz bestimmt damit Richtung und Größe des zu erwartenden Stromes. Entsprechend kann der Stromrichter (oder alternativ eine ebenfalls steuerbare Quelle) die Strom- bzw. die Lastflussrichtung bestimmen. Beispielsweise kann der Stromrichter durch ein geringfügiges Anheben der Spannung im Gleichstromkreis dafür sorgen, dass Energie in den Gleichstromkreis gespeist wird (, um so beispielsweise eine Batterie im Gleichstromkreis aufzuladen). Als ein weiteres Beispiel kann ein Motor/Generator für Gleichstrom betrachtet werden, der mit einer konstant gehaltenen Spannung vom Stromrichter versorgt wird, um so eine bestimmte Drehzahl zu erzeugen. Üblicherweise ist die im Motor/Generator induzierte Spannung direkt proportional zur Drehzahl. Daher wird bei Drehzahlen, die leicht unter der Soll-Drehzahl liegen, die Maschine als Motor arbeiten und Drehmoment (bzw. mechanische Energie) abgeben. Bei leichtem Überschreiten der Soll-Drehzahl geht die Maschine in den generatorischen Betrieb über; das Drehmoment wechselt sein Vorzeichen und mechanische Energie wird aufgenommen. Sinngemäß gilt diese Betrachtung auch für Drehfeld-Maschinen, die mit Drehstrom betrieben werden. Allerdings muss hierbei zusätzlich zur Spannung auch die Frequenz des Drehstromes der Drehzahl der Maschine angepasst werden.

Da der Stromrichter einen gestuften Spannungsverlauf ausgibt, muss - insbesondere bei Verwendung gröberer Spannungsstufen (d.h. Stromrichter mit wenigen Modulen) - berücksichtigt werden, dass diese Spannungsstufen gemäß den obigen Betrachtungen auch entsprechende Stromänderungen verursachen. Dies gilt natürlich entsprechend für alle Arten von Stromrichtern, wobei insbesondere PWM-basierte Stromrichter sehr starke Spannungsschwankungen erzeugen. Falls die angeschlossene Quelle bzw. Last nicht ein entsprechend flexibles Verhalten auf solche Spannungsschwankungen aufweist (wie dies beispielsweise ein Motor/Generator über die Induktivität seiner Wicklungen), ist der Einsatz zusätzlicher Filterschaltungen hilfreich, welche den Stromverlauf (bzw. auch den Spannungsverlauf) glätten.

*Vorteil bevorzugter Ausführungsformen des erfindungsgemässen Stromrichters gegenüber herkömmlichen modularen Multilevelconvertern:*

Bei einem herkömmlichen MMC-basierten Stromrichter sind zur Erzeugung von insgesamt n Spannungsstufen (einer Polarität) pro Phasenmodul 2n Module notwendig. Es soll beispielsweise ein dreiphasiger Stromrichter, über eine DC-Spannung von +/- 320V gespeist werden (damit könnte er jeweils Ausgangsspannungen von 230V- gegen Masse erzeugen). Die Spannungsstufen sollen eine Höhe von 20V aufweisen, wodurch die Ausgangsspannung in 16 positiven Spannungsstufen (bzw. insgesamt in 33 Stufen, siehe auch Figur 11) dargestellt werden kann.

Bei einem herkömmlichen modularen Multilevelconverter, bestehend aus 2-Quadrantenmodulen müssten sich hierfür in jedem Brückenzweig 32 Module mit einer Spannungsfestigkeit von je 20V befinden: Wenn eine Spannung von 0V gegen Masse ausgegeben wird, sind sowohl im oberen als auch im unteren Brückenzweig jeweils 16 Module aktiv geschaltet (16 x 20V = 320V) und 16 Module auf Bypass geschaltet. Wenn die maximale Spannung von 320V ausgegeben werden soll, sind im oberen Brückenzweig sämtliche 32 Module in den Bypass-Betrieb geschaltet, während im unteren Brückenzweig alle 32 Module aktiv geschaltet (32 x 20V = 640V) sein müssen. Zur Ausgabe der maximalen negativen Spannung von -320V ist es genau umgekehrt; hier müssen alle Module des positiven Brückenzweiges aktiv geschaltet werden und alle Module des negativen Zweiges auf Bypass-Betrieb. Daher werden für einen dreiphasigen Stromrichter mit dieser Stufenzahl insgesamt 2 x 3 x 32 = 192 Module benötigen. Hierfür wären 384 Transistoren, 192 Modul-Kondensatoren und (mindestens) 192 Spannungsebenen (je mindestens eines pro 2-Quadrantenmodul, da sich u.U. benachbarte Module immer eine Spannungsebene teilen können) zur Versorgung der Transistortreiber notwendig.

Ein dreiphasiger Stromrichter entsprechend der vorliegenden Erfindung, der diese Ausgangsspannung liefern soll, benötigt dagegen pro Phase nur 5 Module, davon 3 aktiv versorgte Module (mit beispielsweise je 6 Transistoren) und 4 Kondensatormodule (mit je 4 Transistoren). Für das dreiphasige System werden also 15 Module benötigt. Hierfür wären 66 Transistoren, 12 bis 15 Modul-Kondensatoren (die Versorgungsmodule benötigen nicht zwingend einen Kondensator) und 36 Spannungsebenen (je zwei für jedes 4-Quadrantenmodul) zur Versorgung notwendig.

Die gesamte Spannungsfestigkeit aller Transistoren zusammen ist dabei mit dem zweifachen der DC-Zwischenkreisspannung (pro Phase) bei beiden verglichenen Schaltungstypen gleich. Allerdings kann durch die neue Schaltung der Bauteileaufwand erheblich reduziert werden. Dies reduziert die Kosten des Stromrichters; insbesondere sinkt der Aufwand für das Bereitstellen der potientialfreien Versorgungen der einzelnen Module (z.B. über DC-DC-Wandler). Das obige Beispiel zeigt also einen Fall, bei dem - im Falle der Verwendung des der erfindungsgemäßen Schaltung - auch für die Spannungsfestigkeit des Moduls mit der höchsten Spannung konventionelle Bauteile (u.a. MOSFETs) eingesetzt werden können. Dies könnte ein Stromrichter für Drehstrom sein, der bei 10A-DC pro Strang eine Leistung von knapp 10kW umsetzt

*Zusammenstellung weiterer Vorteile bevorzugter Ausführungsformen:*

- Die Schaltungstopologie der Einzelmodule gewährt durch die Energiespeicherelemente und die Dioden, die parallel zu den Transistorschaltern liegen einen Überspannungsschutz gegenüber den Ein-/Ausgängen (Tiefpasswirkung);

- Ausfallsicherheit durch mögliche Ausnutzung von Redundanzen über die Steuerung (Einbau zusätzlicher Ersatz-Module oder Änderung der Betriebsweise, so dass Module die Funktionalität von anderen ausgefallenen Modulen übernehmen können);

- das System ist auch am Ausgang DC-fähig, es kann also auch eine einstellbare Gleichspannung liefern;

- bei Verwendung geeigneter aktiv versorgter Module können Stromrichter für ein- oder mehrphasige Netze mit beliebiger Phasenzahl aufgebaut werden;

- zwei einzelne Stromrichter können nach Art eines Back-to-Back-Converters über den Gleichstromkreis verbunden werden und so elektrische Energie beliebiger Spannung, Frequenz und Phasenzahl bidirektional von einem zum anderen Stromrichter übertragen.

- an den Ausgangsklemmen können - bei Abstufung der Modulspannungen nach Zweierpotenzen - mit wenigen Modulen eine große Zahl äquidistanter Spannungsstufen ausgegeben werden (bei n Modulen: $2^{(n-1)}$), um so einen feinstufigen Verlauf der Ausgangsspannung zu erzeugen;

- das System ist bidirektional; d.h. über die Ausgangsklemmen kann sowohl Energie abgegeben, als auch zugeführt werden. Insbesondere kann aus einer kleinen eingespeisten Spannung eine deutlich größere Spannung im Gleichspannungskreis erzeugt werden (diese Eigenschaft ist beispielsweise sehr vorteilhaft für den Rekuperationsmodus von Elektrofahrzeugen bei niedrigen Geschwindigkeiten);

- die Kapazität der Kondensatoren (allg. Speichereinrichtungen) wird durch die tolerierten Spannungseinbrüche im Betrieb und durch die Schaltfrequenz des Stromrichters festgelegt; sie ist jedoch nicht abhängig von der Frequenz einer ausgegebenen Wechselspannung. Daher können - bei entsprechend hoch gewählter Schaltfrequenz - die Kapazitäten der Kondensatoren sehr klein sein, wodurch wiederum eine extrem kompakte Bauweise des Stromrichters möglich ist;

- die Kondensatoren werden nur in einer Spannungsrichtung genutzt, daher können in bestimmten Anwendungsfällen auch Elektrolytkondensatoren oder Akkumulatoren eingesetzt werden.

- entsprechend dem fein gestuften Spannungsverlauf ist oft nahezu keine Filterung an den Anschlüssen des Stromrichters nötig. Weiterhin kann sich eine Filterschaltung die Tatsache zu nutze machen, dass der Stromrichter nach dem Prinzip einer PWM-Regelung ständig (und mit hoher Frequenz) zwischen einer leicht zu großen und einer leicht zu kleinen Spannungsstufe (entsprechend dem Spannungshub des Moduls mit der kleinsten Spannung) hin- und herschaltet. Die Pulsweitenmodulation erfolgt daher im Vergleich zu einem konventionellen PWM-Stromrichter nicht mit dem vollen Spannungshub, sondern vorzugsweise nur mit der Amplitude der kleinsten Stufe. Die Filterschaltung muss daherwegen einer möglichen hohen Schaltfrequenz und einer kleinen zu glättenden Spannungsdifferenz - nur wenig Energie speichern und kann daher sehr klein ausgeführt werden.

- durch Hinzufügen eines zusätzlichen (z.B. längsgeregelten) analogen Moduls können kontinuierliche Ausgangsspannungen erzeugt werden. Der Spannungshub eines solchen Analogmoduls muss nur unwesentlich größer sein, als der Spannungswert des Moduls mit der kleinsten Spannung. Solche Spannungen lassen sich auch bei hohen Strömen relativ einfach über Leistungstransistoren längsregeln. Alternativ kann auch nur das Modul mit der kleinsten Spannung als PWM-Modul betrieben werden, um die Schaltverluste gering zu halten. Eine weitere Alternative besteht darin, dass - an Stelle des Analogmoduls - ein dediziertes zusätzliches PWM-Modul hinzugefügt wird. Der zu erreichende Spannungshub dieses Moduls muss dabei auch wieder nur in dem Spannungsbereich des Moduls der kleinsten Spannungsstufe liegen.

- für die Steuerung muss bzgl. der Spannungen der einzelnen Module lediglich überprüft werden, ob diese oberhalb oder unterhalb einer jeweiligen Toleranzschwelle liegt, so dass hier zur Messung der Modulspannung beispielsweise einfache Komparatoren an Stelle von AD-Wandlern eingesetzt werden können;

- alternativ können für die Steuerung auch Algorithmen eingesetzt werden, die aus der gemessenen Spannung und den Strom an den Ausgangsklemmen des Stromrichters auf die Spannungen der einzelnen Energiespeicherelemente der Module rückschließen. Hierfür muss einerseits berücksichtigt werden, welche Module gerade aktiv beteiligt sind und weiterhin über den gemessenen Strom die Änderung der Spannung der Energiespeicherelemente extrapoliert werden. Über eine größere Zahl von geschalteten Stufen können dann ausreichend genau die Spannungen der einzelnen Energiespeicherelemente berechnet werden.

- Falls die Anforderungen an die Genauigkeit der auszugebenden Spannung es zulassen, kann ein entsprechender Stromrichter wahlweise auch so betrieben werden, dass - angefangen mit dem Modul der kleinsten Spannung - eines oder mehrere Module auf reinen Durchlassbetrieb geschaltet werden (d.h. also Bypass). In diesem Fall sind die schaltbaren Spannungsstufen größer (da nur eine geringere Anzahl an Modulen an der Stufenbildung teilnehmen), aber dafür sinkt einerseits die Anzahl der Schaltvorgänge deutlich; weiterhin fallen die Kondensatorverluste der überbrückten Module weg. Eine solche Vorgehensweise kann beispielsweise bei einem Fahrzeugstromrichter von Vorteil sein, wenn dieser gleichzeitig als Ladegerät verwendet wird. In der Funktionalität als Antriebsstromrichter sind möglicherweise gröbere Spannungsstufen zulässig als in der Funktionalität als Ladegerät, da hier strenge Normen der Netzqualität eingehalten werden müssen. Im Extremfall könnte sogar die elektrische Maschine im reinen PWM-Betrieb (u.U. nur von jeweils einem Modul pro Phase) angesteuert werden (wobei sich die restlichen Module u.U. nur im Ladekreis befinden). Weiterhin kann eine solche Vorgehensweise auch vorteilhaft sein, wenn der Stromrichter Wechselspannungen mit sehr unterschiedlicher Amplitude ausgeben soll. Bei großer Amplitude können dann ggf. die kleinsten Stufen weggelassen werden, während sie bei Ausgabe von kleinen Spannungsamplituden aktiviert werden.

- Wenn die Auslegungen der Spannungsfestigkeiten der Module es zulassen, erlaubt das vorgestellte System auch eine dynamische Anpassung der einzelnen Modulspannungen an spezielle Erfordernisse. Auf diese Weise können bei Bedarf auch nicht-äquidistante Spannungsstufungen erreicht werden.

*Ausgewählte Anwendungsgebiete*

Wegen Eigenschaften wie der einfachen Skalierbarkeit bietet sich für dieses System ein äußerst breites Anwendungsgebiet, das von Kleinspannungswandlung, Fahrzeuganwendungen bis zur Hochspannungsebene reicht (Bahnverkehr, DC-Anlagen, Netzkopplungen, Leistungskompensation, Netzkopplung unterschiedlicher Spannungen und Frequenzen etc.).

Insbesondere für Stromrichter kleiner und mittlerer Leistungen für den Niederspannungsbereich mit Spannungen im Gleichspannungskreis bis ca. 800V (für das Modul der höchsten Spannungsstufe) können MOSFETs als schaltende Elemente eingesetzt werden; bei Spannungen bis ca. 2000V kann mit IGBTs gearbeitet werden. Bei einer Spannung im DC-Kreis von UDC = +/-800V und einem DC-Strombedarf von 50A pro Strang kann ein solcher Stromrichter eine Leistung von ca. 3 x 800V x 50A = 120kW bei variabler Frequenz und variabler Ausgangsspannung (im Bereich von 0 bis 566V Strangspannung bzw. 980V verkettete Spannung) steuern. Damit eignen sich solche Stromrichter für Niederspannungs-Anwendungen bei denen Dreh- oder Wechselspannung mit einem verlustarmen lokalen Gleichspannungssystem ausgetauscht werden soll, wie es beispielsweise in künftigen Verteilnetzen vermehrt eingesetzt werden soll. Beispielsweise können so Hausanschlüsse mit typischen Netzdrehspannungen mit einem lokalen Gleichstromnetz verbunden werden.

Der vorgestellte Stromrichter eignet sich weiterhin als Solarstromrichter. Ein solcher muss die Gleichspannung einer Photovoltaik-Anlage in eine mit dem Netz synchronisierte Wechselspannung umwandeln. Gleichzeitig sollte die Gleichspannung direkt an die aktuelle Leistung der Solarzellen angepasst werden (Maximum-Power-Point-Tracking). Diese Funktionalitäten können mit dem vorliegenden System ohne zusätzliche Gleichspannungswandler oder Transformatoren gewährleistet werden.

Ein breites Einsatzfeld ergibt sich auch im Bereich der Elektromobilität. Der Stromrichter ist kompakt, verursacht geringere EMV-Störungen, kann sowohl für den Antrieb der E-Maschine von Elektroautos als auch für das Laden der Batterie mit sehr hoher Leistung eingesetzt werden. Außerdem kann er auch bei niedrigen Drehzahlen bzw. Geschwindigkeiten noch sehr gut rekuperieren, ohne dass ein externer DC/DC-Wandler erforderlich ist. Möglich ist auch eine Kopplung von zwei Funktionalitäten: Im Fahrbetrieb kann die Maschine per PWM angesteuert werden; das Laden erfolgt im Multilevelmodus. Da auch viele Schienen-basierte Fahrzeuge wie z.B. Straßenbahnen mit Gleichstrom von wenigen kV versorgt werden, können auch hier vorteilhaft Stromrichter nach dem vorgestellten System eingesetzt werden, um Drehstrommotoren für den Antrieb zu steuern.

Weiterhin können die vorgestellten Stromrichter auch in Windenergieanlagen eingesetzt werden. Hier erzeugt der mit dem Windrad verbundene Generator eine Drehspannung mit variabler Frequenz. Die elektrische Energie wird dabei entweder in ein lokales Gleichstromnetz eingespeist (beispielsweise bei Offshore Windparks) oder direkt in das lokale mehrphasige Wechselstromnetz. Im ersten Fall kann ein entsprechender Mehrphasiger Stromrichter eingesetzt werden, der die ausgegebene Gleichspannung an das Gleichstromnetz anpasst. Im zweiten Fall kann entweder ein Back-to-Back-Converter eingesetzt werden, welcher die mehrphasige Wechselspannung der Windenergieanlage in eine mehrphasige Wechselspannung geeigneter Spannung und Frequenz umwandelt und in das Wechselstromnetz einspeist. Alternativ kann auch ein einfacher Gleichrichter mit einem als Wechselrichter geschalteten Stromrichter kombiniert werden.

Eine weitere mögliche Anwendung von Stromrichtern nach dem vorgestellten Prinzip sind Audio-Verstärker-Anlagen hoher Leistung: Für gute Klangqualität ist ein 16- oder sogar 20-bit System nicht realistisch, da das Laden und Entladen der einzelnen Module nicht mit hinreichender Genauigkeit zu bewerkstelligen ist. Allerdings könnte mit einem 6- bis 8-bit System in Zusammenarbeit mit einem Analogmodul die geforderte Genauigkeit leicht erreicht werden, in dem der Ausgang über einen entsprechenden Regler rückgeführt wird und damit das Analogmodul gesteuert wird. Die Steuerung der Stromrichtermodule kann dann aus den Signalwerten des Analogmoduls direkt abgeleitet werden, da sie schnell genug vonstatten geht, so dass das Analogmodul nicht über seine Spannungsgrenze hinauskommt. Der Leistungsbedarf des Analogmoduls ist dann entsprechend wesentlich kleiner als der der gesamten Anlage. Außerdem lassen sich bei so niedrigen Spannungen die entsprechenden Leistungstransistoren mit deutlich höheren Strömen beaufschlagen ohne dass sie instabil werden.

**Patentansprüche**

1.  Modularer Stromrichter zur Ausgabe unterschiedlicher Spannungslevels, mit mindestens einem aktiv zu versorgenden Hauptmodul (602) mit Eingangsanschlüssen für das Anlegen einer Eingangsspannung Uo für den Stromrichter,

    n-1 weiteren Modulen (602), wobei n ganzzahlig ist und gilt n > 2,
    alle mindestens n Module (602) seriell miteinander verschaltet sind,
    Ausgangsanschlüssen an den beiden Endpunkten der Serienschaltung, zur Ausgabe einer Ausgangsspannung,
    wobei zumindest jedes der n-1 weiteren Module (602) eine Energiespeichereinrichtung (606), vorzugsweise einen Kondensator zum Speichern von Ladung aufweist sowie jedes Modul (602) Schalteinrichtungen aufweist, vorzugsweise gebildet durch Transistoren, zum wahlweisen und gesteuerten Einstellen zumindest eines aktiven Normalbetriebs, bei dem das jeweilige Modul (602) die Spannung an seiner Energiespeichereinrichtung (606) oder seinem Eingang in den Spannungspfad der Serienschaltung einbringt und eines Bypass-Betriebs, in dem das jeweilige Modul (602) den Spannungspfad der Serienschaltung nur durchschaltet, sowie eines invertierten Betriebs, bei dem das jeweilige Modul (602) die Spannung an seiner Energiespeichereinrichtung (606) oder an seinem Eingang invertiert,
    in den seriellen Spannungspfad einbringt, und wobei die Spannungsbeiträge der Module (602) unterschiedlich sind und gemäß Zweierpotenzen zueinander abgestuft sind, entsprechend Uo, Uo/2, Uo/4, Uo/8 etc., wobei Uo dem Wert der Eingangsspannung entspricht,

einer Controller-Einrichtung (604) zum direkten oder indirekter Erfassen der Ladungszustände der Energiespeichereinrichtungen (606) aller Module (602) und zum Steuern der Schaltzustände der Schalteinrichtungen aller Module (602), um für jedes Modul (602) zu einem bestimmten Zeitpunkt jeweils wahlweise einen bestimmten Betriebszustand einstellen zu können,

wobei die Controller-Einrichtung (604) so ausgelegt ist, dass der Ladungszustand jedes Energiespeicherelements (606) eines jeweiligen Moduls (602) im Betrieb des Stromrichters im Wesentlichen zwischen vorgegebenen Grenzwerten gehalten wird und damit im aktiven Betrieb des jeweiligen Moduls (602) zu einem vorbestimmten Spannungsbeitrag im Spannungspfad führt, und wobei die Controller-Einrichtung (604) weiterhin so ausgelegt ist, alternative Modulkonfiguration zu wählen, wobei diese alternativen Modulkonfigurationen, mit Ausnahme der Modulkonfiguration für die maximale Ausgangsspannung, die minimale Ausgangsspannung und die Ausgansspannung Null, jeweils im Wesentlichen zur gleichen Ausgangsspannung führen, wobei das Umschalten in diese alternative Modulkonfiguration bewirkt, dass Module (602), die zur Erhaltung ihres gewünschten Ladezustandes nachzuladen sind, im Rahmen der alternativen Modulkonfiguration und ohne Veränderung der resultierenden Ausgangsspannungsstufe in den invertierten Betriebszustand geschaltet werden, um dadurch das Nachladen des betreffenden Moduls (602) bei gleichbleibender Ausgangsspannungsstufe zu bewirken,

wobei an den Eingangsanschlüssen eine Gleichspannung Uo anliegt und an den Ausgangsanschlüssen eine Wechselspannung im Bereich [-Uo,+Uo] anliegt.

2. Stromrichter nach Anspruch 1, **dadurch gekennzeichnet, dass** die Energiespeichereinrichtungen (606) durch Kondensatoren gebildet werden und die Ladekonstante der verwendeten Kondensatoren klein gegenüber der Zykluszeit der Ausgangsspannung ist und ein übermäßiges Entladen der Kapazitäten durch mehrmaligen Modulkonfigurationswechsel pro Ausgangsspannungsstufe vermieden wird, indem einzelne Kondensatoren während einer gleichbleibenden Ausgangsspannungsstufe sowohl entladen als auch wieder aufgeladen werden.

3. Stromrichter nach einem der Ansprüche 1 bis 2, wobei die Module (602) gestaffelt miteinander verschaltet sind derart, dass eine Verschaltung in der Reihenfolge der entsprechend den darstellbaren Spannungsstufen erfolgt, und/oder wobei die Module (602) insbesondere hinsichtlich Ihrer Speichereinrichtung (606) auf den ihnen zugewiesenen Spannungsbeitrag hin dimensioniert sind.

4. Stromrichter nach einem der vorhergehenden Ansprüche, wobei die an den Ausgangsanschlüssen anliegende Wechselspannung gesteuert über das Schaltverhalten der Module (602) und die mit ihnen erzielbaren Schaltstufen nahezu beliebige Frequenz annehmen kann, vorzugsweise einschließlich der Möglichkeit eine Gleichspannung am Ausgang darzustellen.

5. Stromrichter nach Anspruch 4 mit einem Hauptmodul (602) und n-1 weiteren Modulen (602), wobei die Anzahl der darstellbaren Stufen im Ausgangssignal 2 n + 1 ist.

6. Stromrichter nach einem der Ansprüche 1 bis 5 wobei eine bestimmte Ausgangsspannung am Ausgang nahezu unabhängig von den tatsächlichen elektrischen Eigenschaften der Speichereinrichtungen (606) der Module (602) beliebig lange gehalten werden kann, indem zwischen für diesen bestimmten Ausgangsspannungsbereich geeigneten Modulkonfigurationen mit einer Schaltfrequenz hin-und hergeschaltet wird, die hoch genug ist, um sicherzustellen, dass jedes Modul (602) früh genug über seinen invertierten Betriebszustand nachgeladen wird, bevor es möglich ist, dass die Ausgangsspannung aufgrund übermäßiger Entladung einzelner Module (602) den gewünschten Bereich verlässt.

7. Stromrichter nach einem der vorhergehenden Ansprüche, wobei das Ändern der Schaltzustände der Module (602) über einen gemeinsamen vorgegebenen Takt erfolgt und der vorgegebene Takt abgestimmt ist auf eine gewünschte Ausgangsfrequenz der Spannung und die Ladecharakteristiken der Energiespeichereinrichtungen (606) der Module (602).

8. Stromrichter nach einem der vorhergehenden Ansprüche, wobei die Erfassung des Ladezustandes jedes Moduls (602) durch die Controller-Einrichtung erfolgt, und diese Erfassung entweder direkt am jeweiligen Modul (602) oder anhand der Ausgangsspannung und dem aktuellen Schaltzustand, vorzugsweise auch dem vorhergehenden Schaltzustand der Module (602) sowie des Laststroms erfolgt.

9. Stromrichter nach einem der vorhergehenden Ansprüche, umfassend mehrere Phasen, gebildet aus jeweils entsprechenden mehreren Modulketten, wobei jede Phase des Stromrichters mit einer Phase einer Last und einer Quelle verbunden ist.

10. Stromrichter nach einem der Ansprüche 1 - 9, **dadurch gekennzeichnet, dass** für jedes Spannungslevel, außerfür das maximale Spannungslevel, das minimale Spannungslevel und für Nullspannung pro Spannungslevel mindestens zweimal, vorzugsweise mehrfach und besonders bevorzugt zwischen 5 und 15-mal, bevorzugt etwa 10-mal, die Modulkonfiguration gewechselt wird.

11. Stromrichter nach Anspruch 10 wobei die verwendeten Kondensatoren eine verhältnismäßig kleine Kapazität haben können, indem die Schaltfrequenz mit der die Modulkonfigurationen gewechselt werden und somit Nachladungen erfolgen, hoch gegenüber der Frequenz der darzustellenden Ausgangsspannungsfrequenz ist, und/oder wobei die Ladezeit der Kondensatoren um Faktor 100, vorzugsweise Faktor 1000 kürzer ist, als die Periodendauer der darzustellenden Ausgangsspannung.

12. Stromrichter zur AC/AC Wandelung, mit zwei Stromrichtern nach einem der Ansprüche 1 - 11, welche über ihre Gleichspannungskreise miteinander verbunden sind.

13. Elektromotor mit einem Stromrichter nach Anspruch 9.

14. Elektrofahrzeug, insbesondere E-Mobil, mit einer Batterieeinrichtung, einem Elektromotor und einem Stromrichter nach einem der Ansprüche 1 - 11.

15. System zur Wandelung eines über eine Stromtrasse gelieferten Wechselstroms in Gleichstrom zur lokalen Versorgung einer Gebäudeansammlung mit Gleichstrom, mittels eines Stromrichters nach einem der Ansprüche 1 - 14.

16. Verfahren zum Betreiben eines Stromrichters,

wobei der Stromrichter mindestens ein aktiv zu versorgendes Hauptmodul (602) mit Eingangsanschlüssen für das Anlegen einer Eingangsspannung Uo den Stromrichter und n-1 weitere Module (602) aufweist, wobei n ganzzahlig ist und gilt n > 2,
wobei es sich bei dem Hauptmodul und den n-1 weiteren Modulen (602) vorzugsweise um Vierquadrantenmodule handelt und jedes der n-1 weiteren Module (602) eine Energiespeichereinrichtung (606), vorzugsweise einen Kondensator zum Speichern von Ladung aufweist und die Module Schalteinrichtungen aufweisen, vorzugsweise gebildet durch Transistoren, zum wahlweise und gesteuertem Einstellen zumindest eines aktiven Normalbetriebs, bei dem das jeweilige Modul (602) die Spannung an seiner Energiespeichereinrichtung (606) oder an seinem Eingang in den Spannungspfad einbringt, eines Bypass- Betriebs, in dem das jeweilige Modul (602) nur durchschaltet, sowie eines invertierten Betriebs, bei dem das jeweilige Modul die Spannung an seiner Energiespeichereinrichtung (606) oder an seinem Eingang invertiert in den Spannungspfad einbringt, und wobei das Verfahren folgende Schritte aufweist:

Verschalten der n Module (602) in Serie,
Anlegen einer Gleichspannung Uo an die Eingangsanschlüsse des Hauptmoduls (602),
Vorgeben eines gewünschten zeitlichen Verlaufs der Ausgangsspannung in Bezug auf die Amplitude über die Zeit,
Abgreifen der Ausgangsspannung an den beiden Endpunkten der Serienschaltung der Module (602),
Aufrechterhalten vorbestimmter Ladungszustände für die einzelnen Module (602), derart, dass jedes Modul (602) in seinem aktiven Betriebszustand, im Wesentlichen einen vorgegebenen Spannungsbeitrag zur Serienschaltung leistet, wobei die Spannungsbeiträge der Module (602) unterschiedlich zueinander sind und entsprechend Zweierpotenzen gegeneinander abgestuft sind,
Ansteuern der Schalteinrichtungen der Module (602), um jedes Modul (602) jeweils in einen Betriebszustand zu schalten, derart, dass die Summe der einzelnen Modulspannungen wie sie durch die Energiespeichereinrichtung (606) jedes Moduls (602) entsprechend seines aktiven,
invertierten oder Bypass-Betriebs bereitgestellt wird, in jedem Zeitpunkt dem vorgegebenen Bereich der Ausgangsspannung entspricht, wobei es für jede momentan über das Schalten der einzelnen Schalteinrichtungen der Module (602) vorgegebene Modulkonfiguration und der dadurch bewirkten Ausgangsspannung, mit Ausnahme der Modulkonfigurationen für die maximale Ausgangsspannung Uo, die minimale Ausgangsspannung -Uo und die Ausgangspannung Null, jeweils mindestens eine alternative Modulkonfiguration gibt, die einstellbar ist und im Wesentlichen zur gleichen Ausgangsspannung führt, wobei das Umschalten in diese alternative Modulkonfiguration bewirkt, dass Module (602), die zur Erhaltung ihres gewünschten Ladezustandes nachzuladen sind, im Rahmen der alternativen Modulkonfiguration und ohne Veränderung der resultierenden Ausgangsspannungsstufe in den invertierten Betriebszustand geschaltet werden, um dadurch das Nachladen des betreffenden Moduls (602) bei gleichbleibender Ausgangsspannungsstufe zu bewirken,

wobei an den Eingangsanschlüssen eine Gleichspannung Uo anliegt und an den Ausgangsanschlüssen eine Wechselspannung im Bereich [-Uo,+Uo] anliegt.

**Claims**

1. Modular power converter for outputting different voltage levels, with

   at least one main module (602) to be actively supplied having input terminals for the application of an input voltage $U_0$ for said power converter,
   n-1 further modules (602), where n is an integer and $n \geq 2$ is true,
   all at least n modules (602) are connected to each other in series,
   output terminals at both end points of the series connection, to output an output voltage,
   where at least each of said n-1 further modules (602) comprises an energy storage device (606), preferably a capacitor for storing charge, and each module (602) comprises switching devices, preferably formed by transistors, for optional and controlled setting of at least one active normal operation, in which said respective module (602) introduces the voltage at its energy storage device (606) or its input into the voltage path of the series connection, and a bypass operation, in which said respective module (602) only connects through the voltage path of the series connection, and an inverted operation, in which said respective module (602) introduces the voltage at its energy storage device (606) or at its input inverted, into the serial voltage path, and where said voltage contributions of said modules (602) differ and are stepped down relative to each other according to the powers of two, accordingly $U_0$, $U_0/2$, $U_0/4$, $U_0/8$ etc., wherein $U_0$ corresponds to the value of the input voltage, in a controller device (604) for directly or indirectly detecting the states of charge of said energy storage devices (606) of all modules (602) and for controlling the switching states of said switching devices of all modules (602) in order to be able to selectively set a specific operating state for each of said modules (602) for a certain point in time, where said controller device (604) is configured such that the state of charge of each energy storage element (606) of a respective module (602) in the operation of said power converter is held substantially between predetermined limit values and in the active operation of said respective module (602) thus leads to a predetermined voltage contribution into the voltage path, and where the controller device (604) is further adapted to select alternative module configurations, said alternative module configurations each resulting in substantially the same output voltage, except for the module configuration for the maximum output voltage, the minimum output voltage and the zero output voltage, wherein switching to this alternative module configuration causes said modules (602), which are to be recharged for maintaining their desired state of charge, to be switched to the inverted operating state as part of said alternative module configuration and without changing the resulting output voltage level, in order to thus effect the recharge of said respective module (602) while maintaining the same output voltage level,
   wherein a direct voltage $U_0$ is applied to the input terminals and an alternating voltage in the range [-$U_0$, +$U_0$] is provided at the output terminals.

2. Power converter according to claim 1, **characterized in that** said energy storage devices (606) are formed by capacitors and the charging constant of said capacitors used is small in comparison to the cycle time of said output voltage and excessive discharge of the capacities is avoided by repeated module configuration changes for every output voltage level, **in that** individual capacitors are discharged as well as recharged during a constant output voltage level.

3. Power converter according to one of the claims 1 to 2, where said modules (602) are connected to each other in a staggered manner such that a connection in the sequence of said respective realizable voltage levels is obtained, and/or where said modules (602) are sized according to their assigned voltage contribution, in particular with regard to their storage device (606).

4. Power converter according to one of the preceding claims, where an alternating voltage provided at the output terminals controlled by the switching behavior of said modules (602) and the switching steps achievable with them, can assume almost any frequency, preferably including the possibility of realizing a direct voltage at said output.

5. Power converter according to claim 4 with a main module (602) and n-1 further modules (602), where the number of representable steps in the output signal is $2^n + 1$.

6. Power converter according to one of the claims 1 to 56, where a certain output voltage at the output can be held for any length of time, almost independent of the actual electrical properties of said storage devices (606) of said modules (602), in that the module configuration suitable for this specific output voltage range is switched back and forth with a switching frequency high enough to ensure that each module (602) is recharged early enough by way of its inverted operating state before it is possible for said output voltage to leave the desired range due to the excessive discharge of individual modules (602).

7. Power converter according to one of the preceding claims, where changing the switching states of said modules (602) takes place by way of a common predetermined clock and the predetermined clock is tuned to a desired output frequency of the voltage and the charging characteristics of said energy storage devices (606) of said modules (602).

8. Power converter according to one of the preceding claims, where the detection of the states of charge of each module (602) is carried out by said controller device, and this detection is effected either directly at said respective module (602) or on the basis of the output voltage and the instantaneous switching state, preferably also the previous switching state of said modules (602), as well as the load current.

9. Power converter according to one of the preceding claims, comprising several phases formed from several corresponding module chains, where each phase of said power converter is connected to a phase of a load and a source.

10. Power converter according to one of the claims 1-9, **characterized in that** the module configuration is changed for each voltage level, other than the maximum voltage level, the minimum voltage level and for zero voltage, at least twice, preferably multiple times and preferably between 5 and 15 times, particularly preferably about 10 times for each voltage level.

11. Power converter according to claim 10, where said capacitors used can have a relatively small capacity in that the switching frequency with which said module configurations are changed and thus recharging is carried out, is high in comparison to the frequency of the output voltage frequency to be realized, and/or where the charging time of said capacitors is shorter by a factor of 100, preferably be a factor of 1000 than the period duration of the output voltage to be realized.

12. Power converter for AC/AC conversion, with two power converters according to one of the claims 1-11, which are connected to each other via their direct voltage circuits.

13. Electric motor with a power converter according to claim 9.

14. Electric vehicle, in particular an electric car, with a battery device, an electric motor and a power converter according to one of the claims 1- 11.

15. System for converting an alternating current supplied via a power line to direct current for the local supply of a building cluster with direct current by way of a power converter according to one of the claims 1-14.

16. Method for operating a power converter,
   where said power converter comprises at least one main module (602) to be actively supplied having input terminals for the application of an input voltage $U_0$ to said power converter and n-1 further modules (602), where n is an integer and $n \geq 2$ is true,

   where said the main module (602) and the n-1 further modules (602) are preferably four-quadrant modules and each of said n-1 further modules (602) comprises an energy storage device (662), preferably a capacitor for storing charge, and the modules (602) comprise switching devices, preferably formed by transistors, for optional and controlled setting of at least one active normal operation, in which said respective module (602) introduces the voltage at its energy storage device (606) or at its input into the voltage path, a bypass operation, in which said respective module (602) only connects through, and an inverted operation, in which said respective module introduces the voltage at its energy storage device (606) or at its input inverted into the voltage path, and where the method comprises the following steps:

connecting said n modules (602) in series,
applying a direct voltage $U_0$ at said input terminals of said main module (602),
predetermining a desired temporal course of the output voltage in relation to the amplitude over time,
tapping the output voltage at the two endpoints of the series connection of said modules (602),
maintaining predetermined states of charge for said individual modules (602) in such a way that each module (602) in its active operating state substantially makes a predetermined voltage contribution to the series connection, where said voltage contributions of said modules (602) differ from each other and are stepped down relative to each other by the powers of two,
actuating said switching devices of said modules (602) to switch each module (602) to an operating state such that the sum of the individual module voltages as they are provided by said energy storage device (606) of each module (602) according to its active, inverted or bypass operation at all times corresponds to the predetermined range of the output voltage, where at least one alternative module configuration exists for each module configuration, that is currently able to be set by switching said individual switching devices of said modules (602) and the resulting output voltage, with the exception of the module configurations for the maximum output voltage, $U_0$, the minimum output voltage, $-U_0$, and the zero output voltage, O, and that can be set and
substantially leads to the same output voltage, where switching to this alternative module configuration causes the modules (602), that are to be recharged for maintaining their desired state of charge, to be switched to the inverted operating state as part of said alternative module configuration and
without changing the resulting output voltage level, in order to thus effect the recharge of said respective module (602) while maintaining the same output voltage level,
where a direct voltage $U_0$ is applied to the input terminals and an alternating voltage in the range $[-U_0, +U_0]$ is provided at the output terminals.

## Revendications

1. Convertisseur de courant modulaire pour la sortie de différents niveaux de tension, comprenant

au moins un module principal (602) à alimenter de manière active et comprenant des bornes d'entrée pour l'application d'une tension d'entrée Uo destinée au convertisseur de courant,
n-1 modules (602) supplémentaires, dans lequel n est un nombre entier et n > 2, tous les au moins n modules (602) étant connectés en série,
des bornes de sortie aux deux extrémités du circuit en série, pour la sortie d'une tension de sortie,
dans lequel au moins chacun des n-1 modules (602) supplémentaires présente un dispositif de stockage d'énergie (606), de manière préférée un condensateur permettant de stocker une charge, et chaque module (602) présente des dispositifs de commutation, de manière préférée formés par des transistors, en vue d'un réglage sélectif et commandé d'au moins un fonctionnement normal actif, lors duquel le module (602) respectif introduit la tension au niveau de son dispositif de stockage d'énergie (606) ou de son entrée dans le chemin de tension du circuit série, et d'un fonctionnement de dérivation, lors duquel le module (602) respectif ne commute que le chemin de tension du circuit série, et d'un fonctionnement inversé, lors duquel le module (602) respectif introduit la tension au niveau de son dispositif de stockage d'énergie (606) ou de son entrée de manière inversée dans le chemin de tension série, et dans lequel les contributions de tension des modules (602) sont différentes et échelonnées les unes par rapport aux autres selon des puissances de deux, de manière correspondante à Uo, Uo/2, Uo/4, Uo/8, etc., dans lequel Uo correspond à la valeur de la tension d'entrée,
un dispositif de contrôleur (604) permettant de détecter directement ou indirectement les états de charge des dispositifs de stockage d'énergie (606) de tous les modules (602) et permettant de commander les états de commutation des dispositifs de commutation de tous les modules (602) afin de pouvoir ajuster de manière respectivement sélectionnable un état de fonctionnement spécifique pour chaque module (602) à un moment donné,
dans lequel le dispositif de contrôleur (604) est conçu de sorte que l'état de charge de chaque élément de stockage d'énergie (606) d'un module (602) respectif est maintenu essentiellement entre des valeurs limites prédéterminées en cours de fonctionnement du convertisseur de courant et conduit ainsi à une contribution de tension prédéterminée dans le trajet de tension en cours de fonctionnement actif du module (602) respectif, et dans lequel le dispositif de contrôleur (604) est également conçu pour choisir une configuration de module alternative, dans lequel lesdites configurations de module alternatives, à l'exception de la configuration de module pour la tension de sortie maximale, la tension de sortie minimale et la tension de sortie nulle, conduisent respectivement essentiellement à la même tension de sortie, dans lequel la commutation dans ladite configuration de module alternative a pour effet que des modules (602) qui doivent être rechargés pour maintenir leur état de charge souhaité sont commutés dans l'état de fonctionnement inversé dans le cadre de la configuration de module alternative et sans modification de la prise de tension de sortie résultante, afin de provoquer ainsi le rechargement du module (602) concerné tout en conservant la prise de tension de sortie,

dans lequel une tension continue Uo est appliquée aux bornes d'entrée et une tension alternative située dans la plage [-Uo,+Uo] est appliquée aux bornes de sortie.

2. Convertisseur de courant selon la revendication 1, **caractérisé en ce que** les dispositifs de stockage d'énergie (606) sont formés par des condensateurs et la constante de charge des condensateurs utilisés est faible par rapport au temps de cycle de la tension de sortie et une décharge excessive des capacités est évitée grâce à des changements de configuration de module multiples pour chaque prise de tension de sortie, en déchargeant et en rechargeant des condensateurs individuels tout en conservant la prise de tension de sortie.

3. Convertisseur de courant selon l'une quelconque des revendications 1 à 2, dans lequel les modules (602) sont commutés les uns aux autres de manière échelonnée, de telle manière qu'une commutation a lieu dans l'ordre des prises de tension tels qu'elles peuvent être présentées, et/ou dans lequel les modules (602), en particulier en ce qui concerne leur dispositif de mémoire (606), sont dimensionnés en fonction de la contribution de tension qui leur est attribuée.

4. Convertisseur de courant selon l'une quelconque des revendications précédentes, dans lequel la tension alternative appliquée aux bornes de sortie peut, de manière commandée par le comportement de commutation des modules (602) et les prises de commutation pouvant être obtenues avec ceux-ci, prendre presque n'importe quelle fréquence, de manière préférée avec la possibilité de présenter une tension continue à la sortie.

5. Convertisseur de courant selon la revendication 4, comprenant un module principal (602) et n-1 modules (602) supplémentaires, dans lequel le nombre de prises affichables dans le signal de sortie est 2 n + 1.

6. Convertisseur de courant selon l'une quelconque des revendications 1 à 5, dans lequel une certaine tension de sortie peut être maintenue en sortie pendant une durée arbitraire de manière presque indépendante des caractéristiques électriques réelles des dispositifs de stockage (606) des modules (602) en commutant entre des configurations de modules appropriées pour ladite certaine plage de tension de sortie à une fréquence de commutation suffisamment élevée pour garantir que chaque module (602) est rechargé suffisamment tôt sur son état de fonctionnement inversé avant qu'il ne soit possible que la tension de sortie quitte la plage souhaitée en raison d'une décharge excessive de modules (602) individuels.

7. Convertisseur de courant selon l'une quelconque des revendications précédentes, dans lequel la modification des états de commutation des modules (602) s'effectue sur une cadence commune prédéfinie et la cadence prédéfinie est adaptée à une fréquence de sortie souhaitée de la tension et aux caractéristiques de charge des dispositifs de stockage d'énergie (606) des modules (602).

8. Convertisseur de courant selon l'une quelconque des revendications précédentes, dans lequel la détection de l'état de charge de chaque module (602) est effectuée par le dispositif de contrôleur, et ladite détection est effectuée directement au niveau du module (602) respectif ou bien en se basant sur la tension de sortie et l'état de commutation actuel, de manière préférée également sur l'état de commutation précédent des modules (602) ainsi que du courant de charge.

9. Convertisseur selon l'une quelconque des revendications précédentes, comprenant plusieurs phases formées de plusieurs chaînes de modules respectivement correspondantes, dans lequel chaque phase du convertisseur de courant est reliée à une phase d'une charge et d'une source.

10. Convertisseur électrique selon l'une quelconque des revendications 1 à 9, **caractérisé en ce que** pour chaque niveau de tension, à l'exception du niveau de tension maximal, du niveau de tension minimal et de la tension nulle, la configuration de module est changée au moins deux fois, de manière préférée plusieurs fois et de manière particulièrement préférée entre 5 et 15 fois, de manière préférée environ 10 fois, par niveau de tension.

**11.** Convertisseur de courant selon la revendication 10, dans lequel les condensateurs utilisés peuvent avoir une capacité relativement faible en ce que la fréquence de commutation à laquelle les configurations de module sont changées et donc à laquelle des recharges sont effectuées est élevée par rapport à la fréquence de la fréquence de tension de sortie à présenter, et/ou dans lequel le temps de charge des condensateurs est inférieur d'un facteur 100, de manière préférée d'un facteur 1000, à la durée de période de la tension de sortie à présenter.

**12.** Convertisseur de courant pour la conversion AC/AC, avec deux convertisseurs de courant selon l'une quelconque des revendications 1 à 11, qui sont connectés l'un à l'autre par l'intermédiaire de leurs circuits de tension continue.

**13.** Moteur électrique avec un convertisseur selon la revendication 9.

**14.** Véhicule électrique, en particulier dispositif mobile électrique, avec un dispositif formant batterie, un moteur électrique et un convertisseur de courant selon l'une quelconque des revendications 1 à 11.

**15.** Système permettant de convertir un courant alternatif, fourni par une tranche électrique, en courant continu permettant l'alimentation locale d'un ensemble de bâtiments en courant continu, au moyen d'un convertisseur de courant selon l'une quelconque des revendications 1 à 14.

**16.** Procédé de fonctionnement d'un convertisseur de courant,

dans lequel le convertisseur de courant présente au moins un module principal (602) à alimenter de manière active et comprenant des bornes d'entrée pour l'application d'une tension d'entrée Uo au convertisseur de courant et n-1 modules (602) supplémentaires, dans lequel n est un nombre entier et n > 2,
dans lequel le module principal et les n-1 modules (602) supplémentaires sont de manière préférée des modules à quatre quadrants et chacun des n-1 modules (602) supplémentaires comprend un dispositif de stockage d'énergie (606), de manière préférée un condensateur permettant de stocker une charge et les modules présentent des dispositifs de commutation, de manière préférée formés par des transistors, afin de régler de manière sélective et commandée au moins un fonctionnement normal actif, lors duquel le module (602) respectif introduit la tension au niveau de son dispositif de stockage d'énergie (606) ou de son entrée dans le chemin de tension, un fonctionnement de dérivation lors duquel le module (602) respectif ne fait que commuter, ainsi qu'un fonctionnement inversé, lors duquel le module respectif introduit la tension au niveau de son dispositif de stockage d'énergie (606) ou de son entrée de manière inversée dans le chemin de tension, et dans lequel le procédé comprend les étapes ci-dessous consistant à :

raccorder les n modules (602) en série,
appliquer une tension continue Uo aux bornes d'entrée du module principal (602),
spécifier une évolution temporelle souhaitée de la tension de sortie par rapport à l'amplitude dans le temps,
prendre la tension de sortie aux deux points d'extrémité du montage en série des modules (602),
maintenir des états de charge prédéterminés pour les modules (602) individuels, de sorte que chaque module (602), dans son état de fonctionnement actif, apporte essentiellement une contribution de tension prédéterminée au montage en série, dans lequel les contributions de tension des modules (602) sont différentes les unes des autres et sont échelonnées les unes par rapport aux autres selon des puissances de deux,
commander les dispositifs de commutation des modules (602) afin de commuter chaque module (602) respectivement dans un état de fonctionnement de telle manière que la somme des tensions de module individuelles telles qu'elles sont fournies par le dispositif de stockage d'énergie (606) de chaque module (602) en fonction de son fonctionnement actif, inversé ou de dérivation, corresponde à chaque instant à la plage de tension de sortie prédéterminée, dans lequel, pour chaque configuration de module prédéterminée audit instant par la commutation des dispositifs de commutation individuels des modules (602) et pour la tension de sortie qui en résulte, à l'exception des configurations de module destinées à la tension de sortie maximale Uo, la tension de sortie minimale -Uo et la tension de sortie nulle, il existe au moins une configuration de module alternative qui est réglable et qui conduit essentiellement à la même tension de sortie, dans lequel la commutation dans ladite configuration de module alternative a pour effet que des modules (602) qui doivent être rechargés pour maintenir leur état de charge souhaité sont commutés dans l'état de fonctionnement inversé dans le cadre de la configuration de module alternative et sans modification de la prise de tension de sortie résultante,
afin de provoquer le rechargement du module (602) concerné tout en conservant la prise de tension de sortie, dans lequel une tension continue Uo est appliquée aux bornes d'entrée et une tension alternative située dans la plage [-Uo,+Uo] est appliquée aux bornes de sortie.

FIG. 1

FIG. 2

FIG. 3c

FIG. 3b

FIG. 3a

## FIG. 4

FIG. 5

Gleichspannungskreis

AC-Kreis

602

$U_0$

$+U_0$ , 0, $-U_0$

i=1

Controller

Messung: U, I

Ausgabe: Schaltsignale

604

602

606

$+\dfrac{U_0}{2}$, 0, $-\dfrac{U_0}{2}$

i=2

602

$+\dfrac{U_0}{2^{n-1}}$, 0, $-\dfrac{U_0}{2^{n-1}}$

i=n

FIG. 6a

EP 3 610 569 B1

40

DC-Seite       AC/DC-Seite

680

681

610

$U_0$

$\pm U_0$

$\pm \frac{U_0}{2}$

$\pm \frac{U_0}{4}$

$\pm \frac{U_0}{8}$

640

690

652

650

662

660

672

670

691

**FIG. 6b**

DC-Seite       AC/DC-Seite

620

$U_0$

Controller

Messung: U, I

Ausgabe: Schaltsignale

622

**FIG. 6c**

DC-Seite       AC/DC-Seite

630

$U_0$

**FIG. 6d**

FIG. 7

FIG. 8a

FIG. 8b

**FIG. 9**

**FIG. 10**

FIG. 11

**FIG. 12**

FIG. 13

**FIG. 14**

FIG. 15

FIG. 16

**1710**

| | | M2 | M3 | M4 |
|---|---|---|---|---|
| $U_{Soll}$ | | 4 | 2 | 1 |
| $LZ_{Soll}$ | | J | J | J |
| $U_{Betrieb}$ | | 4 | 2 | 1 |

| | HM | | | | $U_A$ |
|---|---|---|---|---|---|
| $S_1$ | 0 | 0 | 0 | 0 | 0 |
| $S_2$ | 0 | 0 | 0 | 1 | 1 |
| $S_3$ | 0 | 0 | 2 | 0 | 2 |
| $S_4$ | 0 | 4 | 0 | -1 | 3 |
| $S_5$ | 8 | -4 | 0 | 0 | 4 |
| $S_6$ | 0 | 4 | 0 | 1 | 5 |
| $S_7$ | 8 | 0 | -2 | 0 | 6 |
| $S_8$ | 8 | 0 | 0 | -1 | 7 |
| $S_9$ | 8 | 0 | 0 | 0 | 8 |
| $S_{10}$ | 8 | -4 | 2 | 1 | 7 |
| $S_{11}$ | 8 | 0 | -2 | 0 | 6 |
| $S_{12}$ | 0 | 4 | 2 | -1 | 5 |
| $S_{13}$ | 8 | -4 | 0 | 0 | 4 |
| $S_{14}$ | 0 | 4 | -2 | 1 | 3 |
| $S_{15}$ | 0 | 0 | 2 | 0 | 2 |
| $S_{16}$ | 8 | -4 | -2 | -1 | 1 |
| $S_{17}$ | 0 | 0 | 0 | 0 | 0 |

**1720**

| | | M2 | M3 | M4 |
|---|---|---|---|---|
| $U_{Soll}$ | | 4 | 2 | 1 |
| $LZ_{Soll}$ | | J | N | J |
| $U_{Betrieb}$ | | 4 | -2 | 1 |

| | HM | | | | $U_A$ |
|---|---|---|---|---|---|
| $S_1$ | 0 | 0 | 0 | 0 | 0 |
| $S_2$ | 0 | 0 | 0 | 1 | 1 |
| $S_3$ | 0 | 4 | -2 | 0 | 2 |
| $S_4$ | 8 | -4 | 0 | -1 | 3 |
| $S_5$ | 0 | 4 | 0 | 0 | 4 |
| $S_6$ | 8 | -4 | 0 | 1 | 5 |
| $S_7$ | 0 | 4 | 2 | 0 | 6 |
| $S_8$ | 8 | 0 | 0 | -1 | 7 |
| $S_9$ | 8 | 0 | 0 | 0 | 8 |
| $S_{10}$ | 8 | 0 | -2 | 1 | 7 |
| $S_{11}$ | 8 | -4 | 2 | 0 | 6 |
| $S_{12}$ | 8 | 0 | -2 | -1 | 5 |
| $S_{13}$ | 0 | 4 | 0 | 0 | 4 |
| $S_{14}$ | 0 | 0 | 2 | 1 | 3 |
| $S_{15}$ | 8 | -4 | -2 | 0 | 2 |
| $S_{16}$ | 0 | 0 | 2 | -1 | 1 |
| $S_{17}$ | 0 | 0 | 0 | 0 | 0 |

**1730**

| | | M2 | M3 | M4 |
|---|---|---|---|---|
| $U_{Soll}$ | | 4 | 2 | 1 |
| $LZ_{Soll}$ | | N | J | J |
| $U_{Betrieb}$ | | -4 | 2 | 1 |

| | HM | | | | $U_A$ |
|---|---|---|---|---|---|
| $S_1$ | 0 | 0 | 0 | 0 | 0 |
| $S_2$ | 0 | 0 | 0 | 1 | 1 |
| $S_3$ | 0 | 0 | 2 | 0 | 2 |
| $S_4$ | 8 | -4 | 0 | -1 | 3 |
| $S_5$ | 0 | 4 | 0 | 0 | 4 |
| $S_6$ | 8 | -4 | 0 | 1 | 5 |
| $S_7$ | 8 | 0 | -2 | 0 | 6 |
| $S_8$ | 8 | 0 | 0 | -1 | 7 |
| $S_9$ | 8 | 0 | 0 | 0 | 8 |
| $S_{10}$ | 0 | 4 | 2 | 1 | 7 |
| $S_{11}$ | 8 | 0 | -2 | 0 | 6 |
| $S_{12}$ | 8 | -4 | 2 | -1 | 5 |
| $S_{13}$ | 0 | 4 | 0 | 0 | 4 |
| $S_{14}$ | 8 | -4 | -2 | 1 | 3 |
| $S_{15}$ | 0 | 0 | 2 | 0 | 2 |
| $S_{16}$ | 0 | 4 | -2 | -1 | 1 |
| $S_{17}$ | 0 | 0 | 0 | 0 | 0 |

**1740**

| | | M2 | M3 | M4 |
|---|---|---|---|---|
| $U_{Soll}$ | | 4 | 2 | 1 |
| $LZ_{Soll}$ | | N | N | J |
| $U_{Betrieb}$ | | -4 | -2 | 1 |

| | HM | | | | $U_A$ |
|---|---|---|---|---|---|
| $S_1$ | 0 | 0 | 0 | 0 | 0 |
| $S_2$ | 0 | 0 | 0 | 1 | 1 |
| $S_3$ | 8 | -4 | -2 | 0 | 2 |
| $S_4$ | 0 | 4 | 0 | -1 | 3 |
| $S_5$ | 8 | -4 | 0 | 0 | 4 |
| $S_6$ | 0 | 4 | 0 | 1 | 5 |
| $S_7$ | 8 | -4 | 2 | 0 | 6 |
| $S_8$ | 8 | 0 | 0 | -1 | 7 |
| $S_9$ | 8 | 0 | 0 | 0 | 8 |
| $S_{10}$ | 8 | 0 | -2 | 1 | 7 |
| $S_{11}$ | 0 | 4 | 2 | 0 | 6 |
| $S_{12}$ | 8 | 0 | -2 | -1 | 5 |
| $S_{13}$ | 8 | -4 | 0 | 0 | 4 |
| $S_{14}$ | 0 | 0 | 2 | 1 | 3 |
| $S_{15}$ | 0 | 4 | -2 | 0 | 2 |
| $S_{16}$ | 0 | 0 | 2 | -1 | 1 |
| $S_{17}$ | 0 | 0 | 0 | 0 | 0 |

**FIG. 17**

EP 3 610 569 B1

**1750**

| | M2 | M3 | M4 |
|---|---|---|---|
| $U_{Soll}$ | 4 | 2 | 1 |
| $LZ_{Soll}$ | J | J | N |
| $U_{Betrieb}$ | 4 | 2 | -1 |

| | HM | | | | $U_A$ |
|---|---|---|---|---|---|
| $S_1$ | 0 | 0 | 0 | 0 | 0 |
| $S_2$ | 0 | 0 | 2 | -1 | 1 |
| $S_3$ | 0 | 4 | -2 | 0 | 2 |
| $S_4$ | 0 | 0 | 2 | 1 | 3 |
| $S_5$ | 8 | -4 | 0 | 0 | 4 |
| $S_6$ | 8 | 0 | -2 | -1 | 5 |
| $S_7$ | 0 | 4 | 2 | 0 | 6 |
| $S_8$ | 8 | 0 | -2 | 1 | 7 |
| $S_9$ | 8 | 0 | 0 | 0 | 8 |
| $S_{10}$ | 8 | 0 | 0 | -1 | 7 |
| $S_{11}$ | 8 | -4 | 2 | 0 | 6 |
| $S_{12}$ | 0 | 4 | 0 | 1 | 5 |
| $S_{13}$ | 8 | -4 | 0 | 0 | 4 |
| $S_{14}$ | 0 | 4 | 0 | -1 | 3 |
| $S_{15}$ | 8 | -4 | -2 | 0 | 2 |
| $S_{16}$ | 0 | 0 | 0 | 1 | 1 |
| $S_{17}$ | 0 | 0 | 0 | 0 | 0 |

**1760**

| | M2 | M3 | M4 |
|---|---|---|---|
| $U_{Soll}$ | 4 | 2 | 1 |
| $LZ_{Soll}$ | J | N | N |
| $U_{Betrieb}$ | 4 | -2 | -1 |

| | HM | | | | $U_A$ |
|---|---|---|---|---|---|
| $S_1$ | 0 | 0 | 0 | 0 | 0 |
| $S_2$ | 0 | 4 | -2 | -1 | 1 |
| $S_3$ | 0 | 0 | 2 | 0 | 2 |
| $S_4$ | 8 | -4 | -2 | 1 | 3 |
| $S_5$ | 0 | 4 | 0 | 0 | 4 |
| $S_6$ | 8 | -4 | 2 | -1 | 5 |
| $S_7$ | 8 | 0 | -2 | 0 | 6 |
| $S_8$ | 0 | 4 | 2 | 1 | 7 |
| $S_9$ | 8 | 0 | 0 | 0 | 8 |
| $S_{10}$ | 8 | 0 | 0 | -1 | 7 |
| $S_{11}$ | 8 | 0 | -2 | 0 | 6 |
| $S_{12}$ | 8 | -4 | 0 | 1 | 5 |
| $S_{13}$ | 0 | 4 | 0 | 0 | 4 |
| $S_{14}$ | 8 | -4 | 0 | -1 | 3 |
| $S_{15}$ | 0 | 0 | 2 | 0 | 2 |
| $S_{16}$ | 0 | 0 | 0 | 1 | 1 |
| $S_{17}$ | 0 | 0 | 0 | 0 | 0 |

**1770**

| | M2 | M3 | M4 |
|---|---|---|---|
| $U_{Soll}$ | 4 | 2 | 1 |
| $LZ_{Soll}$ | N | J | N |
| $U_{Betrieb}$ | -4 | 2 | -1 |

| | HM | | | | $U_A$ |
|---|---|---|---|---|---|
| $S_1$ | 0 | 0 | 0 | 0 | 0 |
| $S_2$ | 0 | 0 | 2 | -1 | 1 |
| $S_3$ | 8 | -4 | -2 | 0 | 2 |
| $S_4$ | 0 | 0 | 2 | 1 | 3 |
| $S_5$ | 0 | 4 | 0 | 0 | 4 |
| $S_6$ | 8 | 0 | -2 | -1 | 5 |
| $S_7$ | 8 | -4 | 2 | 0 | 6 |
| $S_8$ | 8 | 0 | -2 | 1 | 7 |
| $S_9$ | 8 | 0 | 0 | 0 | 8 |
| $S_{10}$ | 8 | 0 | 0 | -1 | 7 |
| $S_{11}$ | 0 | 4 | 2 | 0 | 6 |
| $S_{12}$ | 8 | -4 | 0 | 1 | 5 |
| $S_{13}$ | 0 | 4 | 0 | 0 | 4 |
| $S_{14}$ | 8 | -4 | 0 | -1 | 3 |
| $S_{15}$ | 0 | 4 | -2 | 0 | 2 |
| $S_{16}$ | 0 | 0 | 0 | 1 | 1 |
| $S_{17}$ | 0 | 0 | 0 | 0 | 0 |

**1780**

| | M2 | M3 | M4 |
|---|---|---|---|
| $U_{Soll}$ | 4 | 2 | 1 |
| $LZ_{Soll}$ | N | N | N |
| $U_{Betrieb}$ | -4 | -2 | -1 |

| | HM | | | | $U_A$ |
|---|---|---|---|---|---|
| $S_1$ | 0 | 0 | 0 | 0 | 0 |
| $S_2$ | 8 | -4 | -2 | -1 | 1 |
| $S_3$ | 0 | 0 | 2 | 0 | 2 |
| $S_4$ | 0 | 4 | -2 | 1 | 3 |
| $S_5$ | 8 | -4 | 0 | 0 | 4 |
| $S_6$ | 0 | 4 | 2 | -1 | 5 |
| $S_7$ | 8 | 0 | -2 | 0 | 6 |
| $S_8$ | 8 | -4 | 2 | 1 | 7 |
| $S_9$ | 8 | 0 | 0 | 0 | 8 |
| $S_{10}$ | 8 | 0 | 0 | -1 | 7 |
| $S_{11}$ | 8 | 0 | -2 | 0 | 6 |
| $S_{12}$ | 0 | 4 | 0 | 1 | 5 |
| $S_{13}$ | 8 | -4 | 0 | 0 | 4 |
| $S_{14}$ | 0 | 4 | 0 | -1 | 3 |
| $S_{15}$ | 0 | 0 | 2 | 0 | 2 |
| $S_{16}$ | 0 | 0 | 0 | 1 | 1 |
| $S_{17}$ | 0 | 0 | 0 | 0 | 0 |

**1790**

FIG. 17 (Cont.)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10217889 A1
- WO 2007028350 A1
- US 6005788 A
- WO 02063758 A1

**In der Beschreibung aufgeführte Nicht-Patentliteratur**

- **RODRIGUEZ J et al.** *Multilevel Voltage-Source-Converter Topologies for Industrial Medium-Voltage Drives*
- **DU Z et al.** *A Cascade Multilevel Inverter Using a Single DC Power Source*